# EUROPÄISCHE PATENTANMELDUNG

(11) **EP 4 528 556 A1**
(43) Veröffentlichungstag der Anmeldung: **26.03.2025**
(21) Anmeldenummer: 24201365.4
(22) Anmeldetag: 19.09.2024
(51) Int. Cl.: G06F 21/10, G06F 21/12, H04L 9/32, H04L 9/08, H04L 9/06, H10F 39/00, H10F 71/00, H10F 30/225, G06F 7/58

(54) **EINRICHTUNG UND EIN VERFAHREN ZUR ÜBERTRAGUNG VON ZUGRIFFSRECHTEN ZUR AUSFÜHRUNG EINES LIZENZIERTEN SOFTWAREPROGRAMMS**

(30) Priorität: 20.09.2023 DE 102023125543; 26.09.2023 LU 505175; 26.09.2023 DE 102023126115; 26.09.2023 DE 102023126167; 26.09.2023 EP 23199793
(71) Anmelder: Elmos Semiconductor SE, 44227 Dortmund (DE)
(72) Erfinder: ROTTER, Thomas, 91077 Neunkirchen am Brand (DE); KÖLBEL, Julia, 44137 Dortmund (DE)
(74) Vertreter: Gulde & Partner

(57) **Zusammenfassung**

Die vorliegende Erfindung bezieht sich auf die Lizenzierung von Software. Insbesondere bezieht sich die vorliegende Erfindung auf eine Vorrichtung und ein Verfahren zur Übertragung von Zugriffsrechten für die Ausführung eines lizenzierten Softwareprogramms von einem autorisierten Knoten mit einem ersten Hardware-Agenten auf einen nicht autorisierten Knoten mit einem zweiten Hardware-Agenten, ohne dass eine spezifische Benutzerlizenz verletzt wird.

Gegenstand der vorliegenden Erfindung ist eine integrierte Schaltungskomponente zur Durchsetzung von Lizenzierungsbeschränkungen. Eine solche Durchsetzung wird durch die Fernübertragung von Zugriffsrechten zum Ausführen eines lizenzierten Programms von der integrierten Schaltungskomponente an eine andere ähnliche integrierte Schaltungskomponente durchgeführt. Die integrierten Schaltungskomponente umfasst einen nicht flüchtigen Speicher zum Speichern eines eindeutig bezeichneten Schlüsselpaars, eines Authentifizierungsvorrichtungszertifikats und eines öffentlichen Schlüssels des Herstellers zusammen mit kryptografischen Algorithmen, einen Prozessor zum Ausführen von kryptografischen Algorithmen, um in die integrierte Schaltungskomponente eingegebene Informationen zu verarbeiten, und zum Übertragen der verarbeiteten Informationen in einen flüchtigen Speicher und einen Quantenzufallsgenerator zum Erzeugen des eindeutig bezeichneten Schlüsselpaars intern innerhalb integrierten Schaltungskomponente.

## Beschreibung

### Gegenstand der Erfindung

Die vorliegende Erfindung bezieht sich auf die Lizenzierung von Software. Insbesondere bezieht sich die vorliegende Erfindung auf eine Vorrichtung und ein Verfahren zur Übertragung von Zugriffsrechten für die Ausführung eines lizenzierten Softwareprogramms von einem autorisierten Knoten mit einem ersten Hardware-Agenten auf einen nicht autorisierten Knoten mit einem zweiten Hardware-Agenten, ohne dass eine spezifische Benutzerlizenz verletzt wird.

### Technologischer Hintergrund

Zu Beginn der Entwicklung von Computersystemen setzten die innovativen Unternehmen dieser Zeit in der Regel einen raumgroßen, zentralisierten Großrechner ein, an den mehrere "einfache" Zugriffsterminals angeschlossen waren. Mit dem Aufkommen kleinerer, schnellerer und leistungsfähigerer Computer haben viele dieser Unternehmen ihre zentralen Großrechner abgeschafft und stattdessen eine Reihe von Einzelrechnern oder ein verteiltes Netz (z. B. ein lokales Netz) mit einer Reihe von Arbeitsplatzcomputern (engl. "Personal Computer, PC") eingesetzt, wobei jeder Benutzer die Kontrolle über seinen eigenen Arbeitsplatzcomputer hat.

In Anbetracht dieses dezentralisierenden Trends lizenzieren viele Softwareentwickler ihre Softwareprogramme nach einem bestimmten Lizenzierungsschema, das gemeinhin als "benutzerspezifische" Lizenz bezeichnet wird. Eine benutzerspezifische Lizenz erlaubt im Allgemeinen einer vorher festgelegten Anzahl von Personen, ein bestimmtes Softwareprogramm auf eine bestimmte Art und Weise zu einem bestimmten Zeitpunkt zu nutzen. Die Lizenz ist also mit der ausgewählten Anzahl von Personen und nicht mit bestimmten Knotenpunkten verbunden. Im Rahmen dieser Anmeldung wird ein "Knoten" als ein Hardwareprodukt mit "Intelligenz" definiert, wie z. B. ein Arbeitsplatzcomputer, ein Drucker, ein Faxgerät und dergleichen, vorzugsweise einschließlich der vorliegenden Erfindung. Ein Hauptproblem im Zusammenhang mit benutzerspezifischen Softwarelizenzen besteht darin, dass sie indirekt die nicht autorisierte Nutzung und/oder das Kopieren der lizenzierten Software fördern, was die potenziellen Lizenzeinnahmen der Softwareentwickler verringert.

Seit vielen Jahren suchen Softwareentwickler nach einer Möglichkeit, ihre Software davor zu schützen, dass sie über die Bedingungen der benutzerspezifischen Lizenz hinaus verwendet und kopiert wird, während die Lizenznehmer in Unternehmen versuchen, die potenzielle Haftung für die illegale Nutzung oder das Kopieren lizenzierter Software durch ihre Angestellten erheblich zu verringern. Daher haben sowohl die Softwareentwickler als auch die Unternehmenslizenznehmer ein Interesse daran, die Verbreitung von Software über die Bedingungen der benutzerspezifischen Lizenz hinaus zu verhindern.

Derzeit wird die Einhaltung einer benutzerspezifischen Softwarelizenz manchmal durch die Verwendung eines physischen Hardwaregeräts, eines so genannten "Dongles", erreicht. Ein Dongle ist ein physisches Hardware-Gerät, das beim Ersterwerb zusammen mit dem lizenzierten Softwareprogramm geliefert wird. Es wird in der Regel an einen Hardwareanschluss eines Knotens, z. B. einen USB-Port eines Arbeitsplatzcomputers, angeschlossen. Zu verschiedenen Zeitpunkten während der Ausführung sendet das lizenzierte Softwareprogramm eine Autorisierungsnachricht (eine so genannte "Challenge") an ein aktive Vorrichtung im Dongle. Die aktive Vorrichtung im Dongle verarbeitet die Abfrage unter Verwendung geheimer Informationen (im Folgenden als "gültiges Lizenz-Token" bezeichnet), die intern im Dongle gespeichert sind, und erzeugt eine Rückmeldung (als "Response" bezeichnet). Das Softwareprogramm vergleicht den Response mit einem erwarteten Response und erlaubt die weitere Ausführung nur, wenn diese identisch sind.

So kann der Benutzer zwar das lizenzierte Softwareprogramm kopieren und auf mehrere Arbeitsplatzcomputer laden, aber nur ein erster Arbeitsplatzcomputer, an den der Dongle angeschlossen ist, kann dieses Softwareprogramm ausführen. Um das lizenzierte Softwareprogramm auf einem anderen PC auszuführen, muss der Dongle physisch vom ersten PC entfernt und mit dem anderen PC verbunden werden. Dadurch wird die Software auf dem ersten Arbeitsplatzcomputer deaktiviert. Es liegt auf der Hand, dass Mehrfachinstallationen des lizenzierten Softwareprogramms für den Softwareentwickler keine nachteiligen finanziellen Auswirkungen haben, da die Anzahl der dem Geschäftslizenznehmer zur Verfügung gestellten Dongles in der Regel auf die in der benutzerspezifischen Softwarelizenz vereinbarte Personenanzahl beschränkt ist.

Obwohl die Dongles die Einhaltung der benutzerspezifischen Lizenz gewährleisten, haben sie eine Reihe von Nachteilen. Ein Nachteil ist, dass der Dongle physisch an den Kunden geliefert werden muss. Während also zunehmend Systeme für die elektronische Auslieferung von Software (als "Content Distribution" bezeichnet) empfohlen und umgesetzt werden, um insbesondere den Komfort zu erhöhen und die Vertriebskosten zu senken, erfordert der Dongle als physisches Gerät immer noch die traditionelle Vertriebsmethode mit den damit verbundenen Kosten. Da ein Dongle erforderlich ist, um die finanziellen Interessen des Softwareentwicklers zu schützen, müsste der Kunde die lästige Aufgabe auf sich nehmen, (i) den Dongle direkt an einem bestimmten Ort zu erwerben und ihn anschließend an den Knotenpunkt anzuschließen, bevor er das lizenzierte Softwareprogramm nutzen kann, oder (ii) das lizenzierte Softwareprogramm vor der beabsichtigten Nutzung zu bestellen, damit der Softwarevertreiber Zeit hat, den Dongle an den Kunden zu schicken. In jedem Fall behindert der Dongle die Effizienz und Attraktivität des Vertriebs von Softwareprodukten.

Ein weiterer Nachteil ist, dass das Entfernen und Anbringen des Dongles teilweise ein zeitaufwändiger Prozess ist. In einem zeitkritischen Unternehmen beeinträchtigt der Austausch des Dongles die Gesamtleistung des Unternehmens. Ein weiterer Nachteil ist, dass durch das ständige Entfernen und Aufstecken des Dongles die Wahrscheinlichkeit steigt, dass der Dongle beschädigt wird und nicht mehr funktioniert, so dass das Unternehmen auf einen neuen Dongle warten muss, bevor es die Softwareanwendung wieder nutzen kann.

Ein weiterer Nachteil besteht darin, dass sich die Lizenz zwar an Einzelpersonen richtet, der Dongle aber in der Regel an den Knotenpunkt angeschlossen ist. Wenn der Benutzer also zu einem anderen Arbeitsplatzcomputer wechselt (z. B. zu einem PC zu Hause), kann er das lizenzierte Softwareprogramm nicht nutzen, es sei denn, er ist im Besitz des Dongles.

Die DE 10 2022 125 568 A1 betrifft eine Datenverarbeitungsvorrichtung umfassend eine integrierte Schaltung, die einen Datenprozessor und einen nichtflüchtigen Speicher enthält, der mindestens einen Sicherheitscode speichert. Ein erster Speicher außerhalb der integrierten Schaltung speichert Daten, wobei die Daten in einem ersten Format kryptographisch geschützt sind. Ein zweiter Speicher außerhalb des integrierten Schaltkreises dient zur Speicherung von Daten. Die Vorrichtung ist so eingerichtet, dass sie Daten vom ersten Speicher über die integrierte Schaltung zum zweiten Speicher überträgt, damit der Datenprozessor vom zweiten Speicher aus darauf zugreifen kann. Die integrierte Schaltung ist so angeordnet, dass sie während der Übertragung die aus dem ersten Speicher gelesenen Daten mit Hilfe eines in dem nichtflüchtigen Speicher gespeicherten Sicherheitscodes validiert. Wenn die Daten validiert sind, wird ein kryptografischer Schutz in einem zweiten Format auf die validierten Daten angewendet, wobei ein in dem nichtflüchtigen Speicher gespeicherter Sicherheitscode verwendet wird. Die geschützten Daten werden in dem zweiten Speicher in dem zweiten Format gespeichert. Die Offenbarung richtet sich auf einen Rechner, der zumindest einen quantenprozessbasierenden mikrointegierbaren Generator für echte Zufallszahlen als Zufallszahlengenerator mit hoher Zufallsbitausgangsrate insbesondere für die Verschlüsselung umfasst. Der DE 10 2022 125 569 A1, DE 10 2022 125 570 , DE 10 2022 125 571 A1A1, DE 10 2022 125 572 A1, DE 10 2022 125 573 A1 sowie der unveröffentlichten Anmeldung mit der Anmeldenummer DE 10 2022 125 574.3 können ebenfalls entsprechende Vorrichtungen entnommen werden.

### Beschreibung der Erfindung

Ausgehend von den obigen Ausführungen wäre es wünschenswert, eine kryptographische Vorrichtung mit der Funktionalität eines elektronischen Dongles als integrierte Schaltungskomponente zu konstruieren, die intern in einem Knoten implementiert ist. Dementsprechend ist es ein Ziel der vorliegenden Erfindung, eine solche kryptografische Vorrichtung als integrierte Schaltungskomponente bereitzustellen, die ein Speicherelement zum internen Speichern eines eindeutigen digitalen Zertifikats zur Verwendung bei der Fernauthentifizierung der integrierten Schaltungskomponente enthält.

Ein weiteres Ziel der vorliegenden Erfindung ist es, eine integrierte Schaltungskomponente bereitzustellen, welche in der Lage ist, intern ein eindeutiges öffentliches/privates Schlüsselpaar zu erzeugen und zumindest den privaten Schlüssel zu speichern, wodurch seine Verwendung außerhalb der integrierte Schaltungskomponente verhindert wird.

Ein weiteres Ziel der vorliegenden Erfindung ist es, eine integrierte Schaltungskomponente zum internen Speichern des öffentlichen Schlüssels einer Instanz bereitzustellen, um eine gesicherte Kommunikation mit anderen ähnlichen integrierten Schaltungskomponenten zu ermöglichen, die von der Instanz verifiziert oder hergestellt wurden.

Ein weiteres Ziel der vorliegenden Erfindung ist es, eine integrierte Schaltungskomponente zur Bereitstellung einer mobilen Softwarelizenz bereitzustellen, ohne dass ständige physische Manipulationen an der Hardware erforderlich sind.

Die erfindungsgemäße integrierte Schaltungskomponente, die im Allgemeinen als Hardware-Agent bezeichnet wird, umfasst eine Verarbeitungseinheit zur Durchführung von Operationen zu Identifizierungszwecken und ein Speicherelement, das (i) einen nichtflüchtigen Speicher zum Speichern eines eindeutigen öffentlichen/privaten Schlüsselpaars, (ii) ein digitales Zertifikat zum Überprüfen der Authentizität des Schlüsselpaars und (iii) einen öffentlichen Schlüssel einer ausgewählten Instanz (vorzugsweise des Herstellers der integrierten Schaltungskomponente) umfasst, um insbesondere die Kommunikation zwischen der integrierten Schaltungskomponente und anderen ähnlichen, vom Hersteller hergestellten Komponenten zu ermöglichen. Der nichtflüchtige Speicher kann auch zum Speichern von kryptografischen Algorithmen verwendet werden. Die integrierte Schaltungskomponente umfasst ferner einen flüchtigen Speicher zur Speicherung von Informationen, die von der Verarbeitungseinheit verarbeitet werden, eine Schnittstelle zum Empfang von Informationen in verschlüsseltem oder entschlüsseltem Format von anderen ähnlichen Komponenten und/oder zur Übertragung von Informationen an andere ähnliche Komponenten über einen Kommunikationsbus sowie einen Quantenzufallsgenerator zur Erzeugung des eindeutigen Paars aus öffentlichem und privatem Schlüssel. Als Hardware-Agent wird in sogenannten Agentensystem dabei eine spezielle Art von Agent bezeichnet, der im Gegensatz zu einem reinen Software-Agenten nicht nur aus Software besteht, sondern auch physische Komponenten aufweist. Eine Quantenzufallszahl kann beispielsweise ein einzelnes Quantenzufallsbit oder ein Quantenzufallsdatenwort aus mehreren Quantenzufallsbits umfassen. Der Token oder eine entsprechende Nachricht können selbst wieder ein oder mehrere Quantenzufallszahlen und/oder Quantenbits und/oder daraus abgeleitete Informationen umfassen.

Ein erster Aspekt der vorliegenden Erfindung betrifft eine Komponente einer ersten integrierten Schaltung, die zum Austausch eines Lizenztokens, der zur Ausführung eines lizenzierten Softwareprogramms erforderlich ist, mit einer Komponenten einer zweiten integrierten Schaltung eingerichtet ist, wobei die erste integrierte Schaltungskomponente Folgendes umfasst: ein Verarbeitungsmittel zur vollständigen Verarbeitung von Informationen innerhalb der ersten integrierten Schaltungskomponente; ein erstes Speichermittel zum Speichern eines eindeutigen Schlüsselpaars, eines digitalen Authentifizierungszertifikats, eines öffentlichen Schlüssels eines Herstellers der ersten integrierten Schaltungskomponente und des Lizenz-tokens innerhalb der ersten integrierten Schaltungskomponente, wobei das erste Speichermittel mit der Verarbeitungseinrichtung gekoppelt ist; ein zweites Speichermittel zum Speichern der vom Verarbeitungsmittel verarbeiteten Informationen, wobei das zweite Speichermittel mit dem Verarbeitungsmittel gekoppelt ist; ein Erzeugungsmittel zum Erzeugen des eindeutigen Schlüsselpaares, das sich in der ersten integrierten Schaltungskomponente befindet, wobei das Erzeugungsmittel mit dem Verarbeitungsmittel gekoppelt ist und einen Quantenzufallsgenerator umfasst; und ein Schnittstellenmittel zum Bereitstellen einer Kommunikationsverbindung zwischen der ersten integrierten Schaltungskomponente und der der zweiten integrierten Schaltungskomponente zum Austauschen des Lizenztokens, wobei das Schnittstellenmittel mit dem Verarbeitungsmittel gekoppelt ist.

Vorzugsweise beinhaltet das erste Speichermittel einen nicht flüchtigen Speicher und/oder umfasst das zweite Speichermittel einen Direktzugriffsspeicher.

Vorzugsweise ist das digitale Authentifizierungszertifikat der öffentliche Schlüssel des Herstellers der ersten integrierten Schaltungskomponente, der durch einen privaten Schlüssel des Herstellers verschlüsselt ist.

Vorzugsweise enthält das erste Speichermittel einen kryptographischen Algorithmus.

Vorzugsweise beinhaltet das Schnittstellenmittel eine Busschnittstelle, die es der ersten integrierten Schaltungskomponente ermöglicht, das von der zweiten integrierten Schaltungskomponente empfangene Lizenztoken intern zu entschlüsseln und zu speichern, und das an die zweiten integrierte Schaltungskomponente zu übertragende Lizenztoken intern zu verschlüsseln und zu übertragen.

Vorzugsweise wird das Lizenztoken mit der zweiten integrierten Schaltungskomponente ausgetauscht, die mit der ersten integrierten Schaltungskomponente baugleich ist.

Ein weiterer Aspekt der vorliegenden Erfindung betrifft Komponente einer erste integrierten Schaltung, die zum Austausch eines Lizenztokens, der zum Ausführen eines lizenzierten Softwareprogramms erforderlich ist, mit einer Komponente einer zweiten integrierten Schaltung, die von der ersten integrierten Schaltungskomponente entfernt ist, eingerichtet ist, wobei die erste integrierte Schaltungskomponente umfasst: einen nichtflüchtigen Speicher zum Speichern eines eindeutigen Schlüsselpaares, eines Gerätezertifikats eines Herstellers des integrierten Schaltkreises, eines öffentlichen Schlüssels des genannten Herstellers und des Lizenztokens; einen Direktzugriffsspeicher zur vorübergehenden Speicherung von Informationen; eine mit dem nichtflüchtigen Speicher und dem Direktzugriffsspeicher verbundene Verarbeitungseinheit zur internen Verarbeitung von Informationen, die von der zweiten integrierten Schaltungskomponente übertragen werden, so dass das eindeutige Schlüsselpaar, das Gerätezertifikat und der öffentliche Schlüssel außerhalb der ersten integrierten Schaltungskomponente nicht zugänglich sind; einen Quantenzufallsgenerator zum Erzeugen des eindeutigen Schlüsselpaars innerhalb der ersten integrierten Schaltungskomponente, wobei der Quantenzufallsgenerator mit der Verarbeitungseinheit verbunden ist; und eine Schnittstelle, die es der integrierten Schaltungskomponente ermöglicht, das Lizenz-Token mit der zweiten integrierten Schaltkreiskomponente auszutauschen, wobei die Schnittstelle mit der Verarbeitungseinheit gekoppelt ist.

Vorzugsweise stellt die Schnittstelle eine Kommunikationsverbindung zwischen der ersten integrierten Schaltungskomponente und der zweiten integrierten Schaltungskomponente bereit, um die erste integrierte Schaltungskomponente in die Lage zu versetzen, Informationen, die an die erste integrierte Schaltungskomponente übertragen werden, zu entschlüsseln und zu speichern und Informationen, die an die zweite integrierte Schaltungskomponente übertragen werden, zu verschlüsseln und zu übertragen.

Vorzugsweise wird das Lizenztoken mit der Komponente der zweiten integrierten Schaltung ausgetauscht wird, die mit der Komponente der ersten integrierten Schaltung baugleich ist.

Ein weiterer Aspekt der vorliegenden Erfindung betrifft ein System zum Austausch eines Lizenztokens, der zum Ausführen eines lizenzierten Softwareprogramms erforderlich ist, mit einem entfernten System, wobei das System Folgendes umfasst: einen Host-Prozessor zum Ausführen des Softwareprogramms; ein Speichermittel zum Speichern des Softwareprogramms; einen Bus zur Kopplung des Prozessors und des Speichermittels; ein Agentenmittel, das mit den Bus gekoppelt sind, zum internen Entschlüsseln von kryptografischen Informationen, die in das Agentenmittel eingegeben werden, und zum Verschlüsseln von kryptografischen Informationen, die von dem Agentenmittel ausgegeben werden, wobei das Agentenmittel Folgendes umfasst: ein Verarbeitungsmittel zum Verarbeiten der eingegebenen und ausgegebenen kryptografischen Informationen vollständig innerhalb des Agentenmittels, ein erstes Speichermittel zum Speichern eines eindeutigen Schlüsselpaares, eines Vorrichtungszertifikats eines Herstellers des Agentenmittels, eines öffentlichen Schlüssels des Herstellers, der zum Entschlüsseln der eingegebenen kryptografischen Informationen und zum Verschlüsseln der ausgegebenen kryptografischen Informationen verwendet wird, und des Lizenztokens innerhalb des Agentenmittels, wobei das erste Speichermittel mit dem Verarbeitungsmittel gekoppelt sind; ein zweites Speichermittel zum vorübergehenden Speichern der eingegebenen und ausgegebenen kryptografischen Informationen, wobei das zweite Speichermittel mit dem Verarbeitungsmittel gekoppelt ist, ein Erzeugungsmittel zum Erzeugen des eindeutigen Schlüsselpaars, auf das außerhalb des Agentenmittels nicht zugegriffen werden kann, wobei das Erzeugungsmittel mit den Verarbeitungsmittel gekoppelt ist und einen Quantenzufallsgenerator umfasst, und ein Schnittstellenmittel zum Bereitstellen einer Kommunikationsverbindung zwischen dem System und dem entfernten System, wobei das Schnittstellenmittel mit dem Verarbeitungsmittel gekoppelt ist.

Vorzugsweise beinhaltet das erste Speichermittel einen nicht flüchtigen Speicher, um das eindeutige Schlüsselpaar auch dann zu behalten, wenn die Stromversorgung des nicht flüchtigen Speichers unterbrochen ist.

Vorzugsweise speichert das erste Speichermittel ferner einen kryptografischen Algorithmus.

Ein weiter Aspekt der vorliegenden Erfindung betrifft ein System, das ausgelegt ist, um ein Lizenztoken an ein entferntes System zu übermitteln und von diesem zu empfangen, wobei das System Folgendes umfasst: ein Speicherelement; einen Host-Prozessor; einen Bus zum Koppeln des Host-Prozessors und des Speicherelements; und einen Hardwareagenten, der mit dem Bus gekoppelt ist, zum internen Entschlüsseln von eingegebenen Informationen, die das von dem entfernten System verschlüsselte Lizenztoken beinhalten, und Verschlüsseln von ausgegebenen Informationen, die das Lizenztoken beinhalten, vor der Übertragung an das entfernte System, wobei der Hardwareagent Folgendes umfasst: einen Prozessor zum Ausführen eines Verschlüsselungs- und Entschlüsselungsprogramms innerhalb des Hardwareagenten, um das Lizenztoken zu erhalten, ein nicht flüchtiges Speicherelement zum Speichern eines eindeutig bezeichneten Schlüsselpaars, eines Authentifizierungsvorrichtungszertifikats und eines öffentlichen Schlüssels des Herstellers, die alle zum Entschlüsseln der eingegebenen Informationen und Verschlüsseln der ausgegebenen Informationen verwendet werden, wobei das nicht flüchtige Speicherelement mit dem Prozessor gekoppelt ist, ein flüchtiges Speicherelement zum vorübergehenden Speichern der von dem Prozessor verarbeiteten eingegebenen und ausgegebenen Informationen, einen Quantenzufallsgenerator zum Erzeugen des eindeutigen Schlüsselpaars, auf das außerhalb des Hardwareagenten nicht zugegriffen werden kann, und eine Schnittstelle zum Ermöglichen einer Kommunikation zwischen dem System und dem entfernten System, wobei die Schnittstelle mit dem Prozessor gekoppelt ist.

Vorzugsweise speichert das nicht flüchtige Speicherelement ferner mindestens einen kryptografischen Algorithmus speichert.

Ein noch weiterer Aspekt der vorliegenden Erfindung betrifft eine erste integrierte Schaltkreiskomponente, die zum Austausch eines Lizenztokens, der zur Ausführung eines lizenzierten Softwareprogramms erforderlich ist, mit einer zweiten integrierten Schaltkreiskomponente geeignet ist, wobei die erste integrierte Schaltkreiskomponente Folgendes umfassen kann: Verarbeitungsmittel zur vollständigen Verarbeitung von Informationen innerhalb des ersten integrierten Schaltkreisbauteils; ein erstes Speichermittel zum Speichern eines eindeutigen Schlüsselpaars, eines digitalen Authentifizierungszertifikats, eines öffentlichen Schlüssels eines Herstellers der ersten integrierten Schaltkreiskomponente und des Lizenztokens innerhalb der ersten integrierten Schaltkreiskomponente, wobei die erste Speichereinrichtung mit der Verarbeitungseinrichtung gekoppelt ist; eine zweite Speichermittel zum Speichern der von den Verarbeitungsmitteln verarbeiteten Informationen, wobei die zweiten Speichermittel mit den Verarbeitungsmitteln gekoppelt sind; Mittel zum Erzeugen des eindeutigen Schlüsselpaares, das sich in der ersten integrierten Schaltkreiskomponente befindet, wobei das Erzeugungsmittel mit dem Verarbeitungsmittel gekoppelt ist und wobei das Erzeugungsmittel einen Quantenzufallszahlengenerator umfasst; und Schnittstellenmittel zur Bereitstellung einer Kommunikationsverbindung zwischen der ersten integrierten Schaltkreiskomponente und der zweiten integrierten Schaltkreiskomponente zum Austausch des Lizenztokens, wobei die Schnittstellenmittel mit den Verarbeitungsmitteln gekoppelt sind. Der Quantenzufallsgenerator kann dabei zur Schlüsselerzeugung benötigte Zufallszahlen bereitstellen, insbesondere kann der Quantenzufallsgenerator als Teil eines Schlüsselgenerators (Schlüsselquelle) ausgebildet sein.

Vorzugsweise enthält das erste Speichermittel einen nichtflüchtigen Speicher. Vorzugsweise ist das digitale Authentifizierungszertifikat der öffentliche Schlüssel des Herstellers der ersten integrierten Schaltkreiskomponente, der durch einen privaten Schlüssel des Herstellers verschlüsselt ist. Vorzugsweise enthält das erste Speichermittel außerdem einen kryptographischen Algorithmus. Vorzugsweise enthält das zweite Speichermittel einen Direktzugriffsspeicher. Vorzugsweise ist enthält die Schnittstelleneinrichtung eine Busschnittstelle, die es der ersten integrierten Schaltkreiskomponente ermöglicht, das von der zweiten integrierten Schaltkreiskomponente empfangene Lizenz-Token intern zu entschlüsseln und zu speichern und das Lizenz-Token intern zu verschlüsseln und an die zweite integrierte Schaltkreiskomponente zu übertragen. Vorzugsweise wird der Lizenztoken mit dem zweiten integrierte Schaltungselement ausgetauscht, welches mit dem ersten integrierten Schaltungselement baugleich sein kann.

Ein noch weiterer Aspekt der vorliegenden Erfindung betrifft eine erste integrierte Schaltkreiskomponente, die zum Austausch eines Lizenztokens, der zum Ausführen eines lizenzierten Softwareprogramms erforderlich ist, mit einer zweiten integrierten Schaltkreiskomponente, die von der ersten integrierten Schaltkreiskomponente entfernt ist, angepasst ist, wobei die erste integrierte Schaltkreiskomponente umfassen kann: einen nichtflüchtiger Speicher zum Speichern eines eindeutigen Schlüsselpaares, eines Gerätezertifikats eines Herstellers des integrierten Schaltkreises, eines öffentlichen Schlüssels des genannten Herstellers und des Lizenztokens; einen Speicher mit wahlfreiem Zugriff zur vorübergehenden Speicherung von Informationen; eine mit dem nichtflüchtigen Speicher und dem Direktzugriffsspeicher verbundene Verarbeitungseinheit zur internen Verarbeitung von Informationen, die von der zweiten integrierten Schaltkreiskomponente übertragen werden, so dass das eindeutige Schlüsselpaar, das Gerätezertifikat und der öffentliche Schlüssel außerhalb der ersten integrierten Schaltkreiskomponente nicht zugänglich sind; einen Quantenzufallsgenerator zum Erzeugen des eindeutigen Schlüsselpaars innerhalb der ersten integrierten Schaltkreiskomponente, wobei der Quantenzufallsgenerator mit der Verarbeitungseinheit verbunden ist; und eine Schnittstelle, die es der integrierten Schaltkreiskomponente ermöglicht, das Lizenz-Token mit der zweiten integrierten Schaltkreiskomponente auszutauschen, wobei die Schnittstelle mit der Verarbeitungseinheit gekoppelt ist. Der Quantenzufallsgenerator kann dabei zur Schlüsselerzeugung benötigte Zufallszahlen bereitstellen, insbesondere kann der Quantenzufallsgenerator als Teil eines Schlüsselgenerators (Schlüsselquelle) ausgebildet sein.

Vorzugsweise kann die Schnittstelle eine Kommunikationsverbindung zwischen der ersten integrierten Schaltungskomponente und der zweiten integrierten Schaltungskomponente bereitstellen, um die erste integrierte Schaltungskomponente in die Lage zu versetzen, Informationen, die an die erste integrierte Schaltungskomponente übertragen werden, zu entschlüsseln und zu speichern und Informationen, die an die zweite integrierte Schaltungskomponente übertragen werden, zu verschlüsseln und zu übertragen. Vorzugsweise wird der Lizenztoken mit dem zweiten integrierte Schaltungselement ausgetauscht, welches mit dem ersten integrierten Schaltungselement baugleich sein kann.

Ein noch weiterer Aspekt der vorliegenden Erfindung betrifft ein System, das für die Übertragung eines Lizenz-Tokens zwischen einem entfernten System geeignet ist, wobei das System umfassen kann: ein Host-Verarbeitungsmittel zum Ausführen eines Softwareprogramms; ein Speichermittel zum Speichern des Softwareprogramms; ein Busmittel zum Verbinden des Host-Verarbeitungsmittels und des Speichermittels; und eine Agenteneinrichtung, die mit der Buseinrichtung gekoppelt ist, um intern kryptografische Informationen, die in die Agenteneinrichtung eingegeben werden, zu entschlüsseln und kryptografische Informationen, die von der Agenteneinrichtung ausgegeben werden, zu verschlüsseln, wobei die Agenteneinrichtung umfassen kann: ein Verarbeitungsmittel zum Verarbeiten der kryptographischen Eingangs- und Ausgangsinformationen vollständig innerhalb der Agentenmittel, eine erste Speichereinrichtung zum Speichern eines eindeutigen Schlüsselpaars, eines Gerätezertifikats eines Herstellers der Agenteneinrichtung, eines öffentlichen Schlüssels des Herstellers, der zum Entschlüsseln der kryptografischen Eingangsinformationen und zum Verschlüsseln der kryptografischen Ausgangsinformationen verwendet wird, und des Lizenztokens innerhalb der Agenteneinrichtung, wobei die erste Speichereinrichtung mit der Verarbeitungseinrichtung gekoppelt ist; eine zweite Speichereinrichtung zum vorübergehenden Speichern der kryptographischen Eingangs- und Ausgangsinformationen, wobei die zweite Speichereinrichtung mit der Verarbeitungseinrichtung verbunden ist, eine Erzeugungseinrichtung zum Erzeugen des eindeutigen Schlüsselpaars, die außerhalb der Agenteneinrichtung nicht zugänglich ist, wobei die Erzeugungseinrichtung mit der Verarbeitungseinrichtung gekoppelt ist und wobei die Erzeugungsvorrichtung einen Quantenzufallsgenerator umfasst, und Schnittstellenmittel zur Bereitstellung einer Kommunikationsverbindung zwischen dem System und dem entfernten System, wobei die Schnittstellenmittel mit den Verarbeitungsmitteln gekoppelt sind. Der Quantenzufallsgenerator kann dabei zur Schlüsselerzeugung benötigte Zufallszahlen bereitstellen, insbesondere kann der Quantenzufallsgenerator als Teil eines Schlüsselgenerators (Schlüsselquelle) ausgebildet sein.

Vorzugsweise enthält die erste Speichereinrichtung einen nichtflüchtigen Speicher, um das eindeutige Schlüsselpaar auch dann aufrechtzuerhalten, wenn die Stromversorgung des nichtflüchtigen Speichers unterbrochen ist. Vorzugsweise speichert die erste Speichereinrichtung ferner einen kryptographischen Algorithmus.

Ein noch weiterer Aspekt der vorliegenden Erfindung betrifft ein System, das für die Übertragung eines Lizenz-Tokens zu und von einem entfernten System geeignet ist, wobei das System umfassen kann: ein Speicherelement; einen Host-Prozessor; einen Bus zum Verbinden des Host-Prozessors und des Speicherelements; und einen mit dem Bus gekoppelten Hardware-Agenten zum internen Entschlüsseln von Eingangsinformationen einschließlich des von dem entfernten System verschlüsselten Lizenztokens und zum Verschlüsseln von Ausgangsinformationen einschließlich des Lizenztokens vor der Übertragung an das entfernte System, wobei der Hardware-Agent Folgendes umfassen kann: einen Prozessor zum Ausführen eines Verschlüsselungs- und Entschlüsselungsprogramms innerhalb des Hardware-Agenten, um das Lizenz-Token zu erhalten, ein nichtflüchtiges Speicherelement zum Speichern eines eindeutig bezeichneten Schlüsselpaars, eines Authentifizierungsvorrichtungszertifikats und eines öffentlichen Schlüssels des Herstellers, die alle zum Entschlüsseln der Eingangsinformationen und zum Verschlüsseln der Ausgangsinformationen verwendet werden, wobei das nichtflüchtige Speicherelement mit dem Prozessor verbunden ist, ein flüchtiges Speicherelement zum vorübergehenden Speichern der von dem Prozessor verarbeiteten Eingangs- und Ausgangsinformationen, einen Quantenzufallsgenerator zum Erzeugen des eindeutigen Schlüsselpaares, der außerhalb des Hardware-Agenten nicht zugänglich ist, und eine Schnittstelle zum Ermöglichen der Kommunikation zwischen dem System und dem entfernten System, wobei die Schnittstelle mit dem Prozessor verbunden ist. Der Quantenzufallsgenerator kann dabei zur Schlüsselerzeugung benötigte Zufallszahlen bereitstellen, insbesondere kann der Quantenzufallsgenerator als Teil eines Schlüsselgenerators (Schlüsselquelle) ausgebildet sein.

Vorzugsweise kann das nichtflüchtige Speicherelement ferner mindestens einen kryptographischen Algorithmus speichern.

Vorzugsweise wird das Lizenztoken mit der zweiten integrierten Schaltungskomponente ausgetauscht, die mit der ersten integrierten Schaltungskomponente baugleich sein kann.

Ein Quantenzufallsgenerator kann eine Entropiequelle umfassen. Es ist bevorzugt, dass die Entropiequelle monolithisch in einem Halbleitersubstrat mit einer Oberfläche ausgeführt ist. Die Entropiequelle kann eine Photonenquelle umfassen, die dazu eingerichtet ist, bei einer entsprechenden Bestromung Photonen (bevorzugt Einzelphotonen) auszusenden. Weiterhin kann die Entropiequelle einen Einzelphotonendetektor umfassen, der dazu eingerichtet ist, die Photonen der Photonenquelle zu detektieren und ein Entropiequellenausgangssignal zu erzeugen. Vorzugsweise ist die Photonenquelle zwischen der Oberfläche eines Halbleitersubstrats in dem die Photonenquelle ausgebildet ist (es kann sich um das gleiche Halbleitersubstrat handeln, in dem die Entropiequelle monolithisch ausgebildet ist) und dem Einzelphotonendetektor angeordnet. Alternativ kann auch der Einzelphotonendetektor zwischen der Oberfläche eines Halbleitersubstrats in dem die Photonenquelle ausgebildet ist (es kann sich um das gleiche Halbleitersubstrat handeln, in dem die Entropiequelle monolithisch ausgebildet ist) und der Einzelphotonenquelle angeordnet sein.

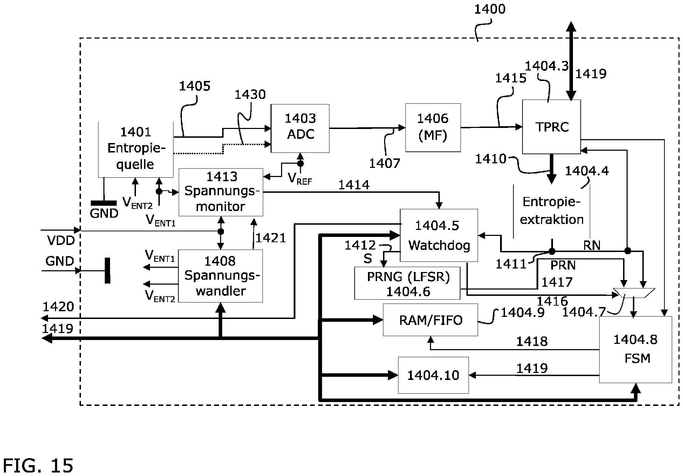

Besonders bevorzugt ist, dass die Photonenquelle und der Einzelphotonendetektor vertikal übereinander angeordnet sind, d. h. beispielsweise wenn diese als hybride Strukturen mit jeweils eigenen Substraten miteinander kombiniert werden oder bei einer monolithisch in einem Halbleitersubstrat integrierten Entropiequelle eine vertikale Stapelstruktur ausbilden. Der Quantenzufallsgenerator kann ein Mittel zur Erzeugung einer oder mehrerer Quantenzufallszahlen in Abhängigkeit von dem Entropiequellenausgangssignal aufweisen. Eine Quantenzufallszahl kann beispielsweise ein einzelnes Quantenzufallsbit oder ein Quantenzufallsdatenwort aus mehreren Quantenzufallsbits umfassen. Insbesondere kann es sich bei dem Quantenzufallsgenerator um einen beispielhaft in FIG. 15 beschriebenen Quantenzufallsgenerator handeln, wobei die Entropiequelle vorzugsweise wie obenstehend beschrieben ausgebildet ist.

Insbesondere kann der Quantenzufallsgenerator als Entropiequelle daher bevorzugt einen integrierten Quanten-Zufallszahlengenerator (engl. "integrated Quantum Random Number Generator, iQRNG"), insbesondere einen monolithisch in einem gemeinsamen Halbleitersubstrat im gleichen Materialsystem skalierbar und vollständig integriert aufgebauten photonischen QRNG bestehend aus einer Photonenquelle und einen unmittelbar an die Quelle gekoppelten Detektor für einzelne Photonen in einer besonders kompakten und angriffssicheren Ausführung auf einer für vielfältige Anwendungen offenen Technologieplattform zur Halbleiterstrukturierung umfassen.

Hierbei gilt es zu beachten, dass in vielen Bereichen von Wissenschaft und Technik zufällige Ereignisse und die Bestimmung von Wahrscheinlichkeiten eine besonders herausragende Rolle spielen. Beispielsweise basieren Monte-Carlo-Simulationen und sichere Verschlüsselungsverfahren in hohem Maße auf der Bereitstellung von Zufallszahlen. Man unterscheidet dabei im Allgemeinen zwischen den sogenannten Pseudo-Zufallszahlen und echten Zufallszahlen. Während erstere mittels deterministischer Formeln durch Pseudo-Zufallszahlengeneratoren (engl. "Pseudo Random Number Generators, PRNGs") erzeugt werden, also nicht absolut zufällig sind, basieren nicht-deterministische Zufallszahlengeneratoren zur Bereitstellung echter Zufallszahlen (engl. "True Random Number Generators, TRNGs") im Allgemeinen auf real unvorhersehbaren Prozessen wie einem thermischen oder atmosphärischen Rauschen und nicht auf künstlich generierten Mustern deterministischer Algorithmen. Allerdings können auch die Ergebnisse von solchen auf äußeren Parametern basierenden nicht-deterministischen Zufallszahlengeneratoren abhängig vom zugrundeliegenden Zufallselement aufgrund von schwachen Korrelationen beispielsweise noch immer geringfügig zu höheren oder zu geraden Zahlen tendieren und somit zumindest eine teilweise Vorhersagbarkeit der so generierten Zufallszahlen ermöglichen.

Die sogenannten Quanten-Zufallszahlengeneratoren (engl. "Quantum Random Number Generators, QRNGs") als spezielle Untergruppe der TRNGs hingegen basieren auf fundamentalen Quantenprozessen zur Zufallszahlenerzeugung und sind daher zumindest theoretisch nicht an andere die Statistik beeinflussende äußere Faktoren und Effekte gekoppelt. Quanten-Zufallszahlengeneratoren stellen somit die z. Z. beste verfügbare Quelle für echte Zufallszahlen dar. Aktuelle digitale QNRGs können dabei Entropieraten (d. h. eine Folge von Bitwerten mit maximaler Zufälligkeit bzw. Entropie) von bis zu einigen hundert Mbps liefern. Die erzeugten Zufallszahlen werden sowohl bei klassischen Verschlüsselungsverfahren als auch bei einer Vielzahl von Verfahren der Quanteninformatik und Quantenkryptografie zur Gewährleistung eines sicheren Schlüsselaustauschs benötigt (engl. "Secure/Quantum Key Distribution, SKD/QKD"). Zur Generierung sicherer Schlüssel in der Kryptographie sind daher nicht-manipulierbare und schnelle QRNGs unbedingt erforderlich.

Eine Vielzahl von QRNGs wird aufgrund von deren besonders einfacher Realisierbarkeit mit Hilfe zufälliger Eigenschaften von Photonen als photonische QRNGs realisiert. Ein einfaches Konzept für die Erzeugung von Zufallszahlen ist dabei das Verhalten eines Photons, dass an einen semitransparenten Strahlteiler unabhängig von anderen Photonen entweder reflektiert oder transmittiert wird. Ein anderer Ansatz ist die Nutzung der zufälligen Ankunftszeiten von Photonen auf einem Einzelphotonendetektor. Dieser auf einer intrinsischen, prinzipiell nicht deterministisch berechenbaren Photonenstatistik der Photonen einer zugehörigen Photonenquelle basierende Verteilungseffekt kann ebenfalls zur Bereitstellung echter Zufallszahlen mit hoher Entropie genutzt werden. Die Ankunftszeiten von Photonen auf einem Einzelphotonendetektor weisen im Allgemeinen eine Exponential-Verteilung auf.

Typischerweise wird in einem Einzelphotonendetektor (engl. "Single Photon Detector, SPD") zunächst durch ein einzelnes einfallendes Photon ein Detektorimpuls erzeugt, welcher in einem Zeit-zu-Digital-Wandler (engl. "Time-to-Digital Converter, TDC") in eine mit einem Zeitstempel versehende digitale Repräsentation des Detektionsereignisses umgewandelt und entsprechend weiterverarbeitet werden kann. Als Photonen- bzw. Entropiequelle in QRNGs werden dabei zumeist stark auf das Einzelphotonenniveau abgeschwächte Laserdioden (engl. "Laser Diodes, LD") oder einfache lichtemittierende Dioden (engl. "Light Emitting Diodes, LEDs") genutzt, deren emittierte Photonen anschließend über einen oder mehrere besonders empfindliche Einzelphotonen-Lawinendioden (engl. "Single Photon Avalanche Diodes, SPADs") als SPD zeitlich aufgelöst erfasst werden können. Solche zeitgleich nur einzelne oder nur einige wenige Photonen bereitstellende Photonenquellen werden im Rahmen dieser Anmeldung auch als Einzelphotonenquellen (engl. "Single Photon Source, SPS") bezeichnet. Es muss sich dabei jedoch nicht um echte Einzelphotonenemitter, beispielsweise auf Basis eines einzelnen isolierten Zweiniveausystems, handeln.

Bei SPADs handelt es sich um eine Art Photodetektor ähnlich den Photodioden (engl. "Photo Diodes, PDs") und Avalanche-Photodioden (engl. "Avalanche Photo Diodes, APDs"), jedoch mit einer demgegenüber deutlich erhöhten Sensitivität. Die SPADs können digital - auch innerhalb einer gemeinsamen integrierten Schaltung - ausgelesen und ausgewertet werden. Wird eine solche integrierte Detektorschaltung durch einzelne Photonen angeregt, so wird in dem sensorisch aktiven Bereich (Absorptionsgebiet) pro anregendem Photon primär jeweils nur ein Elektron-Loch-Paar generiert, wobei die angeregten Elektronen durch elektrische Felder zur Kathode und die angeregten Löcher zur Anode abgezogen werden. Dabei driften die Ladungsträger bei einer SPAD durch ein sogenanntes Lawinengebiet, innerhalb dessen durch eine verstärkte Stoßionisation eine Ladungslawine erzeugt wird. Es handelt sich somit um hochgradig sensitive Photonen-Empfänger-Elemente, welche bei Aktivierung eine hohe Ladungsmenge (ca. 10⁵ - 10⁶ Elektronen) mit hoher zeitlicher Auflösung bereitstellen können.

Eine SPAD wird typischerweise im Geiger-Modus oberhalb seiner Durchbruchspannung betrieben, wobei ein einzelnes Photon über die erzeugte Ladungslawine detektiert und anschließend als Einzelereignis registriert wird. Zur Verringerung der während der Registrierung auftretenden Totzeit kann unmittelbar nach dem Einsetzen der Lawinenausbildung eine aktive oder passive Unterdrückung bzw. Quenching der weiteren Ladungsträgerverstärkung erfolgen. Die integrierte Schaltung kann neben der SPAD auch ein sogenanntes Einzelphotonenzählwerk bzw. einen Einzelphotonenzähler (engl. "Single-Photon Counter, SPC") umfassen, hierbei erfolgt im Allgemeinen anstatt einer direkten Ausgabe eines einzelnen Detektorimpulses eine unmittelbare statistische Auswertung der zeitlichen Verteilung der einzelnen detektierten Einzelphotonenereignisse.

Der Begriff Quanten-Zufallszahlengenerator (QRNG) ist im Rahmen dieser Anmeldung vor allem als abstrakte Definition im Sinne einer Anordnung zur Bereitstellung von zahlenmäßig erfassbaren quantisierten Zufallsereignissen zu verstehen. Ein Quanten-Zufallszahlengenerator umfasst dabei stets eine sogenannte Entropiequelle, also ein diese Zufallsereignisse tatsächlich bereitstellendes Element (z. B. eine SPS alleine oder in Kombination mit einem SPD). Der Begriff Quanten-Zufallszahlengenerator ist jedoch nicht auf die Entropiequelle beschränkt, sondern kann beispielsweise auch die Umgebung und die strukturelle Anordnung der Entropiequelle in einer Vorrichtung oder einem Substrat umfassen. Im Allgemeinen werden unter diesem Begriff jedoch auch entsprechende Ansteuerungs- und Auswerteschaltungen bzw. ganze Schaltungslayouts oder Logikbausteine zur tatsächlichen Ausgabe von Zufallsereignisse als direkt verarbeitbare Zufallszahlen mit verstanden. Die Zufallszahlen können sich dabei unmittelbar aus der Statistik der Entropiequelle oder beispielsweise durch eine Umwandlung als davon durch zusätzliche Maßnahmen abgeleitete Zufallswerte ergeben. Zur besseren Unterscheidung der abstrakten Definition von einer realen Schaltung wird letztere im Folgenden der Einfachheit halber als Quantenzufallsgenerator bezeichnet. Dies soll jedoch keine Einschränkung bezüglich der beiden genannten Begrifflichkeiten darstellen, sondern lediglich unterschiedliche Aspekte hervorheben. Insofern können die Begriffe Quanten-Zufallszahlengenerator und Quantenzufallsgenerator auch durchaus ein und dieselben Vorrichtung repräsentieren, wobei dann beide Vorrichtungen mindestens eine Entropiequelle einschließen. In einem schaltungstechnischen Blockschaltbild (d. h. auf Schaltungsebene) wird ein erfindungsgemäßer Quanten-Zufallszahlengenerator daher auch kurz als Entropiequelle bezeichnet, während die jeweils durch das Blockschaltbild repräsentierte Schaltung zur Ausgabe direkt verarbeitbarer Zufallszahlen für eine bessere Unterscheidbarkeit als Quantenzufallsgenerator bezeichnet wird.

Insbesondere braucht das Substrat eines Quanten-Zufallszahlengenerators keine weiteren Komponenten zur Ausbildung eines Quantenzufallsgenerators umfassen, sondern, das Substrat kann beispielsweise auch nur ein einzelner Halbleiterkristall sein, der lediglich eine oder mehrere Entropiequellen umfasst. Die weiteren Komponenten eines Quantenzufallsgenerators können in diesem Fall auch extern, beispielsweise auf einem anderen Substrat bereitgestellt werden.

Eine parallel zur Zufallszahlenerzeugung erfolgende statistische Auswertung kann beispielsweise zur weiteren Absicherung der Erzeugung gegenüber möglichen Angriffen auf den Prozess der Zufallszahlenerzeugung genutzt werden. Insbesondere bei aus Einzelkomponenten aufgebauten nicht-integrierten photonischen QRNGs bieten die erforderlichen Übertragungsstrecken innerhalb des Systems dazu vielfältige Angriffsmöglichkeiten. Daher werden solche Systeme zur Erhöhung der Sicherheit möglichst kompakt und isoliert von ihrer äußeren Umgebung realisiert. Neben der Vermeidung von potentiellen Angriffsszenarien ist ein weiterer Vorteil solcher kompakten QRNGs, dass die Zufallszahlenerzeugung eventuell von außerhalb des Systems beeinträchtigende natürliche Einflüsse ebenfalls weitestgehend minimiert werden können. Entsprechend kompakte, auf dem Photonenrauschen basierende QRNGs werden daher bisher üblicherweise als hybridisch integrierte Systeme bereitgestellt.

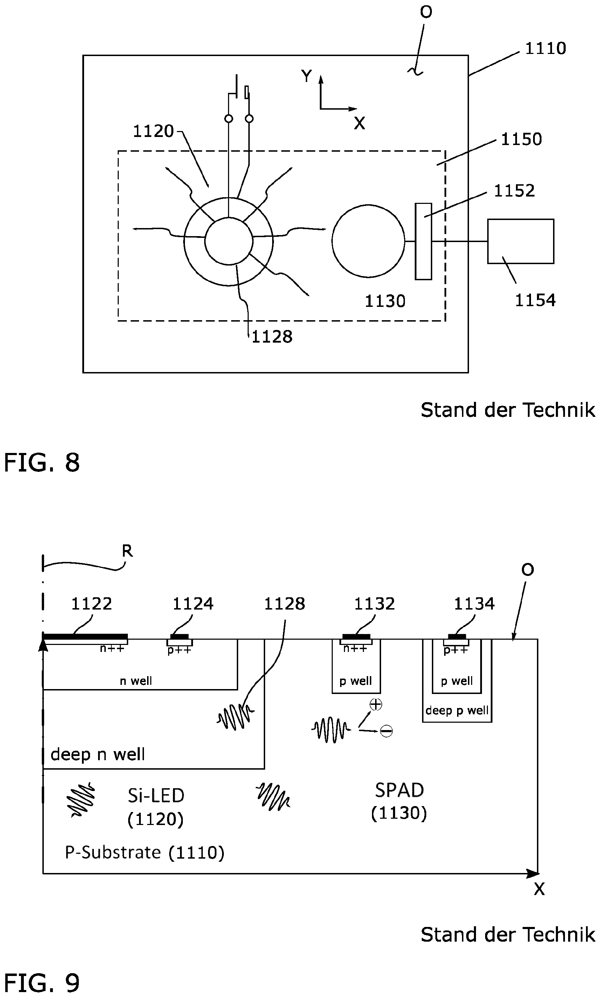

Aus der EP 3 529 694 B1 ist auch ein integrierter Quanten-Zufallszahlengenerator (engl. "integrated Quantum Random Number Generator, iQRNG") mit einer SPS und einer oder mehreren SPDs bekannt, bei dem die SPS und der oder die SPDs vollständig in CMOS-Technologie integriert in einem einzigen Halbleitersubstrat derart angeordnet sind, dass sie unmittelbar nebeneinanderliegen (siehe FIG. 8 mit zugehöriger Figurenbeschreibung). Die SPS wird dabei durch einen zweckmäßig dotierten p-n-Übergang bereitgestellt, so dass sie einen zu detektierenden Photonenstrom erzeugt, wenn die Photonenquelle in geeigneter Weise in Vorwärts- oder Rückwärtsrichtung vorgespannt ist. Bei den SPDs soll es sich insbesondere um SPADs handeln, welche bevorzugt durch gemeinsame Herstellungsprozesse mit den SPSs erzeugt werden und die gleiche chemische Struktur aufweisen.

Die gemeinsame Integration bewirkt, dass der von der SPS erzeugte Photonenstrom durch optisches Übersprechen innerhalb ein und desselben Halbleitermaterials unmittelbar zu einer daneben angeordneten SPAD fließen kann und nicht wie bei anderen aus dem Stand der Technik bekannten hybridisch integrierten QRNGs zunächst einen eventuell leeren, die beiden Komponenten physikalisch voneinander trennenden Kopplungszwischenraum überwinden bzw. durchtunneln muss. Die integrierte "side-by-side"-Konfiguration macht den in der Druckschrift vorgestellten QRNG kompakter und strukturell weniger komplex als hybride QRNGs des gleichen funktionalen Typs. Darüber hinaus ist der Zufallszahlengenerator dank der Integration aller Komponenten deutlich robuster und immuner gegen externe Umwelteinflüsse sowie gegen Manipulationsversuche durch äußere Angreifer.

Allerdings besteht unter deutlich erhöhtem Aufwand hierbei prinzipiell auch weiterhin die Möglichkeit, während des laufenden Betriebs des QRNGs in den Erzeugungsprozess der Zufallszahlen störend, beeinflussend und/oder beobachtend einzugreifen. Da der in der Druckschrift offenbarte iQRNG im Wesentlichen eine planare Struktur aufweist, könnten einzelne Photonen nämlich durchaus von ober- oder unterhalb der Ebene des Substrats abgegriffen oder zusätzlich eingebracht werden.

Die horizontale Nebeneinanderanordnung der Strukturen ist zudem nicht ideal hinsichtlich der Effizienz und des benötigten Flächenverbrauchs. Die Effizienz wird dabei insbesondere durch den erforderlichen seitlichen Abstand zwischen der SPS und der SPAD und eine damit verbundene hohe Absorption der Photonen im Halbleitermaterial beschränkt. Die von der SPS emittierten Photonen werden ohne besondere Vorkehrungen zudem weitgehend ungerichtet in das die SPS umgebende Material ausgesendet, so dass auch dadurch nur ein Teil der erzeugten Photonen von einer zugehörigen SPAD detektiert werden kann. Zwar können mehrere SPADs um eine einzelne SPS herum angeordnet werden, so dass die Effizienz und somit die digitale Entropierate durch gemeinsame Auswertung der so verbundenen SPADs erhöht werden kann, dadurch nimmt jedoch der Flächenverbrauch eines solchen iQRNGs erheblich zu. Anderseits muss auch bei einem einzelnen Emitter-Detektor-Paar sichergestellt werden, dass die nicht detektierten Photonen sich nicht unkontrolliert innerhalb des Substrats ausbreiten und an anderer Stelle im Substrat zu Störungen führen können. Die damit verbundenen seitlichen Sperrbereiche führen daher ebenfalls zu einer Erhöhung des effektiven Flächenverbrauchs des iQRNGs.

Ein ebenfalls in CMOS-Technologie (HV-CMOS) realisierter iQRNG mit einer entsprechenden Anordnung einer Photonenquelle und eines Einzelphotonendetektors nebeneinander ist auch aus Khanmohammadi et al. (Khanmohammadi, Abbas, et al. "A monolithic silicon quantum random number generator based on measurement of photon detection time." IEEE Photonics Journal 7.5 (2015): 1-13) bekannt. Eine in einer kreisförmig oberflächennahen n-Wanne zwischen einem zentralen n⁺⁺-Gebiet als Kathode und mehreren ringförmig darum angeordneten p⁺⁺-Gebieten als Anode ausgebildete Si-LED als Photonenquelle wird dabei kreisringförmig von einer SPAD als Einzelphotonendetektor umschlossen (siehe FIG. 9 mit zugehöriger Figurenbeschreibung). Die von der SPS emittierten Photonen werden dadurch allseitig in der Ebene detektiert, wodurch gegenüber dem aus der EP 3 52 694 B1 bekannten iQRNG bei verringerten Flächenverbrauch die Effizienz erhöht werden kann. Die SPS wird somit unmittelbar in die SPAD integriert. Einzelne Photonen können jedoch auch hierbei ins Substrat emittiert oder an dessen Oberfläche extrahiert werden. Ebenfalls möglich ist auf diesen Wegen auch die Injektion von entsprechenden Photonen eines Angreifers zur Beeinflussung der Statistik.

Von daher besteht zur weiteren Erhöhung der Sicherheit und zur Reduzierung des Flächenverbrauchs Bedarf für eine weitere Miniaturisierung von integrierten QRNGs gegenüber dem Stand der Technik. Der iQRNG sollte weitgehend gegenüber äußeren Angriffen geschützt sein und dabei eine möglichst hohe Effizienz und möglichst geringe Substratverluste aufweisen. Um dabei nicht durch herstellungstechnologische Beschränkungen beim Design von SoCs (engl. "System on Chip, SoC") limitiert zu sein, sollte dabei das zugrundeliegende Herstellungsverfahren möglichst technologieoffen ausgestaltet sein bzw. auf einer möglichst breit anwendbaren Technologieplattform zur Halbleiterstrukturierung basieren.

Ein integrierter Quanten-Zufallszahlengenerator, iQRNG, kann eine Photonenquelle und einen Einzelphotonendetektor, wobei die Photonenquelle und der Einzelphotonendetektor in vertikaler Richtung übereinander in einem gemeinsamen Substrat aus einem Halbleitermaterial angeordnet sind, umfassen. In vertikaler Richtung übereinander bedeutet dabei, dass die Photonenquelle und der Einzelphotonendetektor, bezogen auf eine Oberfläche des Substrats, in unterschiedlichen Tiefen gestapelt zueinander angeordnet sind (eine Nebeneinanderanordnung würde dann beispielsweise in horizontaler Richtung erfolgen). Dabei bedeutet vertikal übereinander bevorzugt, dass die Ausbreitungsrichtung der zwischen der Photonenquelle und dem Einzelphotonendetektor übertragenen Photonen zumindest eine Komponente in besagter vertikaler Richtung aufweist. Die Photonenquelle und der Einzelphotonendetektor können daher durchaus auch einen gegenseitigen seitlichen Versatz oder eine Verkippung der aktiven Bereiche in Bezug auf die Oberfläche des Substrats aufweisen, solange von der Photonenquelle ausgesandte Photonen vom Einzelphotonendetektor mit zumindest einer Komponente der Ausbreitung in besagter vertikaler Richtung detektieren werden können. Besonders bevorzugt ist, wenn die Ausbreitung der Photonen im Wesentlichen (d. h. in strahlenoptischer Näherung ohne Beugungseffekte) nur eine Komponente in besagter vertikaler Richtung (d. h. keine horizontale Komponente) aufweist. Ein beschriebener iQRNG kann auch mehrere an einen einzelnen Einzelphotonendetektor gekoppelte Photonenquellen (z. B. zur Erhöhung der Photonenrate oder der Ausfallsicherheit) oder mehrere an eine einzelne Photonenquelle gekoppelte Einzelphotonendetektoren (z. B. für Überwachungszwecke) umfassen. Ebenfalls möglich ist die Kombination von mehreren Photonenquellen und Einzelphotonendetektoren zu einem einzelnen iQRNG.

Im Gegensatz zum Stand der Technik findet somit keine Nebeneinanderanordnung der einzelnen optoelektronischen Komponenten statt. Vielmehr soll eine kompakte Anordnung einer Photonenquelle und eines Einzelphotonendetektors übereinander in einem gemeinsamen Substrat aus einem Halbleitermaterial erfolgen. Es handelt sich somit hierbei um eine besonders kompakte monolithische 3D-Integration mit minimalem Flächenverbrauch für den iQRNG, wobei die Ausbildung der Strukturen bevorzugt einstückig erfolgen kann. Insbesondere ist hierbei eine Anordnung bevorzugt, bei der der Einzelphotonendetektor zur verbesserten Abschirmung gegenüber äußeren Einflüssen tieferliegend als die Photonenquelle im Halbleitermaterial (d. h. Photonenquelle oben, Einzelphotonendetektor unten) angeordnet ist. In einer alternativen Ausführungsform kann der Einzelphotonendetektor jedoch auch höherliegend als die Photonenquelle im Halbleitermaterial angeordnet sein (d. h. Photonenquelle unten, Einzelphotonendetektor oben). Beispielsweise kann neben einer Inversion des grundsätzlichen Strukturaufbaus bei einer Prozessierung von der Oberfläche des Substrats aus auch eine inverse Anordnung der Elemente durch eine entsprechende Strukturierung von der Rückseite des Substrats aus erfolgen. Insbesondere kann eine Strukturierung beidseitig sowohl von der Vorderseite als auch von der Rückseite des Substrats aus erfolgen.

Vorzugsweise handelt es sich bei der Photonenquelle um eine Einzelphotonenquelle (engl. "Single Photon Source, SPS"), dazu eingerichtet, zeitgleich nur einzelne oder einige wenige Photonen bereitzustellen. Solche zeitgleich nur einzelne oder nur einige wenige Photonen bereitstellende Photonenquellen werden im Rahmen dieser Anmeldung auch als Einzelphotonenquellen bezeichnet. Es muss sich dabei jedoch nicht um echte Einzelphotonenemitter, beispielsweise auf Basis eines einzelnen isolierten Zweiniveausystems, handeln, vielmehr können durch eine entsprechend hohe Abschwächung der Emission bzw. des zugeführten Stroms auch herkömmliche Lichtquellen als SPS ausgebildet werden.

Unter einem Substrat wird im Rahmen der vorliegenden Offenbarung der gesamte Halbleiter-Chip als Körper verstanden, in den beispielsweise mittels CMOS- oder anderer Technologien eine bestimmte Elementstruktur beispielsweise durch Ausbildung von unterschiedlich dotierten Wannen oder Gebieten in das Halbleitermaterial hineinstrukturiert wird. Die Strukturausbildung kann jedoch auch additiv durch Aufbringen von weiteren Schichten und Strukturen bzw. durch eine Abfolge von Ätz- und Aufbringschritten für solche weiteren Schichten und Strukturen erfolgen. Ein entsprechendes Substrat kann daher neben einem sogenannten Träger- oder Grundsubstrat (z. B. ein unstrukturiertes einkristallines Halbleitersubstrat als Basis für das epitaktischen Aufwachsen von weiteren Halbleiterschichten) auch eine Vielzahl solcher epitaktisch aufgewachsen Schichten sowie andere Beschichtungen umfassen. Das Substrat wird in dieser Anmeldung daher als materieller Träger für die Halbleiterstrukturen eines beschriebenen iQRNG und nicht im Sinne eines einfachen Träger- oder Grundsubstrats zum Aufbringen dieser Strukturen verstanden. Insofern stellt vor allem die einstückige Ausbildung eines beschriebenen iQRNG übereinander in einem gemeinsamen Substrat aus einem Halbleitermaterial eine Abgrenzung insbesondere gegenüber mit herkömmlichen Methoden hybridisch integrierten Kombinationen (z. B. mittels Flip-Chip-Montage) aus mindestens einer Photonenquelle und mindestens einem Einzelphotonendetektor etwa auf einem gemeinsamen Submount als Trägerstruktur dar.

Vorzugsweise handelt es sich bei der Photonenquelle um eine an einem Arbeitspunkt unterhalb oder nahe der Durchbruchspannung betriebene lichtemittierende Avalanche Zener-Diode (Zener-avLED). Bevorzugt weist die Zener-avLED eine Durchbruchspannung von < 10 V auf, bevorzugter eine Durchbruchspannung von < 8 V und noch bevorzugter eine Durchbruchspannung von < 7 V. Die Vorteile der Verwendung einer Zener-avLED als Einzelphotonenquelle werden nachfolgend näher erläutert. Diese neue Art von Einzelphotonenquellen erlauben eine hohe Einzelphotonenrate bei relativ geringer Betriebsspannung auch unterhalb und im Bereich der Zener-Durchbruchspannung und zeigen bei entsprechend gewünschter Konstruktion eine bevorzugt gerichtete Abstrahlung der erzeugten Photonen ins Substratinnere und damit in Richtung des Einzelphotonendetektors. Dadurch sind Zener-avLEDs für eine Anwendung als Einzelphotonenquelle in einem iQRNG besonders geeignet.

Vorzugsweise handelt es sich bei dem Einzelphotonendetektor um einen Einzelphotonen-Lawinendioden (engl. "Single Photon Avalanche Diodes, SPADs"). Darunter werden Detektoren verstanden, die aufgrund ihrer besonders hohen Empfindlichkeit bei hoher Verstärkung und geringem (Dunkel)Rauschen prinzipiell dazu in der Lage sind, einzelne Photonen detektieren und nachweisen zu können.

Eine Hauptidee der vorliegenden Erfindung liegt somit darin, durch eine Anordnung einer Zener-avLED und einer SPAD übereinander in einem gemeinsamen Halbleitersubstrat einen besonders kompakten und sicheren integrierten QRNG zur Verfügung zu stellen.

Ein Ansatz zur aufgabengemäßen Verbesserung der aus dem Stand der Technik bekannten iQRNG besteht dabei in der Auswahl einer entsprechend breiten Technologieplattform. Für SoC-Designs mit einem möglichst breiten Spektrum an möglichen Anwendungen bieten integrierte Schaltungen in der Bipolar-CMOS-DMOS-Technologie (BCD-Technologie) auf Silizium ein großes Potential. In BCD-Technologie konnten auch bereits erfolgreich hocheffiziente SPADs demonstriert und realisiert werden. Dabei erlaubt die BCD-Technologie eine besonders effektive und optimierte Integration dieser SPADs mit einer Vielzahl von weiteren funktionalen Gruppen wie etwa digitalen und analogen Schaltungskomponenten, besonders energieeffizienten digitalen Speicher- und Schaltelementen, allgemeiner Leistungs- und Treiberelektronik sowie von Detektor- und Sensorbauteilen.

Die im Stand der Technik bekannten Silizium-basierten SPS können im Prinzip durchaus auch in BCD-Technologien implementiert werden. Aufgrund der ungerichteten Abstrahlung der Photonen sowie einer üblicherweise direkt oberflächennah erfolgenden Implementierung sind solche Si-LEDs jedoch zur Realisierung besonders effizienter und vor Angriffen geschützter iQRNGs nicht optimal. Die oberflächennahe Implementierung bedingt auch zumeist eine Degradation für den Fall einer im Avalanche-Betrieb genutzten Si-LED. Da Silizium als indirekter Halbleiter nur schlecht zur Erzeugung von Photonen geeignet ist und diese im Allgemeinen nur durch weitere Prozesse über eine zusätzliche Wechselwirkung mit dem Kristallgitter generiert werden können, ist die Auswahl an möglichen alternativen Photonenquellen auf Basis von Silizium allerdings stark eingeschränkt.

Bei der Untersuchung von in einer BCD-Technologie in unterschiedlichen Schichten durch entsprechende p-n-Übergänge bereitgestellten Zener-Dioden, welche für einen dauerhaften Arbeitspunkt selbst im Durchbruchbereich optimiert sind, wobei eine oberflächennahe Zener-Diode als Emitter und eine darunter liegende einfache p-n-Diode ohne Vorspannung (engl. "zero bias") als Detektor betrieben wurde, konnte durch die Erfinder gezeigt werden, dass in dieser Konfiguration entgegen der allgemeinen Erwartung des Fachmanns an der Zener-Diode im Avalanche-Betrieb bei der Durchbruchspannung starke Elektrolumineszenz mit einer Effektivität von mindestens 0,03 % beobachtet werden kann. Entsprechende Zener-Dioden sind im Stand der Technik üblicherweise nicht für den Betrieb als optoelektronisches Bauelement (LED) vorgesehen.

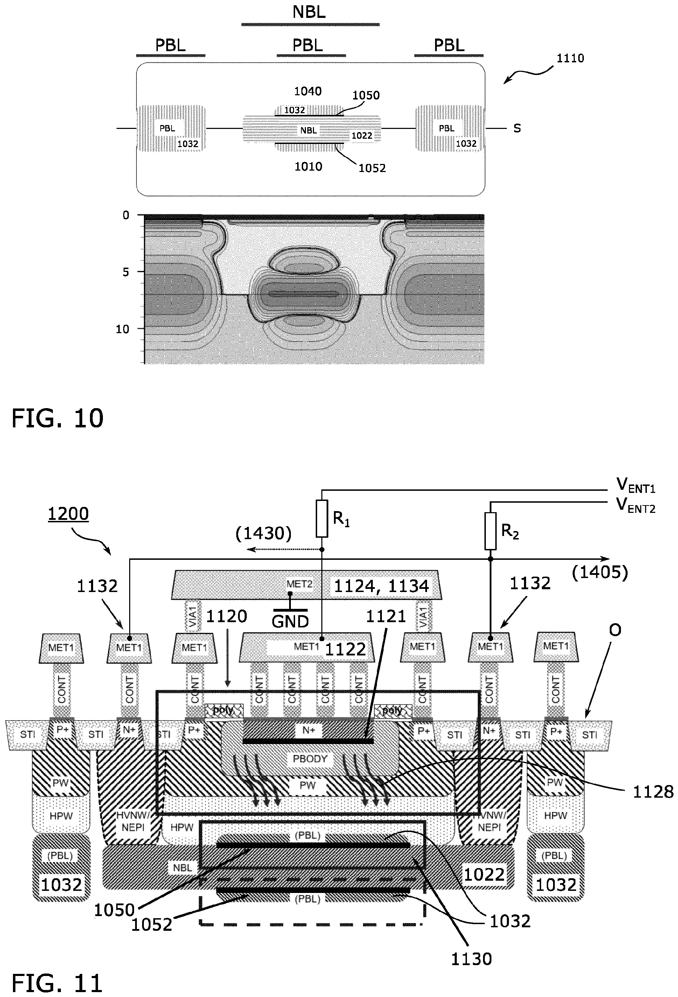

Insbesondere werden die erzeugten Photonen bevorzugt in Richtung der unteren p-n-Diode hin emittiert, welche somit nahezu alle emittierten Photonen detektieren kann, was über einen Photostrom auch in der erfinderischen Struktur nachgewiesen werden kann (vgl. FIGs. 11 bis 14 mit zugehöriger Figurenbeschreibung). Es zeigte sich somit, dass die untersuchte Zener-Diode im Bereich der Durchbruch-/Zener-Spannung eine zwar geringe, aber doch durchaus signifikante Effizienz (ca. ein detektiertes Photon pro 3000 Elektronen des Zener-Diodenstroms) aufweist und daher als Einzelphotonenquellen für die Realisierung von QRNGs in auf Silizium basierenden BCD-Technologie hervorragend geeignet erscheinen. Vor allem die bevorzugte Abstrahlung in Richtung des Detektors bietet gegenüber der isotropen Abstrahlung herkömmlicher in iQRNGs verwendeter Photonenquellen deutliche Vorteile. Dabei ist das in der CMOS-Technologie übliche Silizid zur Darstellung von verringerten Kontaktwiderständen zwischen den Metall-Kontakten und dem Halbleiter Silizid einerseits lichtdicht und andererseits spiegelnd glatt, so dass auch ursprünglich nach oben ausgesandte Photonen am Silizid-Spiegel zurück ins Innere des Substrats reflektiert werden können. Entsprechend ausgebildete und als SPS betriebene Zener-Dioden im Avalanche-Betrieb werden daher im Folgenden im Gegensatz zu den aus dem Stand der Technik bekannten Si-LEDs auch als lichtemittierende Avalanche Zener-Diode (engl.: "Avalanche Light Emitting Zener-Diode, Zener-avLED") bezeichnet.

Die in der verwendeten BCD-Technologie bereitgestellten Zener-avLED emittieren Photonen mit Wellenlängen aus dem sichtbaren Spektralbereich und weisen dabei eine relative geringe Zener-Betriebsspannung von zumeist kleiner als 8 V auf. Da die Abstrahlung einer Zener-avLED zudem typischerweise derart gerichtet ist, dass die Photonen bevorzugt in vertikaler Richtung, d. h. von der Oberfläche weg ins Substrat hinein emittiert werden, kann zudem bei einer Anwendung in einem iQRNG eine wesentlich stärke Isolation der SPS sowie der erzeugten Photonen gegenüber der Umgebung des Halbleitermaterials erreicht werden und ein Abgreifen oder Injizieren von Photonen an der Detektoroberfläche wird deutlich erschwert. Bei geeigneter Ausbildung der zu einem iQRNG gehörenden SPAD kann zudem die Effizienz der Zufallszahlenerzeugung deutlich erhöht und eine unkontrollierte Photonenausbreitung im Halbleitermaterial weitgehend unterbunden werden.

Die zweite wesentliche Komponente zum Aufbau eines kompakten QRNG ist daher die Auswahl eines entsprechend angepassten SPAD-Designs. Typischerweise werden diese in BCD-Technologien ebenfalls oberflächennah durch entsprechende Ausbildung von p- oder n-Wannen realisiert. Solche oberflächennahen SPADs sind mit den in CMOS-Technologie realisierten SPADs im Stand der Technik durchaus vergleichbar. Im Prinzip wäre somit der aus der EP 3 529 694 B1 bekannte iQRNG mit den obenstehend beschriebenen Zener-avLEDs auch in BCD-Technologien realisierbar. Jedoch emittieren die Zener-avLEDs wie obenstehend bereits beschrieben die Photonen mit Vorteil vorzugsweise in Richtung in das Substrat hinein. Eine aus dem Stand der Technik bekannte Nebeneinanderanordnung von einer Zener-avLED als SPS und einer oberflächennahen SPAD ließe sich zwar grundsätzlich, aber nicht unbedingt effektiv umsetzen. Bei der Verwendung von Zener-avLEDs ist es zweckmäßig die zugehörige SPAD daher unterhalb der Zener-avLED anzuordnen.

Die BCD Technologie ermöglicht neben der Implementierung von konventionellen n-SPADs und p-SPADs auch die Umsetzung völlig neuartiger SPAD-Konzepte, u. a. durch die Nutzung tiefliegender n- oder p-dotierten Schichten in einem BCD-Substrat.

Dabei konnte durch ein erst kürzlich ebenfalls von den Erfindern entwickeltes Verfahren zur Erzeugung tiefliegender p-n-Übergänge in einem BCD-Prozess zur Bereitstellung eines entsprechenden BCD-Substrats mit tiefliegenden p-n-Übergängen eine darauf basierende, besonders effiziente, tiefliegende Einzelphotonen-Lawinendiode ("deepSPAD") realisiert werden, welche auf einfache Weise unmittelbar unterhalb einer zur Bereitstellung von Einzelphotonen eingerichteten Zener-avLED angeordnet werden kann. Die Kombination aus einer Zener-avLED in Kombination mit einer tiefliegenden SPAD stellt somit im Gegensatz zu einer auf CMOS-Technologie basierenden horizontalen Integration eines QNRG gemäß Stand der Technik die wesentlichen Komponenten eines vollständig in BCD-Technologie vertikal integrierten QRNG bereit.

Durch die vertikale Anordnung einer Zener-avLED als Emitter und einer mittels extrem tiefliegender p-n-Übergänge realisierten deepSPAD als Empfänger kann in BCD-Technologien ein miniaturisierter, auf einem monolithischen Silizium-Die basierender Quanten-Zufallszahlgenerator mit hocheffizienter optischer Kopplung, hoher Angriffssicherheit sowie geringer Betriebsspannung realisiert werden. Damit stellt das hier vorgestellte iQRNG-Design auf BCD-Basis eine optimale Lösung zur Bereitstellung eines beschriebenen iQRNG dar. Insbesondere kann durch die vertikale 3D-Integration die Kompaktheit eines iQRNG weiter erhöht und der Flächenverbrauch gegenüber herkömmlichen lateralen 2D-Designs bei gleichzeitiger Steigerung der Effizienz reduziert werden.

Vorzugsweise ist ein beschriebener iQRNG daher in einem BCD-Substrat in BCD-Technologie ausgebildet.

Vorzugsweise umfasst das BCD-Substrat dabei ein Trägersubstrat; und eine auf dem Trägersubstrat aufgewachsene epitaktische Schicht, wobei zwischen dem Trägersubstrat und der epitaktischen Schicht durch eine Diffusion von in eine Oberfläche des Trägersubstrats unterhalb der epitaktischen Schicht eingebrachten Dotierstoffen ein in der epitaktischen Schicht liegender tiefliegender p-n-Übergang erzeugt wurde.

Bei dem Trägersubstrat kann es sich bevorzugt um ein p-Substrat handeln. Es können jedoch auch n-Substrate oder intrinsische Substrate verwendet werden. Bei dem Substratmaterial kann es sich insbesondere um Silizium handeln. Die Verfahren sind jedoch prinzipiell auch für andere Halbleitermaterialien adaptierbar. Ein typischer Dotierstoff zur Ausbildung eines p-Gebiets ist Bor. Zur Ausbildung eines n-Gebiets kann Phosphor (P), Arsen (As) oder Antimon (Sb) verwendet werden. Dabei diffundiert beispielsweise in Silizium Bor als Dotierstoff deutlich weiter aus als die schweren Donatoren (P, As oder Sb). Zudem kann festgestellt werden, dass dabei die erzeugten n-Gebiete aufgrund der höheren verwendeten Dosen weitgehend dominant sind, d. h. ein bereits mit Phosphor dotiertes n-Gebiet kann auch nach einem zusätzlichen Einbringen von Bor seinen vorhandenen Leitungstyp beibehalten. Für die Bereitstellung der tiefliegenden p-n-Übergänge kann mitunter auf zusätzliche Masken-, Lithographie- und Epitaxie-Schritte im üblichen BCD-Prozess verzichtet werden.

Vorzugsweise weisen der erste und der zweite Dotierstoff unterschiedliche Diffusionseigenschaften im Trägersubstrat und/oder in der epitaktischen Schicht auf. Bevorzugt weist der zweite Dotierstoff eine höhere Beweglichkeit im Trägersubstrat und/oder in der epitaktischen Schicht auf als der erste Dotierstoff. Vorzugsweise erfolgt das Einbringen des ersten Dotierstoffs und/oder des zweiten Dotierstoffs maskenlos oder über ein Maskenverfahren. Zum maskenlosen Einbringen kann beispielsweise ein direktes lonenstrahlschreibverfahren verwendet werden. Bei einem Maskenverfahren erfolgt das Einbringen mit Hilfe einer zuvor bereitgestellten Maske, wobei das Einbringen beispielsweise über ein chemisches oder physikalisches Abscheideverfahren oder ebenfalls mittels eines lonenstrahlschreibverfahrens erfolgt. Vorzugsweise überlagert unmittelbar nach dem Einbringen des zweiten Dotierstoffs in einer Aufsicht auf die Oberfläche des Trägersubstrats das erste Gebiet oder das zweite Gebiet vollständig das jeweils anderen Gebiet. Vorzugsweise handelt es sich bei dem ersten Bereich um eine tiefliegende n-Schicht (NBL-Schicht) und bei dem zweiten Gebiet um eine tiefliegende p-Schicht (PBL-Schicht).

Vorzugsweise bildet der Einzelphotonendetektor in einem Bereich um den tiefliegenden p-n-Übergang ein Lawinengebiet aus und umfasst ein Absorptionsgebiet zur Umwandlung von Photonen in Elektronen-Lochpaare, wobei sich das Absorptionsgebiet unmittelbar an den tiefliegenden p-n-Übergang anschließt.

Bevorzugt ist, dass der tiefliegende p-n-Übergang zumindest teilweise zwischen einer tiefliegenden n-Schicht als Kathode und einer sich unmittelbar an die tiefliegende n-Schicht anschließenden tiefliegenden p-Schicht ausgebildet ist. Ebenfalls bevorzugt ist, dass das Absorptionsgebiet sich unmittelbar an die tiefliegende p-Schicht anschließt und im Wesentlichen als p-Gebiet ausgebildet ist. Im Wesentlichen bedeutet dabei, dass das Absorptionsgebiet teilweise auch als intrinsisches Gebiet ausgebildet sein kann. Weiterhin bevorzugt ist, dass eine als p⁺-Gebiet ausgebildete Anode sich unmittelbar an das Absorptionsgebiet anschließt.

Vorzugsweise wird ein unterhalb des in der epitaktischen Schicht liegenden tiefliegenden p-n-Übergangs des Einzelphotonendetektors ausgebildeter zweiter tiefliegender p-n-Übergang (z. B. in dem Trägersubstrat) als zusätzlicher Photodetektor zur Überwachung auf äußere Angriffe genutzt. Durch das besagte Verfahren zur Erzeugung tiefliegender p-n-Übergänge in einem BCD-Prozess ergibt sich nämlich bei einigen Ausführungsformen unterhalb des ersten p-n-Übergangs ein darunterliegender zweiter p-n-Übergang (siehe FIG. 10 mit zugehöriger Figurenbeschreibung). Dieser kann aufgrund seiner weitgehend identischen elektronischen Eigenschaften ebenfalls als Photodetektor bzw. Einzelphotonen-Lawinendiode konfiguriert werden. Da dieser zusätzliche Photodetektor somit unterhalb der eigentlichen QRNG-Anordnung tief vergraben im Halbleitermaterierial angeordnet ist, kann dieser eine Schutzfunktion gegenüber von der Rückseite des Substrats injizierten Photonen bereitstellen. Diese können in unmittelbarer Nähe zum QRNG in einem breiten Winkelbereich detektiert werden. Dadurch lassen sich äußere Angriffe mit hoher Wahrscheinlichkeit erkennen.

Des Weiteren kann der zusätzliche Photodetektor dazu eingerichtet sein, über eine zusätzliche Auswerteelektronik eine Überwachung der Photonenzählrate zu ermöglichen. Unter ansonsten gleichbleibenden Betriebsbedingungen sollten die Photonenquelle und der zugehörige Einzelphotonendetektor abseits der zufälligen statistischen Schwankungen bei den detektieren Photonenereignissen eine in etwa konstante Photonenzählrate aufweisen. Da jedoch eventuell nicht alle von der Photonenquelle emittierten Photonen auch vom zugehörige Einzelphotonendetektor erfasst werden und auch externe natürliche Einflüsse (z. B. kosmische Strahlen) und künstliche Einstrahlungen (z. B. Funkquellen) auch vereinzelte Detektionsereignisse am zusätzlichen Photodetektor verursachen können, wird mit einer gewissen Wahrscheinlichkeit auch der zweite Photodetektor eine in etwa konstante Hintergrundzählrate aufweisen. Abweichungen von diesem langfristigen statistischen Mittelwert können daher auf einen möglichen Fehler innerhalb des iQRNG oder eine externe Störung, etwa durch einen Angreifer, hinweisen. Durch eine erfasste Veränderung der Hintergrundzählrate am zweiten Photodetektor können dabei sowohl aktive Eingriffe eines Angreifers (z. B. Einstrahlung zusätzlicher Photonen zur Änderung bzw. Beeinflussung der Photonenstatistik) als auch passive Angriffe, etwa durch das gezielte Abdünnen einer Abschirmung zur Erhöhung der Transmission von einzelne Photonen nach Außen (was u. U. jedoch auch eine zusätzliche Einstrahlung von Umgebungslicht aus dieser Richtung verursachen kann).

Da es sich auch bei den Hintergrundzählraten um statistische Größen handelt, bietet sich für die Auswertung im Hinblick auf mögliche Abweichungen von zu erwartenden Normalwerten eine Analyse auf der Grundlage von Methoden des maschinellen Lernens an. Insbesondere kann zur Auswertung auf Methoden der künstlichen Intelligenz zurückgegriffen werden.

Insbesondere ist die Verwendung mindestens eines entsprechend trainierten künstlichen neuronalen Netzwerks (KNN) zur Feststellung eines Angriffs und/oder zur Identifizierung möglicher Fehlerquellen und Ereignisse bevorzugt. In der Literatur finden sich eine Vielzahl von unterschiedlichen Arten von KNN, eine Auswahl geeigneter Methoden kann der Fachmann anhand der jeweiligen Erfordernisse treffen.

In einigen Ausführungsformen kann das mindestens eine KNN ein stochastisches neuronales Netz (SNN) umfassen, welches für die gleichen Photonenzählraten variable Ausgaben liefern kann. Hiermit lassen sich Fehler des Netzes beruhend auf den vorhandenen Daten oder einem nicht hinreichenden Training des Netzwerkes untersuchen. Beispielsweise können so auch Abweichungen identifiziert werden, welche nicht vom Abweichungsraum eines Trainingsdatensatzes abgebildet werden (Out-of-Distribution).

Eine weitere mögliche Anwendung des tiefliegenden zweiten p-n-Übergangs als zusätzlicher Photodetektor kann in der Bereitstellung von unabhängigen Zufallszahlen auf der Basis einer weiteren, noch unterhalb des tiefliegenden zweiten p-n-Übergangs bzw. auf oder nahe der Rückseite des Substrats angeordneten unabhängigen Photonenquelle liegen. Vorzugsweise ist hierzu der tiefliegende zweite p-n-Übergang analog zum darüber angeordneten tiefliegenden ersten p-n-Übergang ebenfalls als Einzelphotonendetektor bzw. SPAD eingerichtet. Da auch die Absorption von Photonen im Bereich des ersten Einzelphotonendetektors einer Wahrscheinlichkeitsverteilung unterliegen kann und abhängig von der konkreten Realisierung der Anordnung der einzelnen Elemente durchaus auch einzelne Photonen der eigentlichen Photonenquelle des erfindungsgemäßen iQRNG bis in den Bereich des tiefliegenden zweiten p-n-Übergangs gelangen können, ist es auch möglich, dass diese ebenfalls als Grundlage für eine Bereitstellung von Quantenzufallszahlen, beispielsweise als zusätzlicher unabhängiger iQRNG, genutzt werden können.

Unabhängig von der Nutzung eines tiefliegenden zweiten p-n-Übergangs als zusätzlicher Photodetektor kann ein erfindungsgemäßer iQRNG (bzw. ein entsprechender Quantenzufallsgenerator) jedoch auch einen von den beschriebenen tiefliegenden p-n-Übergängen unabhängigen weiteren Photodetektor umfassen. Vorzugsweise handelt es sich bei dem weiteren Photodetektor um einen ebenfalls in den erfindungsgemäßen iQRNG integrierten Photodetektor, dieser kann jedoch auch hybrid mit dem erfindungsgemäßen iQRNG verbunden sein. Besonders bevorzugt handelt es sich bei dem weiteren Photodetektor ebenfalls um einen Einzelphotonendetektor, z. B. eine SPAD. Der zusätzlicher Photodetektor kann analog zur oben beschriebenen Verwendung des tiefliegenden zweiten p-n-Übergangs ebenfalls zur Überwachung der Funktionsfähigkeit und der Sicherheit eines erfindungsgemäßen iQRNG verwendet werden.

Vorzugsweise sind der tiefliegende erste p-n-Übergang und der tiefliegende zweite p-n-Übergang über ein gemeinsames inneres Terminal, beispielsweise einer gemeinsamen Anode oder Kathode, miteinander verbunden. Typischerweise werden zum Betrieb als Einzelphotonendetektor eingerichtete p-n-Übergang an einer Seite des p-n-Übergangs unmittelbar über das Substrat angeschlossen. Aufgrund einer insbesondere bei BCD-Technologien jedoch üblichen Abschirmung bzw. Isolation der Strukturen und Schaltungen vom Substrat, werden häufig entsprechende Terminals zur Kontaktierung an die Substartoberfläche gelegt. Bei einer erfindungsgemäßen Ausbildung einer p-n-Übergangs-Doppelstruktur ergibt sich jedoch unmittelbar ein gemeinsamer Terminalbereich (Anode oder Kathode), der eine gemeinsame Ansteuerung über eine einzelne Kontaktierung, z. B. an der Substartoberfläche, ermöglicht.

Vorzugsweise ist die Ober- und/oder Unterseite des Substrats im Bereich des iQRNG an einer Oberfläche verspiegelt oder diese umfasst eine lichtblockierende Schicht. Eine Verspiegelung der Oberflächen eines Substrats (z. B. mittels Metallisierung oder dem Aufbringen dichroitischer Schichten) sowie das Aufbringen einer lichtblockierenden Schicht sind im Stand der Technik bekannt und wurden obenstehend bereits diskutiert. Auch bei einem beschriebenen iQRNG können diese Ansätze zu einer Abschirmung gegenüber äußeren Photonen ("Abschattung") sowie zur Erhöhung der Effizienz durch Rückreflektion der von der zugehörigen Photonenquelle erzeugten Photonen genutzt werden. Alternativ oder zusätzlich kann zudem eine entsprechende Verkapselung im Bereich des iQRNG oder das Umgeben dieses Bereichs mit einer Metallbox erfolgen.

Vorzugsweise ist die Oberfläche des Substrats im Bereich des iQRNG mit einer Silizid-Schicht und oberhalb mit einer Metallisierung bedeckt. Bevorzugt ist die Metallisierung im Bereich des iQRNG geschlossen. Die Metallisierung kann als Verspiegelung für den Innenbereich und/oder als wellenlängenunabhängige Abschattung für äußeren Photonen wirken. In gleicher Weise gilt das für eine ausgebildete Silizid-Schicht.

Vorzugsweise wird ein Austreten von durch die Photonen- bzw. Einzelphotonenquelle bereitgestellten Photonen an der Oberfläche des Substrats und/oder der Rückseite des Substrats durch eine Kombination von jeweils mindestens einem Element aus Metallabdeckungen, Seitenwandkontakten und Vias verhindert. Durch die genannten Elemente kann eine weitgehend vollständige Abschirmung bzw. Verkapselung des iQRNG erreicht werden, wodurch neben einer Abschirmung nach außen auch eine hohe Immunität gegenüber äußeren Störungen gewährleistet werden kann.

Im Hinblick auf mögliche Angriffsszenarien sind jedoch neben einer rein optischen Einflussnahme bzw. einem Auslesen von emittierten Photonen noch weitere Zugriffswege von außen denkbar. Ein weiterer Aspekt der vorliegenden Erfindung besteht daher darin, einen erfindungsgemäßen iQRNG, welcher aufgrund seiner spezifischen Anordnung der umfassten Photonenquelle und des zugehörigen Einzelphotonendetektors bereits eine gegenüber dem Stand der Technik deutlich erhöhte Sicherheit bietet, noch weiter gegen unberechtigte Zugriffe und eine Einflussnahme von außen, beispielsweise durch Beobachter bzw. Angreifer, zu härten. Auf eine mögliche optische Abschirmung wurde obenstehend bereits eingegangen, weitere Angriffe könnten beispielsweise auf der Basis einer gezielten Auswertung oder Beeinflussung chemischen oder elektronischer Eigenschaften der erfindungsgemäßen iQRNG erfolgen.

Wie eingangs bereits ausgeführt, nutzen Quanten-Zufallszahlengeneratoren die Prinzipien der Quantenmechanik, um echte Zufallszahlen zu erzeugen, die in der Kryptografie und anderen sicherheitskritischen Anwendungen verwendet werden können. Diese Zufallszahlen sind von entscheidender Bedeutung, da sie die Grundlage für sichere Verschlüsselungsschlüssel und andere kryptografische Prozesse bilden. Trotz ihrer theoretischen Sicherheit können QRNGs jedoch anfällig für verschiedene Arten von Seitenkanalangriffen sein, die die Integrität und Vertraulichkeit der generierten Zufallszahlen gefährden können.

Ein möglicher Angriffsvektor ist die elektromagnetische Abstrahlung. QRNGs können elektromagnetische Signale aussenden, die von einem Angreifer abgefangen und analysiert werden können. QRNGs können elektromagnetische Signale aussenden, die von einem Angreifer abgefangen und analysiert werden können. Diese Signale könnten Informationen über die internen Zustände des QRNGs preisgeben, was es einem Angreifer ermöglichen könnte, die generierten Zufallszahlen zu rekonstruieren oder vorherzusagen. Um solche Angriffe zu verhindern, sollten QRNGs gut abgeschirmt und gegen elektromagnetische Abstrahlung geschützt werden.

Ein weiterer Angriffsvektor ist der Stromverbrauch. Der Stromverbrauch eines QRNGs kann variieren, je nachdem, welche Zufallszahlen generiert werden. Ein Angreifer könnte diese Schwankungen messen und daraus Rückschlüsse auf die erzeugten Zufallszahlen ziehen.

Dies könnte durch den Einsatz von hochsensiblen Strommessgeräten geschehen, die in der Lage sind, kleinste Veränderungen im Stromverbrauch zu detektieren. Um solche Angriffe zu verhindern, sollten QRNGs so gestaltet werden, dass ihr Stromverbrauch unabhängig von den generierten Zufallszahlen konstant bleibt.

Auch die Temperaturabhängigkeit kann eine Rolle spielen. Die Leistung von QRNGs kann temperaturabhängig sein, was bedeutet, dass Änderungen der Umgebungstemperatur die Zufallszahlengenerierung beeinflussen könnten. Ein Angreifer könnte die Temperatur des Geräts manipulieren, um die Zufallszahlen zu beeinflussen oder vorherzusagen. Um solche Angriffe zu verhindern, können QRNGs in temperaturkontrollierten Umgebungen betrieben werden und über Mechanismen verfügen, die ihre Leistung unabhängig von Temperaturschwankungen stabil halten.

Bei optischen QRNGs wie einem erfindungsgemäßen iQRNG, könnte ein Angreifer auch versuchen, die Lichtquelle zu beeinflussen oder die Detektoren zu überwachen, um die generierten Zufallszahlen zu manipulieren. Dies könnte durch das Einbringen von zusätzlichem Licht oder durch das Blockieren von Licht geschehen. Um solche Angriffe zu verhindern, sollten optische QRNGs gut abgeschirmt und gegen äußere Einflüsse geschützt werden.

Weiterhin gibt es sogenannte Timing-Angriffe. Durch die Messung der Zeit, die ein QRNG für die Generierung von Zufallszahlen benötigt, könnte ein Angreifer Muster erkennen und die Zufallszahlen vorhersagen. Dies könnte durch den Einsatz von hochpräzisen Zeitmessgeräten geschehen, die in der Lage sind, kleinste Unterschiede in der Generierungszeit zu detektieren. Um solche Angriffe zu verhindern, sollten QRNGs so gestaltet werden, dass ihre Generierungszeit unabhängig von den erzeugten Zufallszahlen konstant bleibt.

Chemische Angriffe auf halbleiterintegrierte QRNGs sind ein bisher weniger erforschtes, aber potenziell durchaus ernstzunehmendes Risiko. Diese Angriffe könnten beispielsweise darauf abzielen, die physikalischen Eigenschaften der Halbleiterkomponenten zu verändern, um die Zufallszahlengenerierung zu beeinflussen oder zu stören.

Ein möglicher Ansatz für chemische Angriffe besteht darin, die Halbleitermaterialien durch chemische Reaktionen zu verändern. Dies könnte durch die Einwirkung von korrosiven Substanzen geschehen, die die Integrität der Halbleiterstrukturen beeinträchtigen. Solche Angriffe könnten die Leistung der QRNGs beeinträchtigen, indem sie die Effizienz der Lichtquellen oder Detektoren verringern oder die elektrischen Eigenschaften der Schaltkreise verändern.

Ein weiterer potenzieller chemischer Angriff könnte die gezielte Dotierung der Halbleitermaterialien umfassen. Durch das Einbringen von Fremdatomen in die Halbleiterschicht könnte ein Angreifer die elektronischen Eigenschaften des Materials verändern und somit die Zufallszahlengenerierung beeinflussen. Dies könnte zu einer Vorhersagbarkeit der generierten Zufallszahlen führen, was die Sicherheit der QRNGs erheblich beeinträchtigen würde.

Obwohl chemische Angriffe auf QRNGs derzeit eher theoretischer Natur sind und in der Praxis noch nicht weit verbreitet sind, sollten diese potenziellen Bedrohungen mit berücksichtigt werden und es sollten Maßnahmen ergreifen werden, um die chemische Stabilität und Integrität der QRNGs zu gewährleisten. Dies kann beispielsweise durch den Einsatz von Schutzbeschichtungen, die Auswahl chemisch resistenter Materialien und die Implementierung von Überwachungsmechanismen zur Erkennung von chemischen Veränderungen geschehen.

Diese potentiellen Angriffsszenarien zeigen, dass selbst hochmoderne QRNGs nicht vollständig vor Seitenkanalangriffen geschützt sind. Es ist daher wichtig, zusätzliche Sicherheitsmaßnahmen zu implementieren, um die Integrität und Vertraulichkeit der generierten Zufallszahlen zu gewährleisten. Dazu gehören unter anderem die physische Abschirmung der Geräte, die Implementierung von Mechanismen zur Stabilisierung des Stromverbrauchs und der Generierungszeit sowie der Betrieb in kontrollierten Umgebungen.

Bei einem erfindungsgemäßen iQRNG können die besagten Abschirmungen unmittelbar über das realisierte Struktursystem selbst bzw. die vergrabene Anordnung der Entropiequelle im Inneren eines Substrats erreicht werden. Eine Abschirmung sowohl gegen elektromagnetische als auch optische Ab- bzw. Einstrahlung kann beispielsweise durch eine gemeinsame und durchgehende Metallisierung der Oberfläche des Substrats oberhalb des gesamten Bauraums des iQRNGs (bzw. der zugehörigen Entropiequelle) erreicht werden. An der entsprechenden Stelle an der Unterseite des Substrats kann ebenfalls eine Metallisierung zur Abschirmung des unteren Bauraums vorgenommen werden. Diese einzelnen Metallisierungen können dabei neben Ihrer Schirmungsfunktion auch gleichzeitig eine elektrische Kontaktierung einzelner Bereiche des iQRNG ermöglichen. Vorzugsweise können dabei zur Erhöhung der Schichtdicke mehrere Metallisierungsebenen übereinander angeordnet werden (z. B. 12-15 Lagen).

Metallische Mehrschichtlagen bietet in der Regel eine bessere Abschirmwirkung als eine einfache Metalllage. Dies liegt daran, dass mehrere Schichten aus unterschiedlichen oder gleichen Metallen kombiniert werden können, um die Abschirmwirkung zu maximieren. Ein Grund dafür ist, dass jede Metallschicht elektromagnetische Wellen reflektieren und absorbieren kann. Durch die Kombination mehrerer Schichten wird die Wahrscheinlichkeit erhöht, dass die Wellen mehrfach reflektiert und absorbiert werden, was die Gesamtabschirmung verbessert. Unterschiedliche Metalle haben unterschiedliche Abschirmungseigenschaften. Durch die Kombination von Metallen mit komplementären Eigenschaften kann eine effektivere Abschirmung erreicht werden. Zum Beispiel könnte eine Schicht aus einem hochleitfähigen Metall wie Kupfer mit einer Schicht aus einem ferromagnetischen Material wie Nickel kombiniert werden. Mehrere Schichten können auch helfen, die Durchdringungseffekte zu dämpfen, die bei einer einzelnen Schicht auftreten könnten. Dies ist besonders wichtig bei hochfrequenten elektromagnetischen Wellen, die dazu neigen, dünne Metallschichten zu durchdringen. Mehrschichtige Abschirmungen bieten zudem eine zusätzliche Sicherheitsebene. Wenn eine Schicht beschädigt oder korrodiert wird, können die anderen Schichten weiterhin eine effektive Abschirmung bieten.

Anstatt einer oder mehrerer Metallschichten kann zur Abschirmung gegenüber elektromagnetischer Strahlung (inklusive Photonen) auch eine Schicht aus Polysilizium auf die Oberfläche des Substrats im Bereich des iQRNG aufgebracht werden. Polysilizium wird häufig in der Halbleiterindustrie verwendet, insbesondere bei der Herstellung von Transistoren und Solarzellen. Es hat zwar nicht die gleichen Abschirmungseigenschaften wie Metalle und ist zudem für Photonen bei gleicher Dicke zumeist optisch transparenter, es handelt sich aber um ein prozesstechnologisch günstigeres Verfahren, welches deutlich einfacher umzusetzen ist.

Des Weiteren kann eine Abdeckung eines den erfindungsgemäßen iQRNG umfassenden Schaltkreises bzw. ICs (oder eines Bereichs bzw. Teils davon), zusätzlich zu den oben genannten Schichten zur Abschirmung oder als Einzelelement, bevorzugt mit einer Schicht aus Silizium-Nitrid (SiN) erfolgen. Durch eine solche Schicht kann ein bestimmter zuvor eingestellter Wasserstoffgehalt (H₂) in einem IC möglichst konstant gehalten werden, da SiN-Schichten nur eine geringe Permeabilität hierfür aufweisen. Ein konstanter Wasserstoffgehalt ist bei der Herstellung und dem Betrieb von ICs aus mehreren Gründen wichtig. Zunächst hilft Wasserstoff, Defekte in Halbleitermaterialien wie Silizium zu vermeiden. Diese Defekte können die elektrischen Eigenschaften der Halbleiterbauelemente beeinträchtigen und zu Fehlfunktionen führen. Ein konstanter Wasserstoffgehalt minimiert solche Defekte und gewährleistet die Zuverlässigkeit der ICs. Darüber hinaus wird Wasserstoff oft verwendet, um die Oberflächen von Halbleitermaterialien zu passivieren. Dies bedeutet, dass Wasserstoff an die Oberflächenatome bindet und so die Anzahl der freien Elektronen reduziert, die unerwünschte chemische Reaktionen verursachen könnten. Eine konstante Wasserstoffkonzentration stellt sicher, dass die Passivierung effektiv bleibt. Wasserstoff kann auch dazu beitragen, die Oxidation von Metallverbindungen in den ICs zu reduzieren. Oxidation kann die Leitfähigkeit von Metallverbindungen verringern und somit die Leistung der ICs beeinträchtigen. Ein konstanter Wasserstoffgehalt hilft, die Oxidation zu kontrollieren und die Leitfähigkeit der Metallverbindungen zu erhalten. Schließlich tragen Schwankungen im Wasserstoffgehalt zu Veränderungen der elektrischen Eigenschaften der Halbleitermaterialien bei. Dies kann die Leistung und Zuverlässigkeit der ICs beeinträchtigen und zudem einen chemischen Angriffsvektor öffnen. Ein konstanter Wasserstoffgehalt hilft dabei, die elektrischen Eigenschaften stabil zu halten und eine gleichbleibende Leistung zu gewährleisten.

Der seitliche Bereich um den iQRNG bzw. die umfasste Entropiequelle herum kann durch eine entsprechende Tiefendotierung des Substrats bzw. dessen Ausgestaltung als leitfähiger Bereich erfolgen. Eine solche Anordnung kann analog zu einer Metallisierung der Oberflächen des Substrats gleichzeitig zur Tiefenkontaktierung von innerhalb des Substrats liegenden Bereichen, wie beispielsweise zur Kontaktierung von vergrabenen Schichten, genutzt werden. Zur Vermeidung zusätzlicher elektromagnetischer Abstrahlungen aus diesen Strukturen heraus werden diese jedoch vorzugsweise nicht zur Übertragung von modulierten Signalen genutzt. In den in den Figuren gezeigten beispielhaften Ausführungsformen erfindungsgemäßer iQRNG ist dieser Schirmungsbereich jeweils als isolierte äußere, sich in vertikaler Richtung von der Oberfläche ausgehend in das Substrat erstreckende Tiefenstrukturen zu erkennen. In einer bevorzugten Ausführungsform eines erfindungsgemäßen iQRNG wird die "Detektorfläche" des Einzelphotonendetektors als kreisrunde Struktur ausgebildet, so dass die seitliche Abschirmung dann vorzugsweise eine geschlossene kreisringförmige Zylinderstruktur ausbildet (die Abschirmung kann jedoch beliebige, vorzugsweise seitlich geschlossene, Formen aufweisen). Eine solche Anordnung einer seitlichen Abschirmung gegenüber elektromagnetischer Strahlung wird auch als sogenannter Seal-Ring (iQRNG-Seal-Ring) bezeichnet.

Ebenfalls zur Abschirmung können die in BCD-Technologien typischerweise ausgebildeten isolierenden Wannenbereiche, hier insbesondere um die Photonenquelle und den Einzelphotonendetektor herum, eingesetzt werden. Diese werden üblicherweise zur elektrischen Isolation verschiedener Gebiete in einem Substrat genutzt, so dass beispielsweise auch unterschiedlich Bezugspotentiale (GND) in diesen Gebieten bereitgestellt werden können. Eine solche lokale Isolation wirkt jedoch auch stromsperrend für Signalübertragungen und kann bei geeigneter Ausbildung der einzelnen Wannengebiete auch eine elektromagnetische Kopplung der isolierten Gebiete untereinander effektiv unterdrücken.

Als weiteres Abschirmelement kann eine übliche Verkapselung eines erfindungsgemäßen iQRNG (bzw. eines einen oder mehrere erfindungsgemäße iQRNG umfassenden ICs) mit einem fachüblichen Vergussmaterial wir Kunststoff erfolgen. Bei dem Kunststoff kann es sich insbesondere um Duroplast handeln. Dem Duroplast kann dabei Siliziumoxid (z. B. SiO₂) zur Anpassung des thermischen Ausdehnungskoeffizienten der miteinander verbundenen Materialien hinzugegeben werden.

Vorzugsweise sind mehrere beschriebene iQRNG bzw. ein vielkanaliges QRNG-System umfassend eine Vielzahl beschriebener iQRNG auf dem gleichen Substrat realisiert. Zusammen mit einer kompakten Abschirmung der einzelnen iQRNG lassen sich dabei sehr hohe Integrationsdichten mit einer hohen Anzahl an dicht gepackten, voneinander entkoppelter iQRNG und damit insgesamt hohe effektive Zufallszahlenraten erreichen. Bei iQRNG im Stand der Technik ist die Integrationsdichte vor allem durch die strukturelle Nebeneinanderanordnung der einzelnen Komponenten beschränkt.

Vorzugsweise umfasst ein beschriebener QRNG eine elektronische Schaltung zur Generierung und Ausgabe einer digitalen Zufallszahlenfolge basierend auf der statistischen Auswertung der zeitlichen Abfolge von Signalen des Einzelphotonendetektors.

Ein weiterer Aspekt betrifft eine integrierte elektronische Schaltung (engl. "Integrated Circuit, IC"), umfassend mindestens einen beschriebenen iQRNG. Insbesondere kann es sich dabei um ICs für Anwendungen auf der Basis von sicherheitsrelevanten Chip-basierten Systemen (engl. "System on Chip, SoC") handeln.

Vorzugsweise wird ein beschriebener iQRNG dabei in einen Pad-Rahmen (auch als Pad-Rand bezeichnet) der integrierten elektronischen Schaltung platziert. Bei nicht Pad-bestimmten integrierten elektronischen Schaltungen befinden sich typischerweise im Pad-Rahmen eine Vielzahl an freien Flächen, die jedoch typischerweise nicht für digitale Schaltungen oder größere analoge Schaltungsblöcke genutzt werden können. Da ein beschriebener iQRNG aufgrund seines äußerst kompakten Aufbaus jedoch entsprechend kleinbauend ist und auch die nachfolgende Schaltungstechnik üblicherweise nur eine geringe Anzahl an Gattern umfasst, kann diese Art von QRNG dennoch in einen üblichen Pad-Rahmen integriert werden. Durch den äußerst kompakten Aufbau der beschriebenen iQRNG können dieser auch platzsparend und ohne größeren Aufwand in bereits bestehende Designs für integrierte elektronische Schaltungen implementiert werden. Dadurch wird gegenüber herkömmlichen Ansätzen zur Integration von QRNGs eine signifikante Reduzierung des Flächenverbrauchs erreicht. Die Vorteile eines beschriebenen iQRNG können dabei voll ausgeschöpft werden.

Die Vorteile eines beschriebenen iQRNG gegenüber den bekannten Implementierungen im Stand der Technik basieren vor allem auf der weiteren Miniaturisierung des gesamten Zufallszahlengeneratoraufbaus und die dadurch erreichte hochgradige Integration bzw. Miniaturisierung der erzeugten Strukturen. Aufgrund der vollständigen Isolation der SPS und der zugehörigen SPAD gegenüber der Umgebung kann die Sicherheit der Zufallszahlenerzeugung deutlich erhöht werden. Die gerichtete vertikale Abstrahlung aus der als SPS verwendeten Zener-avLED trägt ebenfalls zur Erhöhung der Sicherheit sowie zu einer wesentlichen Steigerung der Effizienz der Zufallszahlenerzeugung bei. Eine Kointegration einer geeigneten Photonenquelle und eines Einzelphotonendetektors auf dem gleichen vertikalen Layout-Querschnitt eines gemeinsamen Substrats zu realisieren, insbesondere bei Verwendung einer üblicherweise verwendeten kostengünstigen Planartechnologie (d. h. unter Prozessierung nur von einer Substratseite aus und ohne eine Verwendung von anderen aufwändigen Ansätzen, wie etwa Hybrid-Integration, z. B. via eines Chiplet-Ansatzes) ist bisher im Stand der Technik derart nicht möglich gewesen.

Ein mittels einer neuartigen BCD-Technologie bereitgestellter, unterhalb des p-n-Übergangs der SPAD ausgebildeter zweiter tiefliegender p-n-Übergang kann als zusätzlicher Photodetektor zur Überwachung von Angriffen insbesondere von der Rückseite des Substrats ausgehend genutzt werden. Dabei können die Effizienz der optischen Einkopplung in die zugehörigen SPADs sowie die Isolation und die Sicherheit durch die Nutzung von internen Metall- und Silizid-Spiegeln weiter gesteigert werden. Für die verwendeten Zener-avLED als Photonenquelle ist im Vergleich zum Stand der Technik nur eine relativ geringe Betriebsspannung von < 8 V erforderlich. Da zudem die Absorptionslänge des emittierten sichtbaren Lichts im Silizium gering (d. h. der zugehörige Absorptionskoeffizient hoch) ist, kann auch eine sehr gute optische Isolation zwischen benachbarten Elementen erzielt werden. Dies ermöglicht die Anordnung in einem Array mit hoher Zellendichte und einer daraus folgenden entsprechend hohen Erzeugungs- bzw. Entropierate.

Weitere Aspekte der vorliegenden Erfindung sind in den abhängigen Ansprüchen oder in der folgenden Beschreibung der Zeichnungen offenbart.

### Kurze Beschreibung der Figuren

Die Erfindung wird nachfolgend in Ausführungsbeispielen anhand der zugehörigen Zeichnungen erläutert. Es zeigen:
- Figur 1: ein Blockdiagramm, das einen bidirektionalen Verschlüsselungs- und Entschlüsselungsprozess mit symmetrischem Schlüssel veranschaulicht;
- Figur 2: ein Blockdiagramm, das einen bidirektionalen Verschlüsselungs- und Entschlüsselungsprozess mit asymmetrischem Schlüssel veranschaulicht;
- Figur 3: ein Blockdiagramm, das einen digitalen Zertifizierungsprozess von einer vertrauenswürdigen Autorität veranschaulicht;
- Figur 4: ein Blockdiagramm eines Computersystems, in das ein Ausführungsbeispiel der vorliegenden Erfindung aufgenommen ist;
- Figur 5: ein Blockdiagramm einer Ausführungsform der vorliegenden Erfindung;
- Figur 6: ein Ablaufdiagramm, das das Verfahren zum Implementieren eines Schlüsselpaares und eines digitalen Zertifikats in einer integrierten Schaltungskomponente veranschaulicht;
- Figuren 7A-7C: Ablaufdiagramme, die die Vorgänge eines ersten Hardware-Agenten veranschaulichen, der eine Kommunikation mit einem zweiten Hardware-Agenten herstellt, um ein Token mit gültiger Lizenz zwischen dem zweiten Hardware-Agenten, der lizenzierte Rechte aufweist, und dem ersten Hardwareagenten zu übermitteln;
- Figur 8: eine schematische Darstellung einer ersten Ausführungsform eines iQRNG gemäß Stand der Technik in der Aufsicht;
- Figur 9: eine schematische Darstellung einer zweiten Ausführungsform eines iQRNG gemäß Stand der Technik in einer Seitenansicht;
- Figur 10: eine schematische Darstellung eines mit einem Verfahren zur Bereitstellung tiefliegender p-n-Übergänge in einem BCD-Prozess bereitgestellten BCD-Substrats und eine TCAD-Darstellung der resultierenden Dotierstoffverteilung;
- Figur 11: eine schematische Darstellung einer beispielhaften ersten Ausführungsform eines beschriebenen iQRNG;
- Figur 12: eine schematische Darstellung einer beispielhaften zweiten Ausführungsform eines beschriebenen iQRNG;
- Figur 13: eine schematische Darstellung einer beispielhaften dritten Ausführungsform eines beschriebenen iQRNG;
- Figur 14: graphische Darstellung der Abhängigkeit des a) SPAD-Stroms und b) des Verhältnisses zwischen SPAD-Strom und Zener-Strom in Abhängigkeit von der Zener-Sperrspannung bei verschiedenen SPAD-Sperrspannungen (kleiner, gleich, größer der Durchbruchspannung) innerhalb eines beschriebenen iQRNGs;
- Figur 15: eine schematische Darstellung einer beispielhaften elektronischen Schaltung eines Quantenzufallsgenerators zur Generierung und Ausgabe einer digitalen Zufallszahlenfolge; und
- Figur 16: eine schematische Darstellung eines beispielhaften Layouts einer integrierten elektronischen Schaltung mit einem beschriebenen iQRNG im Pad-Rahmen in der Aufsicht.

### Detaillierte Beschreibung der Figuren

Es werden nun detaillierte Ausführungsformen beschrieben, die beispielhaft in den beigefügten Zeichnungen dargestellt sind. Die Wirkungen und Merkmale dieser Ausführungsformen werden unter Bezugnahme auf die beigefügten Zeichnungen beschrieben. In den Zeichnungen bezeichnen gleiche Bezugsziffern, gleiche Elemente und auf redundante Beschreibungen wird verzichtet. Die vorliegende Offenbarung kann in verschiedenen Formen verwirklicht werden und ist nicht so zu verstehen, dass sie nur auf die hier dargestellten Ausführungsformen beschränkt ist. Vielmehr sind diese Ausführungsformen Beispiele, damit diese Offenbarung gründlich und vollständig ist und dem Fachmann die Aspekte und Merkmale der vorliegenden Offenbarung vollständig vermittelt.

Verfahren, Elemente und Techniken, die für den Fachmann zum vollständigen Verständnis der Aspekte und Merkmale der vorliegenden Offenbarung nicht notwendig sind, werden daher gegebenenfalls nicht beschrieben. In den Zeichnungen können die relativen Größen von Elementen, Schichten und Bereichen zur Verdeutlichung übertrieben dargestellt sein.

Wie hierin verwendet, schließt der Begriff "und/oder" alle Kombinationen von einem oder mehreren der aufgeführten Elemente ein. Ferner bezieht sich die Verwendung von "kann" bei der Beschreibung von Ausführungsformen der vorliegenden Offenbarung auf "eine oder mehrere Ausführungsformen der vorliegenden Offenbarung". In der folgenden Beschreibung von Ausführungsformen können die Begriffe in der Einzahl auch die Mehrzahl umfassen, sofern aus dem Kontext nicht eindeutig etwas Anderes hervorgeht.

Obwohl die Begriffe "erste" und "zweite" zur Beschreibung verschiedener Elemente verwendet werden, sollten diese Elemente nicht durch diese Begriffe eingeschränkt werden. Diese Begriffe werden nur verwendet, um ein Element von einem anderen Element zu unterscheiden. So kann beispielsweise ein erstes Element als zweites Element bezeichnet werden, und ebenso kann ein zweites Element als erstes Element bezeichnet werden, ohne dass dies vom Anwendungsbereich der vorliegenden Offenbarung abweicht. Ausdrücke wie "mindestens eines von", wenn sie einer Liste von Elementen vorangestellt werden, modifizieren die gesamte Liste und nicht nur die einzelnen Elemente der Liste.

Begriffe wie "im Wesentlichen", "ungefähr" und ähnliche werden als Annäherungsbegriffe und nicht als Gradangaben verwendet und sollen die inhärenten Abweichungen bei gemessenen oder berechneten Werten berücksichtigen, die von Fachleuten erkannt werden. Wenn der Begriff "im Wesentlichen" in Verbindung mit einem Merkmal verwendet wird, das durch einen numerischen Wert ausgedrückt werden kann, bezeichnet der Begriff "im Wesentlichen" einen Bereich von zumindest +/- 5 % des Wertes, der auf den Wert zentriert ist.

Die vorliegende Erfindung bezieht sich auf eine Vorrichtung und ein Verfahren, die es ermöglichen, eine Softwarelizenz zwischen entsprechend konfigurierten Hardware-Agenten zu übertragen, wodurch die Notwendigkeit eines verteilbaren physischen Hardware-Geräts entfällt. In der folgenden Beschreibung werden zahlreiche Details dargelegt, um ein umfassendes Verständnis der vorliegenden Erfindung zu ermöglichen. Es ist jedoch für den Fachmann offensichtlich, dass die vorliegende Erfindung in vielen anderen als den dargestellten Ausführungsformen ausgeführt werden kann, ohne vom Umfang der vorliegenden Erfindung, wie er durch die anhängigen Ansprüchen festgelegt wird, abzuweichen. In anderen Fällen sind bekannte Schaltungen, Elemente und dergleichen nicht im Detail dargelegt, um das Verständnis der vorliegende Erfindung nicht unnötig zu erschweren.

In der detaillierten Beschreibung wird häufig eine Reihe von Begriffen aus dem Bereich der Kryptographie verwendet, um bestimmte Merkmale oder Eigenschaften zu beschreiben, die im

Folgenden genauer definiert werden. Ein "Schlüssel" ist ein Kodierungs- und/oder Dekodierungsparameter für einen herkömmlichen kryptographischen Algorithmus. Genauer gesagt, kann der Schlüssel als eine sequentielle Verteilung ("String") von Binärdaten mit einer Länge von "n" Bits angesehen werden, wobei "n" eine beliebige natürliche Zahl ist. Eine "Nachricht" ist im Allgemeinen definiert als Information (z. B. verschlüsselte Adresse und Daten), die in einer Folge von Buszyklen übertragen wird. Die Informationen können eine Aufforderung ("Challenge") oder eine Rückmeldung ("Response") enthalten. Ein "digitales Zertifikat" ist definiert als eine Information, die sich auf eine Instanz bezieht, die eine Kommunikation initiiert, typischerweise ihr öffentlicher Schlüssel, verschlüsselt durch die Verwendung eines privaten Schlüssels durch eine weithin veröffentlichte vertrauenswürdige Autorität (z. B. eine Bank, eine staatliche Einrichtung, ein Handelsverband usw.). Eine "digitale Signatur" ähnelt einem digitalen Zertifikat, wird aber zur Authentifizierung der Nachricht selbst und nicht des Absenders verwendet.

In den letzten Jahren wird es immer wünschenswerter, digitale Informationen von einem Ort zum anderen zu übertragen. Infolgedessen verwenden viele Instanzen kryptografische Technologien, damit die Informationen in einer Weise übertragen werden, die für einen rechtmäßigen Empfänger klar und eindeutig, für einen unrechtmäßigen Empfänger jedoch unverständlich ist. In der Regel arbeitet die kryptografische Technologie mit einer von zwei herkömmlichen Techniken, nämlich der symmetrischen Schlüsselkryptografie oder der asymmetrischen (oder öffentlichen) Schlüsselkryptografie oder einer Kombination dieser beiden kryptografischen Technologien.

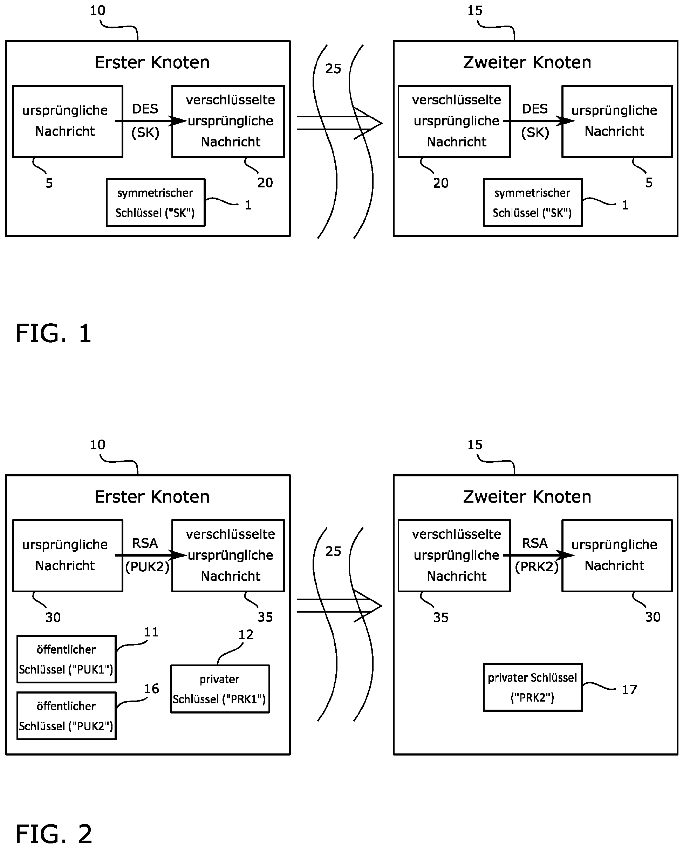

Figur 1 zeigt eine beispielhafte Ausführungsform der symmetrischen Schlüsseltechnik. Diese Technik erfordert die Verwendung eines identischen, d. h. symmetrischen geheimen Schlüssels (mit "SK" bezeichnet) 1 zur Verschlüsselung einer ursprünglichen Nachricht 5, die zwischen einem ersten Knoten 10 und einem zweiten Knoten 15 übertragen wird, um eine verschlüsselte ursprüngliche Nachricht 20 zu bilden, und zur Entschlüsselung der verschlüsselten ursprünglichen Nachricht 20, um die ursprüngliche Nachricht 5 wiederherzustellen. Diese Ver- und Entschlüsselung erfolgt durch bekannte konventionelle kryptografische Algorithmen, wie z. B. den Datenverschlüsselungsalgorithmus, der allgemein als "DES" bezeichnet wird. Die ursprüngliche Nachricht 5 wird (i) am ersten Knoten 10 verschlüsselt, (ii) vom ersten Knoten 10 zum zweiten Knoten 15 über einen öffentlichen Bereich 25, wie z. B. eine Telefonleitung oder ähnliches, übertragen und (iii) am zweiten Knoten 15 entschlüsselt. Diese Technik ist jedoch bei einer großen Anzahl von Benutzern schwierig zu implementieren, da sie die vorherige Festlegung von geheimen Schlüsseln ("SK") erfordert.

Figur 2 zeigt eine beispielhafte Ausführungsform der asymmetrischen Schlüsseltechnik. Bei dieser Technik werden zwei getrennte Schlüssel (als "öffentlicher Schlüssel" und "privater Schlüssel" bezeichnet) verwendet, die getrennt für Ver- und Entschlüsselungszwecke eingesetzt werden. Um eine bidirektionale Kommunikation zwischen dem ersten Knoten 10 und dem zweiten Knoten 15 herzustellen, wird ein "öffentlicher" Schlüssel 16 des Schlüsselpaares des zweiten Knotens 15 (mit "PUK2" bezeichnet) im ersten Knoten 10 gespeichert und im Allgemeinen von diesem verwendet, um eine ursprüngliche Nachricht 30 nach einem in der Kryptografie bekannten asymmetrischen Algorithmus, z. B. dem als "RSA"-Algorithmus bekannten, zu verschlüsseln. Daraus entsteht eine verschlüsselte Originalnachricht 35, die an den zweiten Knoten 15 übertragen wird. Ein öffentliches und ein privates Schlüsselpaar 11 und 12 des ersten Knotens 10 (mit den Bezeichnungen "PUK1" und "PRK1") sind ebenfalls im ersten Knoten 10 gespeichert.

Ein "privater" Schlüssel 17 des Schlüsselpaares des zweiten Knotens 15 (mit "PRK2" bezeichnet) ist ausschließlich dem zweiten Knoten 15 bekannt und wird von diesem für viele Zwecke verwendet, u. a. zur Entschlüsselung der verschlüsselten Nachricht 35 vom ersten Knoten 10 nach dem RSA-Algorithmus, wie in FIG. 2 dargestellt. Diese Technik ist jedoch anfällig für Versuche einer unberechtigte Instanz (z. B. eines Wirtschaftsspions), sich als berechtigte Instanz (z. B. Mitarbeiter, Joint-Venture-Partner usw.) auszugeben, indem sie betrügerische Nachrichten an eine andere berechtigte Instanz sendet, um den Arbeitsablauf zu stören oder vertrauliche Informationen zu erhalten. Daher werden typischerweise zusätzliche Protokolle verwendet, um eine Nachricht zu authentifizieren und die Instanz, die die Nachricht sendet, zu legitimieren.

Die Authentifizierung des Absenders (d. h. die Überprüfung, ob der Absender eines öffentlichen Schlüssels tatsächlich der wahre Besitzer des öffentlichen Schlüssels ist) ist ein Problem, wenn die Kommunikation zwischen zuvor unbekannten Parteien aufgenommen wird. Dieses Problem wird in der Regel vermieden, indem ein digitales Zertifikat 45 in eine Übertragungsnachricht 50 integriert wird. Das digitale Zertifikat 45 wird von einer vertrauenswürdigen Autorität 55 (z. B. einer Bank, einer staatlichen Stelle, einem Handelsverband usw.) ausgestellt, indem ein öffentlicher Schlüssel des die Kommunikation einleitenden Knotens ("PUK1") 11 mit einer Signatur (mit "SM" gekennzeichnet) 58 mit einem privaten Schlüssel ("PRKTA") 57 der vertrauenswürdigen Autorität 55 verschlüsselt wird, so dass betrügerische Versuche, den PUK2 16 zu verwenden, lediglich zu einer unlesbaren Antwort auf die Übertragungsnachricht durch den Empfänger führen. Die Auswahl der vertrauenswürdigen Autorität 55 hängt von den beteiligten Parteien ab. So könnten beispielsweise zwei Personen, die in demselben Unternehmen beschäftigt sind, beide den Zertifikaten vertrauen, die von einer internen Sicherheitsautorität des Unternehmens ausgestellt wurden. Mitarbeiter zweier unabhängiger Unternehmensinstanzen benötigen jedoch nicht nur die Zertifikate der jeweiligen Sicherheitsautoritäten, sondern auch die Zertifikate von beispielsweise einer Handelsorganisation der Branche, die solche Unternehmensinstanzen zertifiziert.

Bei diesem Ansatz werden mehrere Vorgänge gleichzeitig ausgeführt, um die Übertragungsnachricht 50 zu erstellen. Ein Vorgang besteht darin, dass die ursprüngliche Nachricht 40 mit einem symmetrischen geheimen Schlüssel ("SK") 60 über den DES-Algorithmus verschlüsselt wird, um die verschlüsselte Nachricht 65 zu bilden, die zusammen mit dem digitalen Zertifikat 45 in die Übertragungsnachricht 50 eingegeben wird. Die ursprüngliche Nachricht 40 wird zudem einem Hashalgorithmus 70 (z. B. "MD5") unterzogen, um einen Übertragungsnachricht-Hashwert 75 zu bilden. Der Übertragungsnachricht-Hashwert 75 wird mit einem privaten Schlüssel des ersten Knotens ("PRK1") 12 weiter verschlüsselt, um eine digitale Signatur 80 zu bilden, die in die Übertragungsnachricht 50 eingegeben wird. Zusätzlich wird der symmetrische Schlüssel ("SK") 60 mit einem öffentlichen Schlüssel des zweiten Knotens ("PUK2") 16 gemäß dem RSA-Algorithmus verschlüsselt, was zu "SKenc" 85 führt und ferner in die Übertragungsnachricht 50 eingegeben wird.

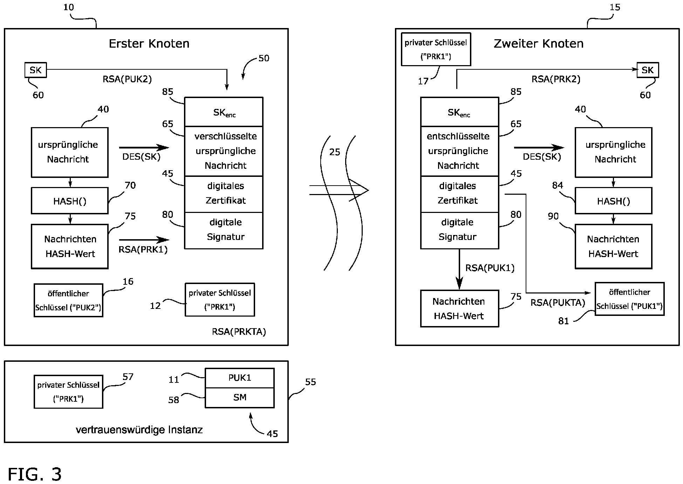

Figur 3 zeigt ein Blockdiagramm, das einen digitalen Zertifizierungsprozess von einer vertrauenswürdigen Autorität veranschaulicht. Wie im Blockdiagram dargestellt, entschlüsselt der zweite Knoten 15 nach dem Empfang der Übertragungsnachricht 50 vom ersten Knoten 10, die über den öffentliche Bereich 25 übertragen wird, den SK_{enc} 85 mit seinem privaten Schlüssel ("PRK2") 17 und das digitale Zertifikat 45 mit einem veröffentlichten öffentlichen Schlüssel ("PUBTA") der vertrauenswürdigen Autorität 55, um den SK60 und den PUK1 11 zu erhalten. Diese SK- und PUK1-Schlüssel 60 und 11 werden verwendet, um die verschlüsselte ursprüngliche Nachricht 65 und die digitale Signatur 80 zu entschlüsseln, um den Übertragungsnachricht-Hashwert 75 bzw. die ursprüngliche Nachricht 40 zu erhalten. Die ursprüngliche Nachricht 40 wird dann einem Hashalgorithmus 84 unterzogen, der mit demjenigen identisch ist, der im ersten Knoten 10 durchgeführt wurde. Die Ergebnisse (als "Empfangsnachricht-Hashwert" bezeichnet) 90 werden mit dem Übertragungsnachricht-Hashwert 75 verglichen. Wenn der Übertragungsnachricht-Hashwert 75 mit dem Empfangsnachricht-Hashwert 90 identisch ist, wird die Kommunikation zwischen diesen berechtigten Knoten aufrechterhalten.

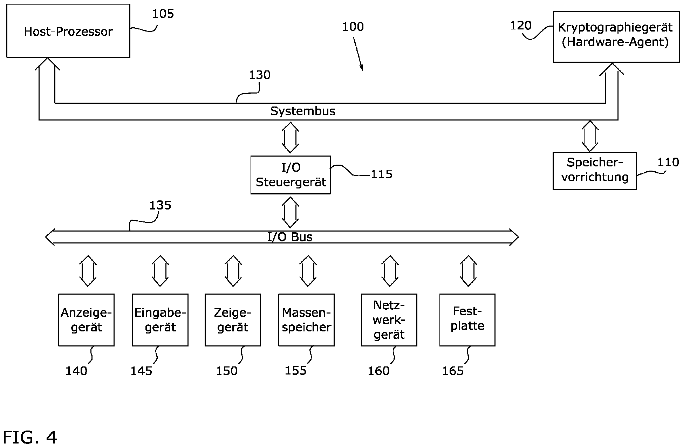

Figur 4 zeigt ein Blockdiagramm einer beispielhaften Ausführungsform eines Computersystems 100, das die vorliegende Erfindung nutzt. Das Computersystem 100 umfasst eine Vielzahl von Bus-Agenten, darunter einen Host-Prozessor 105, eine Speichervorrichtung 110, einen Eingabe/Ausgabe (I/O) Steuergerät 115 und eine kryptografische Vorrichtung, die als "Hardware-Agent" 120 bezeichnet wird. Die Vielzahl an Bus-Agenten ist über einen Systembus 130 miteinander verbunden, über den Informationen zwischen den Bus-Agenten ausgetauscht werden können.

Obwohl in dieser Ausführungsform nur der Host-Prozessor 105 dargestellt ist, ist es möglich, dass mehr als ein Host-Prozessor im Computersystem 100 eingesetzt wird. Darüber hinaus kann die Speichervorrichtung 110 einen dynamischen Direktzugriffsspeicher ("DRAM"), einen Festwertspeicher ("ROM"), einen Video-Direktzugriffsspeicher ("VRAM") und dergleichen umfassen. Die Speichervorrichtung 110 speichert Informationen zur Verwendung durch den Host-Prozessor 105.

Der E/A-Controller 115 ist eine Schnittstelle zwischen einem E/A-Bus 135 und dem Systembus 130, die einen Kommunikationspfad (d. h. ein Gateway) für die Übertragung von Informationen zwischen Komponenten bereitstellt, die mit dem Systembus 130 oder dem E/A-Bus 135 verbunden sind. Der E/A-Bus 135 überträgt Informationen in und von mindestens einem Peripheriegerät im Computersystem 100, einschließlich, aber nicht beschränkt auf ein Anzeigegerät 140 (z. B. Flüssigkristallanzeige, OLED-Display usw.) zur Anzeige von Bildern; ein alphanumerisches Eingabegerät 145 (z. B. eine alphanumerische Tastatur usw.) zur Übermittlung von Informationen und Befehlsauswahlen an den Host-Prozessor 105; ein Cursorsteuergerät 150 (z. B, Maus, Trackball, Touchpad usw.) zur Steuerung der Cursorbewegung; eine Massendatenspeichervorrichtung 155 (z. B. Magnetbänder, Festplattenlaufwerk, Diskettenlaufwerk usw.) zum Speichern von Informationen; eine Informations-übertragungsvorrichtung 160 (z. B. Faxgerät, Modem, Scanner usw.) zum Übertragen von Informationen vom Computersystem 100 an eine andere Vorrichtung und zum Empfangen von Informationen von einer anderen Vorrichtung; und eine Hardcopy-Vorrichtung 165 (z. B. Plotter, Drucker usw.) zur Bereitstellung einer greifbaren, visuellen Darstellung der Informationen. Es ist vorgesehen, dass das in FIG. 4 dargestellte Computersystem 100 einige oder alle dieser Komponenten oder andere als die dargestellten Komponenten verwendet.

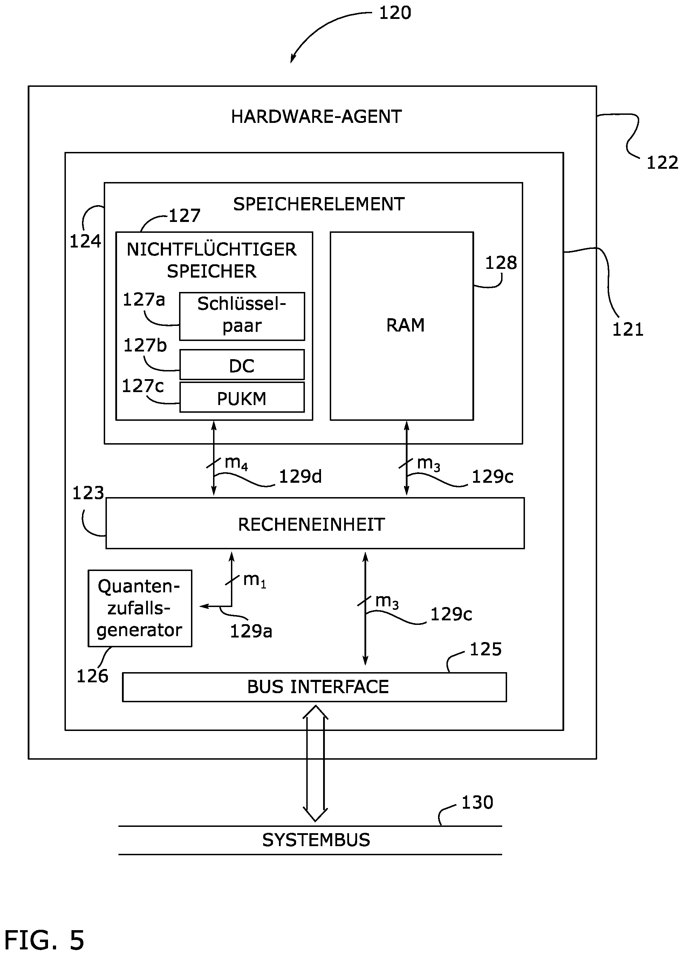

Figur 5 zeigt ein Blockdiagramm einer Ausführungsform der vorliegenden Erfindung. Bei dieser Ausführungsform ist der Hardware-Agent 120 mit dem Systembus 130 verbunden, der einen Kommunikationspfad mit dem Host-Prozessor 105 sowie den Speicher- und E/A-Controllern (nicht dargestellt) herstellt. Der Hardware-Agent 120 umfasst einen einzelnen integrierten Schaltkreis in Form eines Chips 121 (z. B. einen Mikrocontroller), der in einem Gehäuse für integrierte Schaltungskomponenten 122, vorzugsweise hermetisch, eingekapselt ist, um den Chip 121 vor Beschädigung und Verunreinigungen zu schützen. Der Chip 121 umfasst eine Verarbeitungseinheit 123, die mit einem Speicherelement 124, einer Busschnittstelle 125 und einem Quantenzufallsgenerator 126 verbunden ist. Der Quantenzufallsgenerator 126 (vgl. FIG. 15, BZ 1400) kann einen beschriebenen QRNG, bevorzugt einen beschriebenen iQRNG (vgl. FIG. 10-12, BZ 1200) umfassen. Die Busschnittstelle 125 ermöglicht die Kommunikation zwischen dem Hardware-Agenten 120 und einem anderen Gerät (z. B. dem Host-Prozessor, einem anderen Hardware-Agenten in einem anderen Gerät usw.). Die Verarbeitungseinheit 123 führt intern in einer gesicherten Umgebung innerhalb des Chips 121 Berechnungen durch, um eine gültige Verbindung mit einem autorisierten Empfänger zu bestätigen. Solche Berechnungen können die Ausführung bestimmter Algorithmen und Protokolle, die Aktivierung von Schaltkreisen (z. B. des Quantenzufallsgenerators 126) zur Erzeugung eines gerätespezifischen öffentlichen/privaten Schlüsselpaars und Ähnliches umfassen. Die Verarbeitungseinheit 123 ist im Chip 121 untergebracht, um den Zugriff auf den privaten Schlüssel durch einen Virenangriff zu verhindern, der eine gängige Methode ist, um ein Computersystem 100 zu stören und an seinen privaten Schlüssel und andere Informationen zu gelangen.

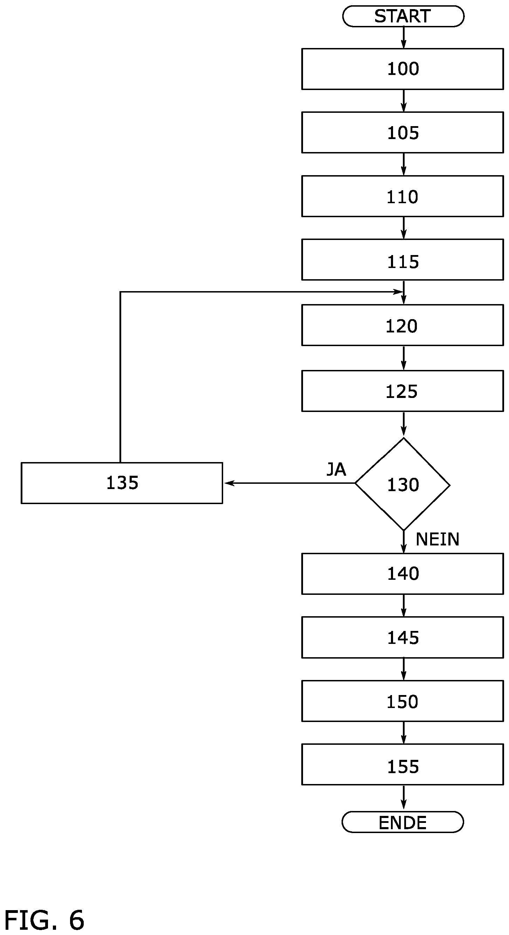

Das Speicherelement 124 umfasst ein nichtflüchtiges Speicherelement 127, z. B. einen Flash-Speicher, in dem geeignete kryptografische Algorithmen wie "RSA" und "DES", das öffentliche/private Schlüsselpaar 127a, ein digitales Zertifikat zur Überprüfung der Authentizität des Schlüsselpaars (mit "DC" bezeichnet) 127b und ein öffentlicher Schlüssel des Herstellers des integrierten Schaltkreises ("PUKM") 127c zur Ermöglichung der Kommunikation zwischen dem integrierten Schaltkreis und einem anderen ähnlichen, vom Hersteller gefertigten Gerät gespeichert werden können (dies wird ausführlicher in FIG. 6 dargestellt). Der nichtflüchtiger Speicher 127 wird vor allem deshalb verwendet, weil er seinen Inhalt behält, wenn die Versorgungsspannung unterbrochen wird. Die Speichereinheit 124 umfasst ferner einen Speicher mit wahlfreiem Zugriff ("RAM") 128 (typischerweise ein flüchtiger Speicher, der seinen Inhalt verliert, wenn die Versorgungsspannung unterbrochen wird), um bestimmte Ergebnisse der Verarbeitungseinheit 123 zu speichern.

Obwohl der Hardware-Agent 120 aus Sicherheitsgründen als Peripheriegerät auf dem Systembus 130 implementiert ist, könnte der Hardware-Agent 130 auf verschiedene andere Arten auf der PC-Plattform-Ebene implementiert werden, z. B. als Festplatten-Controller oder PCMCIA-Karte zur automatischen Entschlüsselung und/oder Verschlüsselung von Informationen, die auf einer Festplatte ein- und ausgegeben werden. Eine weitere alternative Implementierung wäre, dass der Hardware-Agent eine Komponente eines Multi-Chip-Moduls einschließlich des Host-Prozessors ist, wie unten beschrieben. Auch wenn der Hardware-Agent im Zusammenhang mit PC-Plattformen beschrieben wird, ist es ebenfalls möglich, dass ein solcher Hardware-Agent in einem Knotenpunkt wie einem Faxgerät, einem Drucker und dergleichen oder auf einem Kommunikationspfad zwischen einem Computer und dem E/A-Peripheriegerät implementiert werden könnte.

Figur 6 zeigt ein Ablaufdiagramm, das das Verfahren zum Implementieren eines Schlüsselpaares und eines digitalen Zertifikats in einer integrierten Schaltungskomponente veranschaulicht. Zunächst wird in Schritt 100 der Chip des Hardware-Agenten nach einem herkömmlichen bekannten Halbleiter-Herstellungsverfahren hergestellt. Anschließend wird der Chip in ein Halbleitergehäuse eingekapselt, so dass der eigentliche Hardware-Agent entsteht (Schritt 105). Der Hardware-Agent wird dann auf ein Zertifizierungssystem gesetzt, das eine elektrische und mechanische Kopplung zwischen dem Hardware-Agent und dem Zertifizierungssystem herstellt (Schritt 110). Das Zertifizierungssystem umfasst einen Träger, der mit einer Leiterplatte gekoppelt ist, um elektrische Signale für die Zertifizierung des Hardware-Agenten zu erzeugen und zu empfangen. Das Zertifizierungssystem umfasst ferner eine Speichervorrichtung (z. B. eine Datenbank) mit zuvor erzeugten öffentlichen Schlüsseln, um eine eindeutige Schlüsselerzeugung zu gewährleisten. Danach versorgt das Zertifizierungssystem den Hardware-Agenten mit Strom, wodurch der Quantenzufallsgenerator in die Lage versetzt wird, intern innerhalb des Hardware-Agenten ein gerätespezifisches öffentliches/privates Schlüsselpaar zu erzeugen (Schritt 115).

Nachdem das Paar aus öffentlichem und privatem Schlüssel innerhalb des Hardware-Agenten erzeugt wurde, wird der öffentliche Schlüssel des Paares aus öffentlichem und privatem Schlüssel an das Zertifizierungssystem übermittelt (Schritt 120). Der öffentliche Schlüssel wird mit den zuvor erzeugten öffentlichen Schlüsseln von zuvor hergestellten Hardware-Agenten verglichen, die im Speichergerät gespeichert sind (Schritt 125). In dem unwahrscheinlichen Fall, dass der öffentliche Schlüssel mit einem der zuvor erzeugten öffentlichen Schlüssel identisch ist (Schritt 130), wird dem Hardware-Agenten vom Zertifizierungssystem signalisiert, ein weiteres solches öffentliches/privates Schlüsselpaar zu erzeugen (Schritt 135) und den Prozess ab Schritt 120 fortzusetzen, um sicherzustellen, dass jedes öffentliche/private Schlüsselpaar eindeutig ist.

Falls der öffentliche Schlüssel eindeutig ist, wird das Speichergerät mit diesem eindeutigen öffentlichen Schlüssel aktualisiert (Schritt 140). Danach erstellt das Zertifizierungssystem in Schritt 145 ein eindeutiges Gerätezertifikat, das die Authentizität des Schlüsselpaars bestätigt (im Folgenden als "Authentifizierungsgerätezertifikat" bezeichnet). Das Authentifizierungsgerätezertifikat enthält mindestens den öffentlichen Schlüssel des Geräts, der mit dem geheimen privaten Schlüssel des Herstellers "digital signiert" ist (d. h. allgemein ausgedrückt, der öffentliche Schlüssel des Geräts wird mit dem privaten Schlüssel des Herstellers verschlüsselt). Dieses Authentifizierungsgerätezertifikat wird zusammen mit dem allgemein bekannten öffentlichen Schlüssel des Herstellers in den Hardware-Agenten eingegeben (Schritt 150), und der Hardware-Agent schreibt das eindeutige Paar aus öffentlichem und privatem Schlüssel, das Authentifizierungsgerätezertifikat und den öffentlichen Schlüssel des Herstellers dauerhaft in seinen nichtflüchtigen Speicher (Schritt 155). Es ist jedoch denkbar, dass der öffentliche Schlüssel einer anderen Einheit (z. B. eines Händlers) anstelle des Herstellers verwendet wird, was ebenfalls eine Änderung des Authentifizierungsgerätezertifikat erfordert. Zu diesem Zeitpunkt ist der Hardware-Agent physisch eindeutig und nun in der Lage, eine sichere Kommunikation mit einem anderen Hardware-Agenten herzustellen.

Nachdem der Hardware-Agent konstruiert ist, wird er in ein elektronisches Gerät wie das in FIG. 4 dargestellte Computersystem implementiert. Dazu wird ein sicherer Kommunikationsweg zwischen dem Lizenzgeber und dem Hardware-Agenten durch Authentifizierungsverfahren wie Challenge/Response oder andere bekannte Verfahren eingerichtet. Nachdem der Kommunikationspfad sicher ist, wird das gültige Lizenz-Token über die sichere Kommunikationsverbindung in den nichtflüchtigen Speicher (z. B. Flash-Speicher) des Hardware-Agenten heruntergeladen. Es ist weiterhin denkbar, dass das Lizenz-Token in mehrere Hardware-Agenten integriert wird, um entweder in einem "gültigen" oder "ungültigen" Zustand zu existieren, wobei das Lizenz-Token validiert oder ungültig gemacht wird, anstatt zwischen Hardware-Agenten übertragen zu werden.

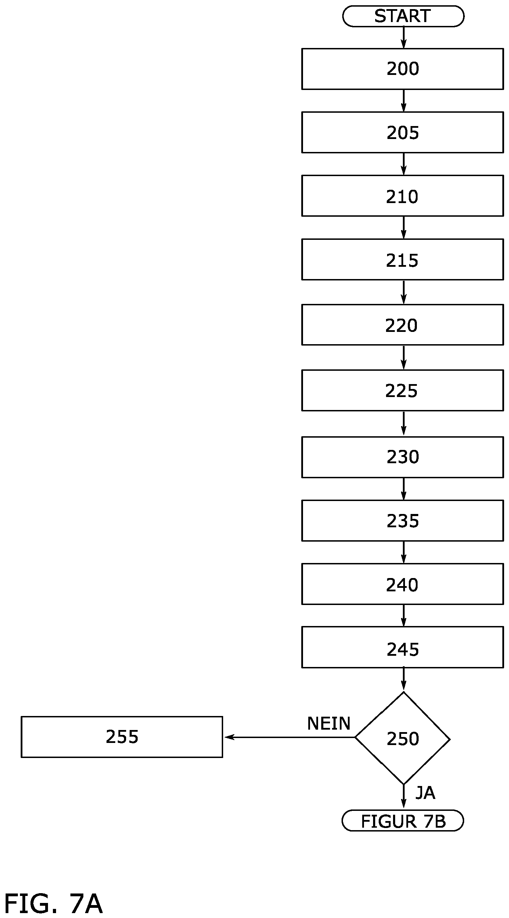

Die Figuren 7A-7C zeigen Ablaufdiagramme, die die Vorgänge eines ersten Hardware-Agenten veranschaulichen, der eine Kommunikation mit einem zweiten Hardware-Agenten herstellt, um ein Token mit gültiger Lizenz zwischen dem zweiten Hardware-Agenten, der lizenzierte Rechte aufweist, und dem ersten Hardwareagenten zu übermitteln.

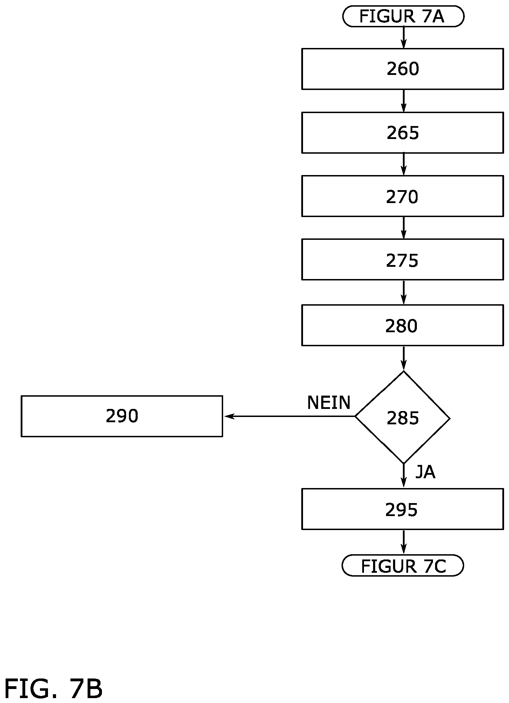

In den Figuren 7A und 7B wird dabei eine beispielhafte Ausführungsform der gegenseitigen Fernidentifizierung der Authentifizierung von zwei Hardware-Agenten dargestellt. In Schritt 200 wird eine Kommunikationsverbindung zwischen einem "nicht autorisierten" ersten Knoten (d. h. einem Knoten, der derzeit nicht berechtigt ist, eine lizenzierte Softwareanwendung zu betreiben), welcher einen ersten Hardware-Agenten enthält, und einem autorisierten zweiten Knoten, der einen zweiten Hardware-Agenten enthält und berechtigt ist, die lizenzierte Softwareanwendung zu betreiben, hergestellt. Diese Kommunikationsverbindung kann über alle geeigneten Mittel wie Modems, Netzwerke usw. hergestellt werden. Der erste Hardware-Agent gibt eine Nachricht mit seinem eindeutigen Authentifizierungsgerätezertifikat an den zweiten Hardware-Agenten aus (Schritt 205). Da der öffentliche Schlüssel des Herstellers ("PUKM") im nichtflüchtigen Speicher beider Hardware-Agenten programmiert ist, entschlüsselt der zweite Hardware-Agent das Authentifizierungsgerätezertifikat mit dem öffentlichen Schlüssel des Herstellers ("PUKM"), um den öffentlichen Schlüssel des ersten Hardware-Agenten zu erhalten (Schritt 210). Danach werden in den Schritten 215-220 ähnliche Vorgänge wie in den Schritten 205-210 durchgeführt, so dass der erste Agent den öffentlichen Schlüssel ("PUK2") des zweiten Hardware-Agenten erhält.

Danach, in Schritt 225 und 230, verschlüsselt der zweite Hardware-Agent unter Verwendung des abgeleiteten öffentlichen Schlüssels des ersten Hardware-Agenten eine Challenge-Nachricht gemäß einem gewählten kryptografischen Algorithmus (z. B. RSA) und übermittelt die Challenge-Nachricht an den ersten Hardware-Agenten. In den Schritten 235 und 240 entschlüsselt der erste Hardware-Agent die Challenge-Nachricht mit seinem privaten Schlüssel ("PRK1") und erzeugt eine Response-Nachricht, indem er die entschlüsselte Challenge-Nachricht mit dem öffentlichen Schlüssel des zweiten Hardware-Agenten ("PUK2") verschlüsselt und die Response-Nachricht an den zweiten Hardware-Agenten übermittelt. Anschließend entschlüsselt der zweite Hardware-Agent die Response-Nachricht mit seinem privaten Schlüssel ("PUK1"), der zuvor durch die Entschlüsselung des zuvor übermittelten Gerätezertifikats des Herstellers ermittelt wurde (Schritt 245). In Schritt 250 vergleicht der zweite Hardware-Agent die ursprüngliche Challenge-Nachricht mit der entschlüsselten Response-Nachricht, und wenn diese nicht identisch ist, wird die Kommunikation beendet (Schritt 255). Andernfalls wird in den Schritten 260-290 ein Challenge/Response-Verfahren ähnlich den Schritten 225-260 durchgeführt, um zu überprüfen, ob der zweite Hardware-Agent tatsächlich die vom ersten Hardware-Agenten übermittelten Informationen empfängt. Der erfolgreiche Abschluss dieser Schritte (225-290) gewährleistet, dass beide Hardware-Agenten authentisch sind und die Kommunikation zwischen ihnen sicher ist (Schritt 295).

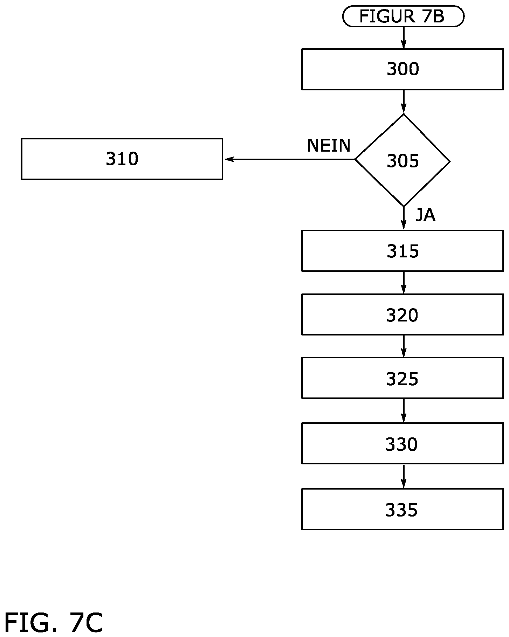

In FIG. 7C ist eine beispielhafte Ausführungsform des Prozesses der sicheren Übertragung des gültigen Lizenztokens innerhalb des zweiten Hardware-Agenten an den ersten Hardware-Agenten über sichere Kommunikation gezeigt. Nachdem die sichere Kommunikation hergestellt ist, fragt der erste Hardware-Agent den zweiten Hardware-Agenten ab, ob er im Besitz eines gültigen Lizenztokens ist (Schritt 300). Wenn das System, das den zweiten Hardware-Agenten enthält, nicht im Besitz eines gültigen Lizenztokens ist (Schritt 305), wird die Kommunikation zwischen den Hardware-Agenten beendet (Schritt 310). Verfügt das System mit dem zweiten Hardware-Agenten jedoch über das gültige Lizenz-Token, sendet es eine entsprechende Nachricht an den ersten Hardware-Agenten (Schritt 315).

Nach Erhalt dieser Nachricht leitet der erste Hardware-Agent eine Übertragungsanforderung des gültigen Lizenz-Tokens ein, die es dem ersten Hardware-Agenten ermöglicht, die lizenzierte Softwareanwendung zu betreiben (Schritt 320). Der zweite Hardware-Agent antwortet auf die Übertragungsanforderung, indem er das gültige Lizenz-Token überträgt, wodurch er seine Lizenzprivilegien verliert (Schritt 325). Der erste Hardware-Agent empfängt das gültige Lizenz-Token und speichert das Token in seinem nichtflüchtigen Speicher. Danach sendet er eine Nachricht an den zweiten Hardware-Agenten, dass er das gültige Lizenz-Token erhalten hat, das seine Kopie der lizenzierten Software aktiviert (Schritt 330). An diesem Punkt wird die Kommunikation beendet (Schritt 335).

Ein zusätzliches Maß an Protokollintegrität kann durch die Einführung von zusätzlichen Challenge/Response-Sequenzen zwischen den Schritten 320 und 325 und den Schritten 325 und 330 erreicht werden. Dies verhindert eine "Wiederholung" früherer Übertragungen von Lizenz-Token.

Gleichzeitig mit der Kommunikation zwischen dem ersten und dem zweiten Hardware-Agenten kann jeder Hardware-Agent den Inhalt seiner Übertragungen in einem nichtflüchtigen Speicher als Prüfprotokoll speichern. Falls die Kommunikation unterbrochen wird, nachdem der zweite Hardware-Agent seine Kopie deaktiviert hat, aber bevor der erste Hardware-Agent seine Kopie aktiviert hat, können beide Hardware-Agenten die Prüfprotokolle nach der Wiederherstellung der Kommunikation überprüfen, um festzustellen, welcher Hardware-Agent (falls vorhanden) die Berechtigung hat, die lizenzierte Softwareanwendung zu betreiben.

Figur 8 zeigt eine schematische Darstellung einer ersten Ausführungsform eines iQRNG gemäß Stand der Technik in der Aufsicht. Die Darstellung ist an eine entsprechende Figur der EP 3 529 694 B1 angelehnt und zeigt die Oberfläche O eines zugehörigen Substrates 1110, in welches der QRNG integriert ist. Eine kreisförmige Photonenquelle 1120 mit einem zur Bereitstellung von Photonen eingerichteten p-n-Übergang wird über eine entsprechende Kontaktierung mit Strom versorgt und dabei zur Emission einzelner Photonen 1128 angeregt. Zur Detektion der emittierten Photonen 1128 ist neben der Photonenquelle 1120 ein zugehöriger Einzelphotonendetektor 1130 in Form einer SPAD angeordnet. Es handelt sich bei der Photonenquelle 1120 und dem Einzelphotonendetektor 1130 wie bei herkömmlichen hybriden Ansätzen für photonischer QNRGs allerdings auch weiterhin um strukturell und funktional getrennte Elemente, die zur Integration in einem gemeinsamen Substrat lediglich nebeneinander angeordnet werden.

Ein vom Einzelphotonendetektor 1130 bei der Absorption eines Photons 1128 erzeugter Strompuls kann dann zunächst in einem zugehörigen Mittel zur elektronischen Erfassung 1152 ("electronic sampling means") registriert und ausgewertet werden, insbesondere um eine Bitfolge auf der Grundlage der Anzahl der im Einzelphotonendetektor 1130 erfassten Photonen zu erzeugen. Weiterhin ist ein Mittel zur elektronischen Nachbearbeitung 1154 ("electronic post-processing means") vorgesehen, welches so konfiguriert sein soll, dass es die binären Sequenzen des Mittels zur elektronischen Erfassung 1152 so verarbeiten, dass eine sogenannte "Whitening"-Operation durchgeführt wird. Diese soll eine Vielzahl von Kompressionsoperationen umfassen, die dazu dienen, die statistischen Eigenschaften der erzeugten binären Sequenzen zu verbessern. Der Nachbearbeitungsschritt soll das Entropieniveau des QRNG erhöhen. Dabei muss jedoch sichergestellt sein, dass die verwendeten Kompressionsoperationen nicht wiederrum zu einer prinzipiellen Vorhersagbarkeit der erzeugten Zufallszahlen durch Einführung deterministischer Abhängigkeiten bei der Anwendung führen.

Um die Effizienz der Zufallszahlenerzeugung, d. h. die effektive Entropierate, zu erhöhen, wird der photonische Teil des QRNG an der Oberfläche O des Substrats 1110 von einer lichtblockierenden Schicht 1150 ("light inhibitor filter"), welcher zur Abschattung gegenüber einem äußeren Lichteinfall dient, geschützt. Dabei kann die lichtblockierende Schicht 1150 insbesondere durch eine Metallisierungsschicht, die direkt während des Produktionsprozesses, zum Beispiel durch die CMOS-Technik, als letzte Metallisierungsebene aufgebracht werden kann, bereitgestellt werden. Dadurch soll der Photonendetektor 1130 von externem Licht abgeschirmt werden und ihn nur für solche Photonen empfindlich zu machen, die aufgrund des Übersprechens von der Photonenquelle 1120 durch das Substrat 1110 gelangen. Darüber hinaus soll durch die Metallisierungsschicht auch die optische Kopplung der von Photonenquelle 1120 emittierten Photonen 1128 verbessern, indem diese nach innen reflektiert und so an einem Austritt aus der Oberfläche O des Substrats 1110 behindert werden.

Nachteilig bei einer solchen Anordnung der optischen Komponenten nebeneinander ist der Abstand zwischen den Komponenten, welcher die Kopplungsstärke aufgrund von dem geringen Beleuchtungswinkel und der potentiellen Photonenabsorption in den verschiedenen Materialien reduziert. Zudem besteht trotz der partiell aufgebrachten lichtblockierenden Schicht 1150 potentiell auch weiterhin die Möglichkeit des optischen Zugriffs und damit eines Angriffs von der Oberfläche O des Substrats 1110 oder sogar von der Substratrückseite aus. Über dieses können nämlich beispielsweise zusätzliche Photonen gezielt injiziert oder extrahiert werden, so dass letztlich die Zählstatistik und damit die Entropie der erzeugten Zufallszahlen beeinflusst und kompromittiert werden kann. Weiterhin ist in der Darstellung auch zu erkennen, dass die einzelnen Photonen 1128 isotrop in alle Raumrichtungen verteilt emittiert werden, so dass nur ein Bruchteil der Photonen 1128 vom Photonendetektor 1130 erfasst und somit statistisch ausgewertet werden kann. Dies verringert zum einen erheblich die Effizienz der Zufallszahlenerzeugung und führt anderseits dazu, das eine Vielzahl von Photonen 1128 ungenutzt ins Substrat 1110 emittiert werden, wo diese an anderer Stelle eventuell ebenfalls durch Beobachter bzw. Angreifer extrahiert werden oder zu Störungen führen können.

Figur 9 zeigt eine schematische Darstellung einer zweiten Ausführungsform eines iQRNG gemäß Stand der Technik in einer Seitenansicht. Die Darstellung ist an eine entsprechende Figur aus Khanmohammadi et al. (A. Khanmohammadi, R. Enne, M. Hofbauer and H. Zimmermann, "A Monolithic Silicon Quantum Random Number Generator Based on Measurement of Photon Detection Time," in IEEE Photonics Journal, vol. 7, no. 5, pp. 1-13, Oct. 2015, Art no. 7500113) angelehnt. Auch in diesem Beispiel ist der prinzipielle Aufbau einer Nebeneinanderanordnung einer Photonenquelle 1120 (Si-LED), welche zur Aussendung von einzelnen Photonen 1128 eingerichtet ist, und einem Einzelphotonendetektor 1130 (SPAD) klar zu erkennen. Im Unterschied zur in FIG. 8 gezeigten Anordnung wird die Photonenquelle 1120 hierbei jedoch als kreisförmiges zentrales Element bereitgestellt, welches im Wesentlichen vollständig von einem entsprechend angepassten kreisringförmig ausgebildeten Einzelphotonendetektor 1130 umgeben wird. Die gemeinsame radiale Symmetrieachse R liegt entsprechend im Zentrum des derart ausgebildeten iQRNG. Die Photonenquelle 1120 wird dabei durch eine in einer tiefliegenden n-Wanne ("deep n well") ausgebildeten n-Wanne ("n well") realisiert, die über ein in die Oberfläche O des Substrats 1110 ("p-substrate") zentral um die radiale Symmetrieachse R eingebrachtes n⁺⁺-Gebiet als Kathode 1122 und ein daneben angeordnetes p⁺⁺-Gebiet als Anode 1124 mit Strom versorgt wird. Außerhalb der tiefliegenden n-Wanne wird der Einzelphotonendetektor 1130 ebenfalls an die Oberfläche O über ein eingebrachtes n⁺⁺-Gebiet als Kathode 1132 und ein weiter von der radialen Symmetrieachse R entfernt angeordnetes p⁺⁺-Gebiet als Anode 1134 kontaktiert. An die Kathode 1132 schließt sich unterhalb eine p-Wanne ("p well") an. Unterhalb der Anode 1134 ist hingegen in einer tiefliegenden p-Wanne ("deep p well") ein p-Wanne ("p well") ausgebildet. Die Photonenquelle 1120 wird hierbei als Element innerhalb der Struktur des Photonendetektors 1130 bereitgestellt, so dass im Gegensatz zur FIG. 8 diese eine strukturelle und funktionale Einheit bilden.

Auch bei diesem Beispiel für einen iQRNG gemäß Stand der Technik werden die Photonen 1128 im Wesentlichen allseitig in das Substrat 1110 emittiert, so dass die auch bereits zur Ausführungsform nach FIG. 8 beschrieben Nachteile hinsichtlich der Sicherheit gegenüber Beobachtern bzw. Angreifern und zur verringerten Effizienz ebenfalls zutreffen. Durch den spezifischen Aufbau als kreisringförmige Anordnung und die strukturelle Verknüpfung des Einzelphotonendetektors 1130 mit der Photonenquelle 1120 kann gegenüber FIG. 8 jedoch die Integrationsdichte weiter erhöht werden. Dies beinhaltet neben einem geringeren Flächenverbrauch zur Ausbildung des iQRNG auch eine Erhöhung der Sicherheit gegenüber Angriffen sowie eine gesteigerte Effizienz bei der Zufallszahlenerzeugung bzw. der Entropierate als Vorteile. Dies hängt insbesondere auch damit zusammen, dass durch die Verringerung aller Abstände die Verluste an Photonen 1128 durch auftretende Materialabsorption und ungünstige Emissionsrichtungen geringer werden. Zudem wird dadurch die Fläche für mögliche Angriffe verkleinert. Davon abgesehen besteht auch hierbei prinzipiell jedoch ebenfalls auch weiterhin die Möglichkeit insbesondere an der Oberfläche O sowie auch an anderen Stellen des Substrats 1110 zur Beeinflussung der Zählstatistik durch Angreifer einzelne Photonen 1128 auszukoppeln oder zu injizieren. Eine solche Nebeneinanderanordnung der beiden optischen Komponenten eines QRNG weist daher einige Nachteile auf, die einer besonders sicheren, kompakten und zuverlässigen Zufallszahlenerzeugung für SoC-Anwendungen bisher entgegenstehen.

Figur 10 zeigt eine schematische Darstellung eines mit einem Verfahren zur Bereitstellung tiefliegender p-n-Übergänge 1050 und 1052 in einem BCD-Prozess bereitgestellten BCD-Substrats 1110 und eine TCAD-Darstellung der resultierenden Dotierstoffverteilung. Ein Ausführungsbeispiel eines Verfahrens zur Erzeugung tiefliegender p-n-Übergänge 1050 und 1052 in einem BCD-Prozess umfasst ein Bereitstellen eines Trägersubstrats 1010; ein Einbringen eines ersten Dotierstoffs zur Ausbildung eines ersten Gebiets 1022 (z. B. NBL) vom ersten Leitungstyp (negativ für NBL) in eine Oberfläche S des Trägersubstrats 1010; ein Einbringen eines zweiten Dotierstoffs zur Ausbildung eines zweiten Gebiets 1032 (z. B. PBL) vom zweiten Leitungstyp (positiv für PBL) in die Oberfläche S des Trägersubstrats 1010, wobei sich das erste Gebiet 1022 (NBL) und das zweite Gebiet 1032 (PBL) zumindest teilweise überlagern; ein Aufwachsen einer epitaktischen Schicht 1040 auf die Oberfläche S des Trägersubstrats 1010, wobei sich das erste Gebiet 1022 (NBL) und das zweite Gebiet 1032 (PBL) durch Diffusion des ersten Dotierstoffs und des zweiten Dotierstoffs in der epitaktischen Schicht 1040 ausbreiten und dadurch einen in der epitaktischen Schicht liegenden p-n-Übergang 1050 ausbilden.

In der Darstellung handelt es sich bei dem ersten Gebiet 1022 um eine tiefliegende NBL-Schicht und bei dem zweiten Gebiet 1032 um eine tiefliegende PBL-Schicht. Die Reihenfolge ist jedoch vertauschbar, so dass es sich bei dem ersten Gebiet 1022 auch um eine tiefliegende PBL-Schicht und bei dem zweiten Gebiet 1032 um eine tiefliegende NBL-Schicht handeln kann. Über eine entsprechende Anpassung der Diffusionslängen der einzelnen Dotierstoffe kann auch die Schichtfolge der p-n-Übergänge 1050 und 1052 umgekehrt werden, z. B. könnten in FIG. 10 auch die NBL- und PBL-Schichten am p-n-Übergang 1050 und 1052 vertauscht werden.

Das beschriebene Verfahren unterscheidet sich von den herkömmlichen Verfahren zur Bereitstellung von BCD-Substraten 1110 gemäß Stand der Technik insbesondere dadurch, dass sich das erste Gebiet 1022 (NBL) und das zweite Gebiet 1032 (PBL) zumindest teilweise überlagern. Insbesondere kann unmittelbar nach dem Einbringen des zweiten Dotierstoffs in einer Aufsicht auf die Oberfläche S des Trägersubstrats 1010 das erste Gebiet 1022 oder das zweite Gebiet 1032 vollständig das jeweils anderen Gebiet (1032, 1022) überlagern. Daher liegt bei der gezeigten Ausführungsform unmittelbar nach dem Einbringen des zweiten Dotierstoffs zur Ausbildung des zweiten Gebiets 1032 (PBL) dieses in einer Aufsicht auf die Oberfläche S des Trägersubstrats 1010 vollständig im ersten Gebiet 1022 (NBL). Um dabei einen in der epitaktischen Schicht liegenden p-n-Übergang 1050 auszubilden, weisen der erste und der zweite Dotierstoff vorzugsweise unterschiedliche Diffusionseigenschaften im Trägersubstrat 1010 und/oder in der epitaktischen Schicht 1040 auf. Insbesondere kann der zweite Dotierstoff im zweiten Gebiet 1032 (PBL) wie gezeigt eine höhere Diffusions-Beweglichkeit (und damit Diffusionslänge) im Trägersubstrat 1010 und in der epitaktischen Schicht 1040 als der erste Dotierstoff im ersten Gebiet 1022 (NBL) aufweisen.

Zur Verstärkung der Diffusion kann nach dem Einbringen des ersten Dotierstoffs und/oder des zweiten Dotierstoffs eine Erwärmung des Trägersubstrats 1010 erfolgt. Weiterhin kann nach dem Aufwachsen der epitaktischen Schicht 1040 eine Erwärmung des Trägersubstrats 1010 zur Verstärkung der Dotierstoffdiffusion erfolgen. Ein Einbringen des ersten Dotierstoffs und/oder des zweiten Dotierstoffs kann beim vorgestellten Verfahren sowohl maskenlos oder über ein Maskenverfahren erfolgen. Bei dem gezeigten BCD-Wafer kann eine vollständige Überlagerung des ersten Gebiets 1022 (NBL) mit einem einzelnen zweiten Gebiet 1032 (PBL) angenommen werden. Herkömmlicherweise werden die ersten und zweiten Gebiete 1022 und 1032 jedoch räumlich getrennt voneinander ausgebildet. Insbesondere ist deren Abstand dabei im Allgemeinen mindestens so groß gewählt, dass auch nach dem Ausdiffundieren der einzelnen Dotierstoffe keine sich überlagernden Gebiete erzeugt werden.

Die unterhalb der schematischen Darstellung angegebene TCAD-Darstellung (engl. "Technology Computer-Aided Design, TCAD") zeigt die Dotierstoffverteilung innerhalb des kontaktierten BCD-Substrats 1110 zur Simulation einer entsprechenden integrierten Diodenstruktur. Aufgrund der in dieser Ausführungsform gezeigten Doppelstruktur mit einem oberen p-n-Übergang 1050 in der epitaktischen Schicht 1040 und einem unteren p-n-Übergang 1052 in dem Trägersubstrat 1010 ergibt sich in der gezeigten Seitenansicht eine effektive Einschnürung des im Bereich der p-n-Übergänge 1050 und 1052 eingeschlossenen n-Gebiets NBL durch die beiden dieses n-Gebiet NBL umgebenden p-Gebiete PBL. Beide p-n-Übergänge 1050 und 1052 können zur Bereitstellung voneinander unabhängiger SPADs mit einer zur Erzeugung eines Lawineneffekts geeigneten Dotierungsdichte und Feldstärkeverteilung ausgebildet werden.

Mittels entsprechender BCD-Substrate 1110 zur weiteren Verwendung in BCD-Technologien lassen sich somit besonders tiefliegende SPADs ("deepSPADs") erzeugen. Insbesondere bleibt oberhalb der bereitgestellten SPADs dabei noch genügend Bauraum zur Integration weiterer optoelektronischer Komponenten. Es kann daher insbesondere eine oberhalb der tiefliegenden SPAD ausgebildete Zener-avLED dazu genutzt, einen besonders kompakten, vertikal aufgebauten iQRNG zu realisieren, bei dem einzelne Photonen 1128 durch die Zener-avLED vorzugsweise in Richtung des oberen p-n-Übergangs 1050 emittiert werden und somit für eine Detektion durch eine unmittelbar unterhalb der Zener-avLED am oberen p-n-Übergang 1050 ausgebildeten SPAD als Einzelphotonendetektor bereitgestellt werden (siehe FIG. 11 mit zugehöriger Figurenbeschreibung).

Figur 11 zeigt eine schematische Darstellung einer beispielhaften ersten Ausführungsform eines beschriebenen iQRNG 1200. Insbesondere kann der oben angegebene QuantenZufallsgenerator 126 einen solchen iQRNG 1200 umfassen. Der gezeigte integrierte QRNG 1200 umfasst eine Photonenquelle 1120 und einen Einzelphotonendetektor 1130, wobei die Photonenquelle 1120 und der Einzelphotonendetektor 1130 in vertikaler Richtung übereinander in einem gemeinsamen Substrat aus einem Halbleitermaterial angeordnet sind. Vorzugsweise handelt es sich bei der Photonenquelle 1120 um eine Einzelphotonenquelle (SPS), dazu eingerichtet, zeitgleich nur einzelne oder einige wenige Photonen 1128 bereitzustellen. Vorzugsweise handelt es sich bei der Photonenquelle 1120 um eine an einem Arbeitspunkt unterhalb oder nahe der Durchbruchspannung betriebene lichtemittierende Avalanche Zener-Diode (Zener-avLED). Vorzugsweise handelt es sich bei dem Einzelphotonendetektor 1130 um eine Einzelphotonen-Lawinendiode (SPAD).

Der iQRNG 1200 ist vorzugsweise in einem BCD-Substrat 1110 in BCD-Technologie ausgebildet. Vorzugsweise umfasst das BCD-Substrat 1110 ein Trägersubstrat 1010; und eine auf dem Trägersubstrat 1010 aufgewachsene epitaktische Schicht 1040, wobei zwischen dem Trägersubstrat 1010 und der epitaktischen Schicht 1040 durch eine Diffusion von in eine Oberfläche S des Trägersubstrats 1010 unterhalb der epitaktischen Schicht 1040 eingebrachten Dotierstoffen ein in der epitaktischen Schicht liegender tiefliegender p-n-Übergang 1050 erzeugt wurde (siehe FIG. 10). Vorzugsweise bildet der Einzelphotonendetektor 1130 in einem Bereich um den tiefliegenden p-n-Übergang 1050 ein Lawinengebiet aus und umfasst ein Absorptionsgebiet PW/HPW mit einer Hochvolt-p-Wanne HPW (engl. "high-voltage p-type well") und eine p-Wanne PW (engl. "p-type well") zur Umwandlung von Photonen in Elektronen-Lochpaare, wobei sich das Absorptionsgebiet PW/HPW unmittelbar an die den tiefliegenden p-n-Übergang 1050 ausbildenden Gebiete NBL und PBL anschließt. Die vollständig ausgeprägte Hochvolt-p-Wanne HPW ermöglicht dabei einen optimalen Anschluss des tiefliegenden p-n-Übergang 1050 von der Anode her.

Bevorzugt ist, dass der tiefliegende p-n-Übergang 1050 zumindest teilweise zwischen einer tiefliegenden n-Schicht NBL als Kathode 1132 und einer sich unmittelbar an die tiefliegende n-Schicht NBL anschließenden tiefliegenden p-Schicht PBL ausgebildet ist, das Absorptionsgebiet PW/HPW sich unmittelbar an die tiefliegende p-Schicht PBL anschließt und im Wesentlichen als p-Gebiet (optional ein intrinsisches Gebiet umfassend) ausgebildet ist, und eine als p+-Gebiet ausgebildete Anode 1134 sich unmittelbar an das Absorptionsgebiet PW/HPW anschließt.

Im gezeigten Ausführungsbeispiel sind die jeweiligen Anoden 1124 und 1134 der Photonenquelle 1120 und des Einzelphotonendetektors 1130 zusammengelegt. Diese können dann beispielsweise über eine gemeinsame zweite Metallisierung MET2 an der Oberfläche S des BCD-Substrats 1110 elektrisch kontaktiert werden. Durch eine gemeinsame und durchgehende zweite Metallisierung MET2 kann auch eine Abschattung zur Abschirmung des gesamten Bauraums darunter erreicht werden. Die gemeinsamen Anoden 1124, 1134 der Photonenquelle 1120 und des Einzelphotonendetektors 1130 sind einerseits über die die p-Wanne PW mit der Hochvolt-p-Wanne HPW und der tiefliegenden p-Schicht PBL zur Kontaktierung des ersten p-n-Übergangs 1050, und andererseits mit dem p-dotierter Bereich (engl. "p-type body") PBODY zur Kontaktierung des p-n-Übergangs 1121 der Photonenquelle 1120 verbunden. Die zugehörigen Kathoden 1122 und 1132 sind beispielhaft jeweils einzeln ausgeführt und können über eine erste zugehörige erste Metallisierung MET1 elektrisch kontaktiert werden und liegen bevorzugt auf dem Bezugspotenzial GND. Der beschriebene iQRNG kann als kreisförmige Struktur ausgebildet sein (entspricht einer räumlichen Rotation der gezeigten Darstellungsebene um eine gedachte zentrale Achse in vertikaler Richtung). Es sind jedoch auch andere Ausbildungen der gezeigten Struktur möglich.

Zur Spannungsversorgung kann die Kathode 1132 des Einzelphotonendetektors 1130 beispielsweise über einen Arbeitswiderstand R₂ mit einer vorzugsweise überwachten zweiten positiven Versorgungsspannung auf einer zweiten Versorgungspannungsleitung V_{ENT2} verbunden sein. Bei einer Detektion eines Photons, fließt ein elektrischer Strom durch den in Sperrrichtung gepolten p-n-Übergang 1050 des Einzelphotonendetektors 1130. Dadurch kommt es beispielsweise zu einem Spannungsabfall über den Arbeitswiderstand R₂ in Form eines typischerweise schnell ansteigenden und dann exponentiell abfallenden Spannungssignal 1405 am Ausgang der Entropiequelle (zur weiteren möglichen Verarbeitung wird auf die beispielhafte elektronische Schaltung eines Quantenzufallsgenerators 1400 nach FIG. 15 verwiesen). Beispielsweise kann ein Analog-zu-Digital-Wandler (engl. "Analog-to-Digital Converter, ADC") (1403 in FIG. 15) anschließend dieses Entropieausgangssignal auswerten. Der ADC (1403) kann auch Verstärker und/oder Filter zur Aufbereitung des Spannungssignals (1405) umfassen. Der Arbeitswiderstand R₂ begrenzt darüber hinaus den Strom durch den Einzelphotonendetektor 1130.

Die Kathode 1122 des Einzelphotonendetektors 1130 kann beispielsweise über einen ersten Arbeitswiderstand R₁ mit einer vorzugsweise überwachten ersten positiven Versorgungsspannung auf einer ersten Versorgungspannungsleitung V_{ENT1} verbunden sein. Der erste Arbeitswiderstand R₁ begrenzt den Strom durch die Photonenquelle 1120. Bei Emission eines Photons zeigt der Sperrstrom des in Sperrrichtung gepolten p-n-Übergangs 1121 der Photonenquelle 1120 typischerweise einen Spike-förmigen Anstieg. Dieser Sperrstromanstieg führt zu einem Spannungspuls über den ersten Arbeitswiderstand R₁. Dieser Spannungspuls kann ausgewertet werden. Beispielsweise kann der ADC (1403) mittels einer ADC-internen Korrelationsvorrichtung dazu eingerichtet sein, nur solche Pulse auf dem Spannungssignal 1405 am Ausgang der Entropiequelle auszuwerten, die mit einem Spannungspuls am ersten Arbeitswiderstand R₁, beispielsweise auf einem optionalen Korrelationssignal 1430 korrelieren. Nur solche Pulse auf dem Spannungssignal 1405 werden dann als Pulse des Einzelphotonendetektors 1130 gewertet, die mit einer Emission eines Photons durch die Photonenquelle 1120 korrelieren. Dies steigert die Qualität der Entropie der bereitgestellten Quantenzufallszahlen.

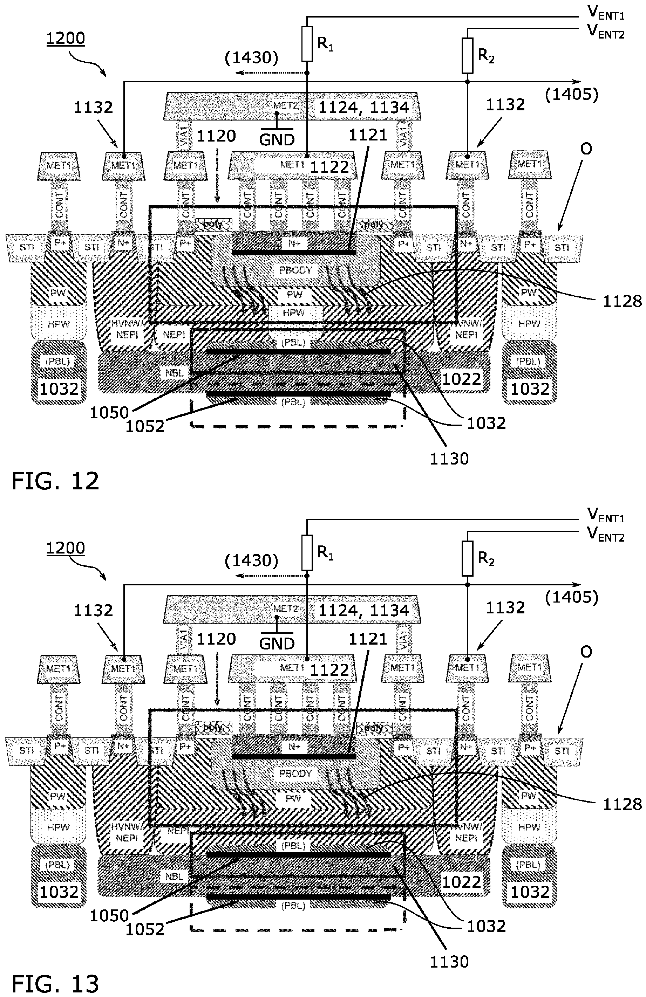

Figur 12 zeigt eine schematische Darstellung einer beispielhaften zweiten Ausführungsform eines beschriebenen iQRNG. Die gezeigte Ausführungsform entspricht weitgehend der in der FIG. 11 gezeigten ersten Ausführungsform. Die Bezugszeichen und deren jeweilige Zuordnung zu einzelnen Merkmalen gelten daher entsprechend. Im Vergleich zur FIG. 11 wurde die Hochvolt-p-Wanne HPW jedoch strukturell durch eine verjüngte Hochvolt-p-Wanne HPW und ein schwach n-dotiertes bzw. intrinsisches epitaktisches Gebiet NEPI ersetzt. Dabei bildet die Hochvolt-p-Wanne HPW des Absorptionsgebiets PW/HPW lediglich einen engen Kanal zwischen der auch in FIG. 9 gezeigten obenliegenden p-Wanne PW und der tiefliegenden p-Schicht PBL des tiefliegende p-n-Übergang 1050 aus. Die Umgebung des Kanals wird durch das schwach n-dotierte bzw. intrinsische epitaktische Gebiet NEPI definiert. Durch den Kanal kann wird der tiefliegenden p-n-Übergang 1050 ohne einem zusätzlichen Durchgriff/Punch durch das schwach n-dotierte bzw. intrinsisches epitaktisches Gebiet NEPI von der Anode her angeschlossen.

Figur 13 zeigt eine schematische Darstellung einer beispielhaften dritten Ausführungsform eines beschriebenen iQRNG. Die gezeigte Ausführungsform entspricht weitgehend der in der FIG. 12 gezeigten ersten Ausführungsform. Die Bezugszeichen und deren jeweilige Zuordnung zu einzelnen Merkmalen gelten daher entsprechend. Im Vergleich zur FIG. 11 wurde auf die kanalförmig ausgebildete Hochvolt-p-Wanne HPW im Absorptionsgebiet PW/HPW verzichtet und das schwach n-dotierte bzw. intrinsische epitaktische Gebiet NEPI erstreckt sich über den gesamten unteren Bereich. Insofern wurde im Vergleich zur FIG. 11 die Hochvolt-p-Wanne HPW strukturell durch ein schwach n-dotierte bzw. intrinsisches epitaktisches Gebiet NEPI ersetzt. Der tiefliegende p-n-Übergang 1050 wird somit erst nach einem zusätzlichen Durchgriff/Punch durch das schwach n-dotierte bzw. intrinsisches epitaktisches Gebiet NEPI von der Anode her angeschlossen, was eine Entkopplung von möglicherweise mehreren nebeneinander parallel angeordneten Zellen bewirkt.

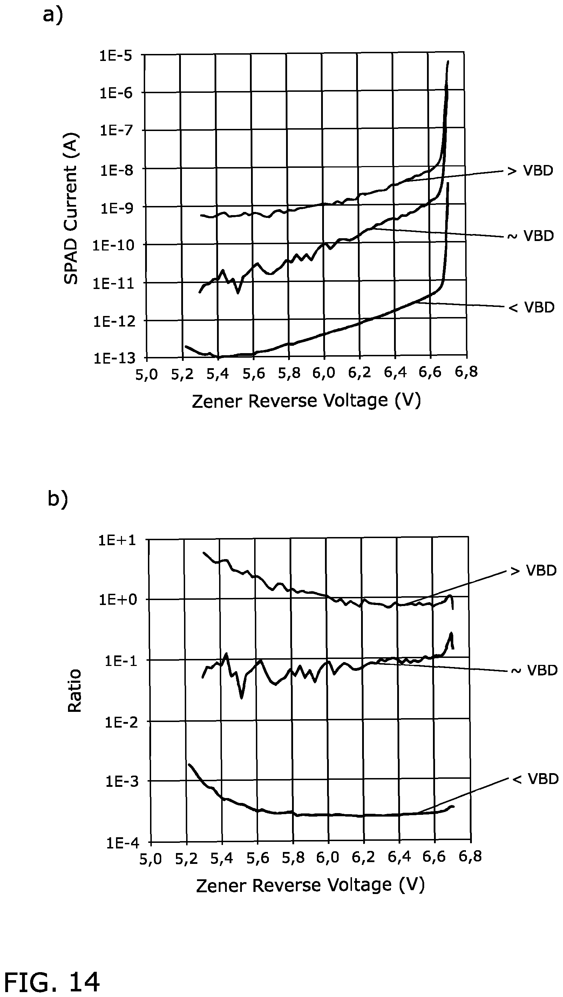

Figur 14 zeigt eine graphische Darstellung der Abhängigkeit des a) SPAD-Stroms und b) des Verhältnisses zwischen SPAD-Strom und Zener-Strom in Abhängigkeit von der Zener-Sperrspannung bei verschiedenen SPAD-Sperrspannungen (kleiner, gleich, größer der Durchbruchspannung) innerhalb eines beschriebenen iQRNGs. Die unter a) gezeigte Abhängigkeit zeigt dabei deutlich, dass der SPAD-Strom mit der Zener-Sperrspannung im Bereich von 5,6 V bis 6,6 V exponentiell ansteigt. Dies gilt für alle Betriebsmodi der SPAD, d. h. unterhalb dessen eigener Durchbruchspannung (< VBD, linearer Bereich), nahe der Durchbruchspannung (~ VBD, Avalanche-Bereich) sowie auch oberhalb der Durchbruchspannung (> VBD) und somit auch im Geiger-Betrieb.

Der unter b) gezeigte untere Kurvenverlauf (< VBD) zeigt, dass das gemessene Stromverhältnis zwischen dem SPAD-Strom und dem Zener-Strom für verschiedene Zener-Sperrspannungen im Bereich 5,8 bis 6,6 V etwa 1:4000 beträgt. Im Bereich der Durchbruchspannung (~ VBD) der SPAD steigt das Verhältnis auf Werte um 1:10. Dies ist im sog. Multiplikationsfaktor der SPAD begründet, welcher im Bereich der Durchbruchspannung den linearen Bereich verlässt. Der obere Kurvenverlauf gibt schließlich das entsprechende Verhältnis bei der oberhalb der zugehörigen Durchbruchspannung (> VBD) betriebenen SPAD an (etwa 1:1). Dies bedeutet, dass bei einer oberhalb der zugehörigen Durchbruchspannung (> VBD) betriebenen SPAD der erzeugte Photostrom und der Zener-Strom der Zener-avLED in etwa gleich groß sind und ein deutliches Messsignal mittels der Kopplung von Photonen auf der SPAD gemessen werden kann.

Figur 15 zeigt eine schematische Darstellung einer beispielhaften elektronischen Schaltung eines Quantenzufallsgenerators 1400 zur Generierung und Ausgabe einer digitalen Zufallszahlenfolge. Bei der gezeigten Entropiequelle 1401 kann es sich insbesondere um eine Photonenquelle 1120 und einen Einzelphotonendetektor 1130 eines beschriebenen iQRNG 1200 handeln, wobei der iQRNG 1200 (bzw. dessen Entropiequelle) über eine erste Versorgungsspannungsleitung V_{ENT1} und eine zweite Versorgungsspannungsleitung V_{ENT2}, welche an einen Spannungswandler 1408 angeschlossen ist, gegenüber einem Bezugspotential auf einer Bezugspotentialleitung GND beispielsweise mit unterschiedlichen Versorgungsspannungen versorgt wird.. Es ist zu beachten, dass ein allgemeiner (und insbesondere der hier beispielhaft gezeigte) Quantenzufallsgenerator 1400 in einigen Ausführungsformen einem erfindungsgemäßen iQRNG 1200, wie er als Halbleiterstruktur beispielsweise in den FIG. 11 bis 13 gezeigt ist, unter Hinzunahme weiter Schaltungskomponenten unmittelbar entsprechen kann. Insbesondere können eine Photonenquelle 1120 und einen Einzelphotonendetektor 1130 eines erfindungsgemäßen iQRNG 1200 zusammen als Entropiequelle 1401 des gezeigten Quantenzufallsgenerators 1400 angesehen werden, d. h. auch bei einem erfindungsgemäßen iQRNG 1200 kann die Kombination aus einer Photonenquelle 1120 und einem Einzelphotonendetektor 1130 als Entropiequelle bezeichnet werden. Ein von der Entropiequelle 1401 erzeugtes Spannungssignal 1405 wird in einem Analog-zu-Digital-Wandler (engl. "Analog-to-Digital Converter, ADC") 1403, welcher über eine Referenzspannungsleitung V_{REF} versorgt wird, zunächst digitalisiert und als digitales Ausgangssignal 1407 an eine Pulsverlängerungsschaltung 1406 übergeben. Die Versorgungsspannungsleitung V_{ENT} und die Referenzspannungsleitung V_{REF} werden über einen Spannungsmonitor 1413 überwacht, wobei sowohl der Spannungswandler 1408 als auch der Spannungsmonitor 1413 über eine positive Versorgungsspannungsleitung VDD gegenüber dem Bezugspotential auf der Bezugspotentialleitung GND mit Spannung versorgt werden. Der Spannungswandler 1408 ist mit dem Spannungsmonitor 1413 über eine Spannungswandlerleitung 1421 verbunden.

Bei der Pulsverlängerungsschaltung 1406 kann es sich insbesondere um eine monostabile Kippstufe (Monoflop, MF) handeln. Das Monoflop kann dazu genutzt werden, einen Puls auf der Leitung des digitalen Ausgangssignals 1407 des ADC 1403 in Abhängigkeit von einem bestimmten vorgegebenen Systemtakt, beispielsweise auf eine zeitliche Länge von mindestens einer Taktperiode des Systemtakts, zu verlängern.

Von der Pulsverlängerungsschaltung 1406 wird dann ein einsynchronisiertes Spannungssignal 1415, d. h. beispielsweise ein Puls mit einer bestimmten Mindestlänge, ausgegeben und an einen Zeit-zu-Pseudozufallszahl-Wandler (engl. "Time-to-Pseudo-Random-Number Converter, TPRC") 1404.3 übergeben. Dieser kann ein- oder mehrstufig zusammengesetzt sein. Beispielsweise kann der TPRC 1404.3 ein analoges Instrument, einen Zeit-zu-Analog-Wandler (engl. "Time-to-Analog Converter, TAC"), und/oder einen Analog-zu-Pseudozufallszahl-Wandler (engl. "Analog-to-Pseudo-Random-Number Converter, APRC") umfassen, die zusammen ebenfalls einen TPRC 1404.3 bereitstellen können. Der Pseudozufallszahlengenerator des TPRC 1404.3 kann ein rückgekoppeltes Schieberegister umfassen, dass je nach Konstruktion mit jedem Takt des Systemtakts seine Werte um eine Stelle nach links oder rechts verschiebt und in das freiwerdende Bit den Rückkoppelwert eines vorgegebenen Rückkoppelpolynoms zurückspeist. Bei dem Rückkoppelpolynom kann es sich bevorzugt um ein einfach-primitives Rückkoppelpolynom handeln. Der TPRC 1404.3 kann unmittelbar mit einem internen Datenbus 1419 verbunden sein. Das Ausgangssignal 1410 des TPRC 1404.3 kann weiterhin einer Entropieextraktion 1404.4 zugeführt werden.

Beginnend mit einem Startwert des Pseudozufallszahlengenerators (einem sogenannten Seed-Wert) kann hierzu jedem Takt des Systemtakts ab einer fallenden Flanke des einsynchronisierten Spannungssignals 1415 genau eine Pseudozufallszahl des Pseudozufallszahlengenerators bijektiv zugeordnet werden, d. h. aus dem Wert der Pseudozufallszahl kann dann auf die zeitliche Position des betreffenden Takts des Systemtaktes nach der fallenden Flanke des einsynchronisierten Spannungssignals 1415 geschlossen werden.

Anstatt eines üblichen Digitalzählers wie im Stand der Technik kann somit ein Pseudozufallszahlengeneratorverwendet werden. Der Vorteil ist, dass selbst bei einer durch einen Angreifer erfolgreich durchgeführten Einprägung einer Störung in das einsynchronisierte Spannungssignal 1415 die Zufälligkeit des Quantenzufallsbits am Ausgang 1411 der Entropieextraktion 1404.4 nur marginal gestört wird, da der Angreifer das zugehörige Rückkoppelpolynom kennen müsste. Vorzugsweise kann dieses zufällig aus einer Vielzahl an Möglichkeiten ausgewählt werden. Gleiches gilt für den Seed-Wert des Pseudozufallszahlengenerators, welchen ein Angreifer dann ebenfalls ermitteln müsste. Ein weiterer Vorteil eines Pseudozufallszahlengenerators an Stelle eines einfachen Digitalzählers ist der geringere Flächenbedarf der Rückkoppellogik mittels eines einfach-primitiven Rückkoppelpolynoms gegenüber einem Binärzähler. Ist das linear rückgekoppelte Schieberegister des Pseudozufallszahlengenerators lang genug, so ist jedem Takt zwischen zwei Pulsen des von der Entropiequelle 1401 erzeugten Spannungssignals 1405 typischerweise eine eindeutige Pseudozufallszahl zugeordnet.

Die Entropieextraktion 1404.4 kann dazu genutzt werden, einen Fehler (d. h. einen nicht gewünschten Zustand) im Ausgangssignal 1410 des TPRC 1404.3 zu ermitteln. Hierzu kann die Entropieextraktion 1404.4 insbesondere zwei über einen Komparator miteinander vergleichbare linear rückgekoppelte Schieberegister aufweisen. Auch an dieser Stelle kann somit auf herkömmliche Binärzähler verzichtet werden. Eine Rückkopplung kann abhängig vom der Registertiefe ebenfalls über einfach-primitive Polynome als Rückkoppelpolynome erfolgen. Die Länge der linear rückgekoppelten Schieberegister kann dabei frei einstellbar sein. Lange Schieberegister weisen im Allgemeinen eine schlechtere Datenrate und eine verbesserte Zufallsstatistik auf. Kürzere Schiebregister erlauben demgegenüber zwar eine höhere Datenrate, zeigen jedoch eine schlechtere Zufallsverteilung. Die Verwendung von Schieberegistern an dieser Stelle hat den Vorteil, dass weniger Gatter als im Stand der Technik benötigt werden, die logische Tiefe der Schaltungen kleiner ist und somit die Taktrate höher sein kann. Dadurch wird die Wahrscheinlichkeit für das Vorkommen von zwei gleichen Zahlen geringer und die Zufallsbitrate wird höher.

Ein entsprechendes Verfahren zur Entropieextraktion kann vorsehen, dass zunächst zwei Werte des Ausgangssignals 1410 des TPRC 404.3 ermittelt und in Schieberegister der Entropieextraktion 1404.4 gespeichert werden. Sind zwei Werte im Schieberegister der Entropieextraktion 1404.4 gespeichert, kann die Entropieextraktion 1404.4 diese beiden Werte vergleichen. Die Werte in den Schieberegistern der Entropieextraktion 1404.4 umfassen somit einen ersten Wert und einen zweiten Wert, die beide der TPRC 1404.3 ermittelt hat. Anschließend kann die Entropieextraktion 1404.4 die beiden Werte bewerten. Ist der erste Wert kleiner als der zweite Wert und die Differenz zwischen dem ersten Wert und dem zweiten Wert größer als eine Mindestdifferenz ε, so kann die Entropieextraktion 1404.4 den Wert ihres Ausgang 1411, auf einen ersten logischen Wert setzen. Ist der erste Wert größer als der zweite Wert und die Differenz zwischen dem ersten Wert und dem zweiten Wert größer als die Mindestdifferent ε, so kann die Entropieextraktion 1404.4 ihren Ausgang 1411, auf einen zweiten logischen Wert, der vom ersten logischen Wert verschieden ist, setzen. Ist die Differenz zwischen dem ersten Wert und dem zweiten Wert kleiner als die Mindestdifferenz ε, so kann die Entropieextraktion 1404.4 den ersten Wert und den zweiten Wert verwerfen.

Bevorzugt veranlasst die Entropieextraktion 1404.4 einen sogenannten Watchdog 1404.5 in einem solchen Fall einen Fehlerzähler um eine erste Fehlerzählerschrittweite zu erhöhen. Die erste Fehlerzählerschrittweite kann negativ sein. Umgekehrt kann die Entropieextraktion 1404.4 den Fehlerzähler des Watchdogs 1404.5 um eine zweite Fehlerzählerschrittweite erniedrigen, wenn die Differenz zwischen dem ersten Wert und dem zweiten Wert größer als die Mindestdifferenz ε ist. Die zweite Fehlerzählerschrittweite kann gleich der ersten Fehlerzählerschrittweite sein.

Der Watchdog 1404.5 ist weiterhin mit dem interne Datenbus 1419 verbunden. Zusätzlich kann der Watchdog 1404.5 über ein oder mehrere, vorzugsweise digitale Ein-Ausgabe-Signalleitungen 1414 mit dem Spannungsmonitor 1413 verbunden sein. Bevorzugt überwacht der Watchdog 1404.5 die Spannungswerte, die der Spannungsmonitor 1413 ermittelt. Es hat sich bewährt, wenn der Spannungsmonitor 1413 nicht nur die Spannungen im Quantenzufallszahlengenerator 1400 ermittelt und überwacht, sondern auch andere Spannungen innerhalb der jeweiligen Anwendungsschaltung. Bei dem Spannungsmonitor 1413 kann es sich beispielsweise um einen ADC handeln.

Die eigentliche Aufgabe des Watchdog 1404.5 ist jedoch eine Überwachung der Quantenzufallszahl RN am Ausgang 1411 der Entropieextraktion 1404.4. Der Watchdog 1404.5 kann dabei vorzugsweise zumindest drei definierte Fehlerfälle erfassen. Der Watchdog 1404.5 kann valide Quantenzufallsbits 1411 unter Erzeugung eines Seed-Werts S 1412 an eines optionales weiteres linear rückgekoppeltes Schieberegister als Backup-Pseudo-Zufallszahlengeneratoren (engl. "Pseudo Random Number Generator, PRNG") 1404.6 weitergeben. Vorzugsweise verhindert der Watchdog 1404.5 die Verwendung der validen Quantenzufallsbits durch eine Finite-State-Machine 1404.8. Sofern ein Fehler auftritt, kann der Watchdog 1404.5 bestimmte Fehlerbits zur weiteren Auswertung setzen.

Hat der Watchdog 1404.5 beispielswiese einen Fehler des Quantenzufallsgenerators 1400 detektiert, so kann er vorzugsweise den Quantenzufallszahlengenerator 1400 in einen Notlaufzustand versetzen. Hierzu setzt der Watchdog 1404.5 vorzugsweise ein Selektionssignal 1416 eines der Zufallszahlenerzeugung nachgeordneten Signalmultiplexers 1404.7, sodass der Signalmultiplexer 1404.7 anstatt der Zufallszahlen RN am Ausgang 1411 der Entropieextraktion 1404.4 die Pseudozufallszahl PRN des optionalen PRNG 1404.6 in Form eines Stroms von Pseudozufallsbits über eine Pseudozufallssignalleitung 1417 als Ersatz für die zumindest potenziell fehlerhafte Zufallszahl RN des Ausgangs 1411 der Entropieextraktion 1404.4 an den Eingang der Finite-State-Machine 1404.8 legt.

Das optionale weitere linear rückgekoppelte Schieberegister des PRNG 1404.6 kann dazu ausgebildet sein, Pseudozufallszahlen PRN zu generieren. Der Seed-Wert S 1412 weist bevorzugt die letzten gerade noch gültigen Quantenzufallsbits des Ausgangs 1411 der Entropieextraktion 1404.4 auf. Der Watchdog 1404.5 legt dann bevorzugt diese letzten gültigen Quantenzufallsbits 1411 an den Eingang des optionalen PRNG 1404.6 an. Der Seed-Wert S kann somit als zufälliger sicherer Startwert für ein Generatorpolynom der Rückkopplung des optionalen weiteren linear rückgekoppelten Schieberegisters des PRNG 1404.6 für die Generierung der Pseudozufallszahl PRN und deren Signalisierung über die Pseudozufallssignalleitung 1417 genutzt werden. Das Generatorpolynom sowie der Grad des Generatorpolynoms sind dabei bevorzugt frei wählbar. Durch den optionalen Backup-Pseudo-Zufallszahlengenerator kann im Fehlerfall zumindest übergangsweise die Bereitstellung von sicheren Zufallszahlen ermöglicht werden.

Die Finite-State-Machine 1404.8 hat die Aufgabe, die Zufallszahl RN bzw. die Pseudozufallszahl PRN am Ausgang des Signalmultiplexers 1404.7 entgegenzunehmen und entsprechende Quantenzufallsdatenwörter 1418 über eine Pseudozufallssignalleitung 1417 in einen flüchtigen Speicher (RAM) bzw. einen FIFO-Speicher (First In - First Out) 1404.9 zu schreiben. Ist der Schreibvorgang erfolgreich, kann die Finite-State-Machine 1404.8 ein Finish-Flag 1404.10 über den internen Datenbus 1419 setzen. Daraufhin kann ein Prozessor beispielsweise auf den flüchtigen Speicher (RAM) bzw. einen FIFO-Speicher (First In - First Out) 1404.9 zugreifen und die Zufallszahl auslesen und beispielsweise zur Verschlüsselung benutzen.

Der Quantenzufallsgenerator 1400 kann weiterhin einen Temperatursensor oder andere Sensoren umfassen kann, mit denen der Watchdog 1404.5 oder ein anderer Vorrichtungsteil des Quantenzufallsgenerators 1400, ggf. mittels des ADC 1403 oder eines anderen Analog-zu-Digital-Wandlers und/oder anderer Vorrichtungsteile wie Sensorverstärker und/oder Filter, physikalische Parameter der Umgebung des Quantenzufallsgenerators 1400 wie beispielsweise die Temperatur überwacht und Gegenmaßnahmen einleitet, wenn ein Wert eines solchen physikalischen Parameters außerhalb eines vorbestimmten Wertebereichs liegt. Solche Gegenmaßnahmen können Signalisierungen an andere Vorrichtungen, beispielsweise über den internen Datenbus 1419 oder ein Notlaufbetrieb, z. B. unter Nutzung des PRGNG 1404.6 und des Multiplexers 1404.7 und/oder das Ändern interner Betriebsparameter, wie die Spannungspegel der interner Versorgungsspannungen, z. B. mittels des Spannungswandlers 1408 und/oder das Abschalten der Zufallszahlengenerierung etc. sein. Hierdurch werden Side-Channels zur Beeinflussung des Quantenzufallsgenerators 1400 geschlossen.

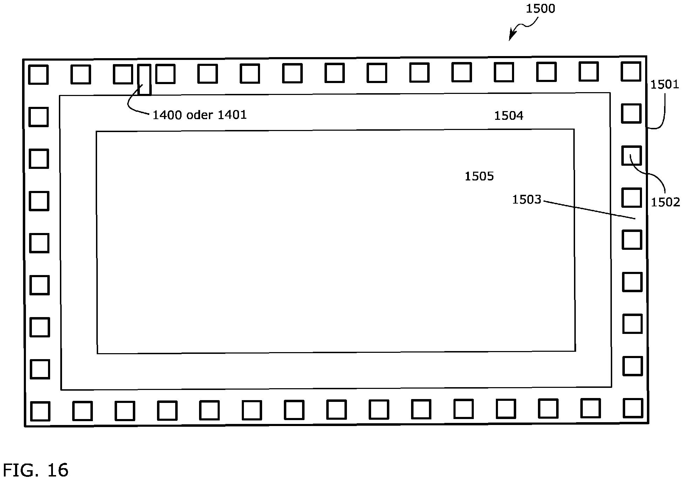

Figur 16 zeigt eine schematische Darstellung eines beispielhaften Layouts einer integrierten elektronischen Schaltung 1500 mit einem beschriebenen iQRNG 1200 im Pad-Rahmen 1503 in der Aufsicht. Die integrierte elektronische Schaltung 1500, beispielsweise ein Mikrocontroller, weist einen inneren Bereich 1505 auf, in dem sich die wesentlichen Unterschaltkreise der integrierten elektronischen Schaltung 1500 befinden. Typischerweise ist der innere Bereich 1505 von einem Verdrahtungsbereich 1504 umgeben, in dem vor allem Versorgungsspannungsleitungen, Datenbusleitungen und andere Leitungen geführt werden können.

Der Verdrahtungsbereich 1504 und der innere Bereich 1505 der integrierten elektronischen Schaltung 1500 sind typischerweise von dem Pad-Rahmen 1503 (auch als Pad-Rand bezeichnet) umgeben, der die Anschluss-Pads 1502 (Anschlussflächen) für die elektrischen Bondverbindungen oder anderen elektrischen Anschlussverbindungen umfasst.

Vorzugsweise kann ein beschriebener iQRNG 1200 bzw. ein entsprechender Quantenzufallsgenerator 1400, wie er beispielsweise in der Figur 15 gezeigt ist, ganz oder zumindest in wesentlichen Teilen im Pad-Rahmen 1503 platziert werden, da die Lücken zwischen den einzelnen Anschluss-Pads 1502 oft nicht mit elektronischen Schaltungsteilen gefüllt sind. Diese Lücken müssen bei der Herstellung der integrierten elektronischen Schaltung 1500 jedoch dennoch mitprozessiert werden und verursachen daher unnötige Herstellungskosten. Eine Platzierung von beschriebenen iQRNG 1200 bzw. entsprechenden Quantenzufallsgeneratoren 1400 ganz oder zumindest in wesentlichen Teilen im Pad-Rahmen 1503 reduziert daher die Zusatzkosten für deren Bereitstellung signifikant.

Insbesondere können bevorzugt zumindest die Photonenquelle 1120 und der Einzelphotonendetektor 1130 (Entropiequelle 1401) im Pad-Rahmen 1503 zwischen zwei Anschluss-Pads 1502 platziert werden. Weiterhin können ein ADC 1403, ein Spannungswandler 1408 zur Energieversorgung der Entropiequelle 1403, ein Pulsverlängerungsschaltung 1406 und/oder Analogteile eines beschriebenen Quantenzufallsgenerators 1400 (z. B. ein Verstärker) ebenfalls im Pad-Rahmen 1503 zwischen zwei Anschluss-Pads 1502 platziert werden.

### Bezugszeichenliste (auszugsweise)

- 1010: Trägersubstrat
- 1022: erstes Gebiet (z. B. NBL)
- 1032: zweites Gebiet (z. B. PBL)
- 1040: epitaktische Schicht
- 1050: erster p-n-Übergang (z. B. oberer p-n-Übergang einer Doppelstruktur)
- 1052: zweiter p-n-Übergang (z. B. unterer p-n-Übergang einer Doppelstruktur)
- 1110: Substrat
- 1120: Photonenquelle (z. B. Einzelphotonenquelle, SPS)
- 1122: Kathode (n⁺, Photonenquelle)
- 1124: Anode (p⁺, Photonenquelle)
- 1128: Photonen
- 1130: Einzelphotonendetektor (z. B. Einzelphotonen-Lawinendiode, SPAD)
- 1132: Kathode (n⁺, Einzelphotonendetektor)
- 1134: Anode (p⁺, Einzelphotonendetektor)
- 1150: lichtblockierende Schicht (engl. "light blocking layer")
- 1152: Mittel zur elektronischen Erfassung
- 1154: Mittel zur elektronischen Nachbearbeitung
- 1200: iQRNG
- 1400: Quantenzufallsgenerator (z. B auf einem iQRNG basierend)
- 1401: Entropiequelle (z. B. iQRNG)
- 1403: Analog-zu-Digital-Wandler (engl. "Analog-to-Digital Converter, ADC")
- 1404.3: Zeit-zu-Pseudozufallszahl-Wandler (engl. "Time-to-Pseudo-Random-Number Converter, TPRC")
- 1404.4: Entropieextraktion
- 1404.5: Watchdog
- 1404.6: Pseudo-Zufallszahlengenerator (engl. "Pseudo-Random-Number-Generator, PRNG", z. B. linear rückgekoppeltes Schieberegister)
- 1404.7: Signal-Multiplexer
- 1404.8: Finite-State-Machine (FSM)
- 1404.9: flüchtiger Speicher (RAM) / FIFO-Speicher (First In - First Out)
- 1404.10: Finish-Flag
- 1405: Spannungssignal (Entropiequelle)
- 1406: Pulsverlängerungsschaltung (z. B. Monoflop, MF)
- 1407: Ausgangssignal (ADC)
- 1408: Spannungswandler
- 1410: Ausgangssignal (TPRC)
- 1411: Ausgang (Entropieextraktion)
- 1412: Seed-Wert S
- 1413: Spannungsmonitor
- 1414: digitale Ein-Ausgabe-Signalleitung(en)
- 1415: einsynchronisiertes Spannungssignal (z. B. Puls mit einer Mindestlänge)
- 1416: Selektionssignal
- 1417: Pseudozufallssignalleitung
- 1418: Quantenzufallsdatenwörter
- 1419: interner Datenbus
- 1420: Interrupt-Signal
- 1421: Spannungswandlerleitung
- 1430: Korrelationssignal (optional)

- 1500: elektronische Schaltung (engl. "Integrated Circuit, IC")
- 1501: Halbleiter-Die
- 1502: Anschluss-Pads (Anschlussflächen)
- 1503: Pad-Rahmen
- 1504: Verdrahtungsbereich
- 1505: innerer Bereich

- NBL: tiefliegende n-Schicht (engl. "n-type buried layer")
- PBL: tiefliegende p-Schicht (engl. "p-type buried layer")
- H(V)PW: Hochvolt-p-Wanne (engl. "high-voltage p-type well")
- H(V)NW: Hochvolt-n-Wanne (engl. "high-voltage n-type well")
- PW: p-Wanne (engl. "p-type well")
- PBODY: p-dotierter Bereich (engl. "p-type body")
- NEPI: schwach n-dotiertes bzw. (annähernd) intrinsisches epitaktisches Gebiet
- MET1, MET2: Metallisierung
- CONT: Kontakt
- STI: Isolationsgebiet (engl. "shallow trench isolation")
- poly: Polysilizium-Schicht
- P⁺: p⁺-Gebiet
- N⁺: n⁺-Gebiet

- VDD: positive Versorgungsspannungsleitung
- GND: Bezugspotentialleitung
- V_{ENT1}: erste Versorgungsspannungsleitung (Entropiequelle)
- V_{ENT2}: zweite Versorgungsspannungsleitung (Entropiequelle)
- V_{REF}: Referenzspannungsleitung (ADC)
- RN: Zufallszahl (z. B. 1-bit Zufallszahl)
- PRN: Pseudozufallszahl

- S: Oberfläche (Trägersubstrat, z. B. eines BCD-Substrats)
- O: Oberfläche (Substrat, z. B. ein BCD-Substrat)
- R: radiale Symmetrieachse

## Patentansprüche

1. Komponente einer ersten integrierten Schaltung, die zum Austausch eines Lizenztokens, der zur Ausführung eines lizenzierten Softwareprogramms erforderlich ist, mit einer Komponenten einer zweiten integrierten Schaltung eingerichtet ist, wobei die erste integrierte Schaltungskomponente Folgendes umfasst:
ein Verarbeitungsmittel zur vollständigen Verarbeitung von Informationen innerhalb der ersten integrierten Schaltungskomponente;
ein erstes Speichermittel zum Speichern eines eindeutigen Schlüsselpaars, eines digitalen Authentifizierungszertifikats, eines öffentlichen Schlüssels eines Herstellers der ersten integrierten Schaltungskomponente und des Lizenztokens innerhalb der ersten integrierten Schaltungskomponente, wobei das erste Speichermittel mit der Verarbeitungseinrichtung gekoppelt ist;
ein zweites Speichermittel zum Speichern der vom Verarbeitungsmittel verarbeiteten Informationen, wobei das zweite Speichermittel mit dem Verarbeitungsmittel gekoppelt ist;
ein Erzeugungsmittel zum Erzeugen des eindeutigen Schlüsselpaares, das sich in der ersten integrierten Schaltungskomponente befindet, wobei das Erzeugungsmittel mit dem Verarbeitungsmittel gekoppelt ist und einen Quantenzufallsgenerator umfasst; und
ein Schnittstellenmittel zum Bereitstellen einer Kommunikationsverbindung zwischen der ersten integrierten Schaltungskomponente und der der zweiten integrierten Schaltungskomponente zum Austauschen des Lizenztokens, wobei das Schnittstellenmittel mit dem Verarbeitungsmittel gekoppelt ist,
**dadurch gekennzeichnet, dass**
der Quantenzufallsgenerator eine Entropiequelle umfasst,
die Entropiequelle monolithisch in einem Halbleitersubstrat mit einer Oberfläche ausgeführt ist,
die Entropiequelle eine Photonenquelle umfasst, die dazu eingerichtet ist, bei Bestromung Photonen auszusenden,
die Entropiequelle einen Einzelphotonendetektor umfasst, der dazu eingerichtet ist, die Photonen der Photonenquelle zu detektieren und ein Entropiequellenausgangssignal zu erzeugen,
die Photonenquelle zwischen der Oberfläche des Halbleitersubstrats und dem Einzelphotonendetektor angeordnet ist oder der Einzelphotonendetektor zwischen der Oberfläche des Halbleitersubstrats und der Photonenquelle angeordnet ist,
die Photonenquelle und der Einzelphotonendetektor der monolithischen Entropiequelle vertikal übereinander angeordnet sind, und
der Quantenzufallsgenerator Mittel zur Erzeugung einer oder mehrerer Quantenzufallszahlen in Abhängigkeit von dem Entropiequellenausgangssignal aufweist.

2. Komponente der ersten integrierten Schaltung nach Anspruch 1, wobei das erste Speichermittel einen nicht flüchtigen Speicher beinhalten und/oder das zweite Speichermittel einen Direktzugriffsspeicher umfasst.

3. Komponente der ersten integrierten Schaltung nach Anspruch 1 oder 2, wobei das digitale Authentifizierungszertifikat der öffentliche Schlüssel des Herstellers der ersten integrierten Schaltungskomponente ist, der durch einen privaten Schlüssel des Herstellers verschlüsselt ist.

4. Komponente der ersten integrierten Schaltung nach einem der vorhergehenden Ansprüche, wobei das erste Speichermittel einen kryptographischen Algorithmus enthält.

5. Komponente der ersten integrierten Schaltung nach einem der vorhergehenden Ansprüche, wobei das Schnittstellenmittel eine Busschnittstelle beinhalten, die es der ersten integrierten Schaltungskomponente ermöglicht, das von der zweiten integrierten Schaltungskomponente empfangene Lizenztoken intern zu entschlüsseln und zu speichern, und das an die zweiten integrierte Schaltungskomponente zu übertragende Lizenztoken intern zu verschlüsseln und zu übertragen.

6. Komponente der ersten integrierten Schaltung nach Anspruch 1, wobei das Lizenztoken mit der zweiten integrierten Schaltungskomponente ausgetauscht wird, die mit der ersten integrierten Schaltungskomponente baugleich ist.

7. Komponente einer erste integrierten Schaltung, die zum Austausch eines Lizenztokens, der zum Ausführen eines lizenzierten Softwareprogramms erforderlich ist, mit einer Komponente einer zweiten integrierten Schaltung, die von der ersten integrierten Schaltungskomponente entfernt ist, eingerichtet ist, wobei die erste integrierte Schaltungskomponente umfasst:
einen nichtflüchtigen Speicher zum Speichern eines eindeutigen Schlüsselpaares, eines Gerätezertifikats eines Herstellers des integrierten Schaltkreises, eines öffentlichen Schlüssels des genannten Herstellers und des Lizenztokens;
einen Direktzugriffsspeicher zur vorübergehenden Speicherung von Informationen;
eine mit dem nichtflüchtigen Speicher und dem Direktzugriffsspeicher verbundene Verarbeitungseinheit zur internen Verarbeitung von Informationen, die von der zweiten integrierten Schaltungskomponente übertragen werden, so dass das eindeutige Schlüsselpaar, das Gerätezertifikat und der öffentliche Schlüssel außerhalb der ersten integrierten Schaltungskomponente nicht zugänglich sind;
einen Quantenzufallsgenerator zum Erzeugen des eindeutigen Schlüsselpaars innerhalb der ersten integrierten Schaltungskomponente, wobei der Quantenzufallsgenerator mit der Verarbeitungseinheit verbunden ist; und
eine Schnittstelle, die es der integrierten Schaltungskomponente ermöglicht, das Lizenz-Token mit der zweiten integrierten Schaltkreiskomponente auszutauschen, wobei die Schnittstelle mit der Verarbeitungseinheit gekoppelt ist;
**dadurch gekennzeichnet, dass**
der Quantenzufallsgenerator eine Entropiequelle umfasst,
die Entropiequelle monolithisch in einem Halbleitersubstrat mit einer Oberfläche ausgeführt ist,
die Entropiequelle eine Photonenquelle umfasst, die dazu eingerichtet ist, bei Bestromung Photonen auszusenden,
die Entropiequelle einen Einzelphotonendetektor umfasst, der dazu eingerichtet ist, die Photonen der Photonenquelle zu detektieren und ein Entropiequellenausgangssignal zu erzeugen,
die Photonenquelle zwischen der Oberfläche des Halbleitersubstrats und dem Einzelphotonendetektor angeordnet ist oder der Einzelphotonendetektor zwischen der Oberfläche des Halbleitersubstrats und der Photonenquelle angeordnet ist,
die Photonenquelle und der Einzelphotonendetektor der monolithischen Entropiequelle vertikal übereinander angeordnet sind, und
der Quantenzufallsgenerator Mittel zur Erzeugung einer oder mehrerer Quantenzufallszahlen in Abhängigkeit von dem Entropiequellenausgangssignal aufweist.

8. Komponente der erste integrierten Schaltung nach Anspruch 7, wobei die Schnittstelle eine Kommunikationsverbindung zwischen der ersten integrierten Schaltungskomponente und der zweiten integrierten Schaltungskomponente bereitstellt, um die erste integrierte Schaltungskomponente in die Lage zu versetzen, Informationen, die an die erste integrierte Schaltungskomponente übertragen werden, zu entschlüsseln und zu speichern und Informationen, die an die zweite integrierte Schaltungskomponente übertragen werden, zu verschlüsseln und zu übertragen.

9. Komponente der erste integrierten Schaltung nach Anspruch 7 oder 8, wobei das Lizenztoken mit der Komponente der zweiten integrierten Schaltung ausgetauscht wird, die mit der Komponente der ersten integrierten Schaltung baugleich ist.

10. System zum Austausch eines Lizenztokens, der zum Ausführen eines lizenzierten Softwareprogramms erforderlich ist, mit einem entfernten System, wobei das System Folgendes umfasst:
einen Host-Prozessor zum Ausführen des Softwareprogramms;
ein Speichermittel zum Speichern des Softwareprogramms;
einen Bus zur Kopplung des Prozessors und des Speichermittels; und
ein Agentenmittel, das mit den Bus gekoppelt sind, zum internen Entschlüsseln von kryptografischen Informationen, die in das Agentenmittel eingegeben werden, und zum Verschlüsseln von kryptografischen Informationen, die von dem Agentenmittel ausgegeben werden, wobei das Agentenmittel Folgendes umfasst:
ein Verarbeitungsmittel zum Verarbeiten der eingegebenen und ausgegebenen kryptografischen Informationen vollständig innerhalb des Agentenmittels,
ein erstes Speichermittel zum Speichern eines eindeutigen Schlüsselpaares, eines Vorrichtungszertifikats eines Herstellers des Agentenmittels, eines öffentlichen Schlüssels des Herstellers, der zum Entschlüsseln der eingegebenen kryptografischen Informationen und zum Verschlüsseln der ausgegebenen kryptografischen Informationen verwendet wird, und des Lizenztokens innerhalb des Agentenmittels, wobei das erste Speichermittel mit dem Verarbeitungsmittel gekoppelt sind;
ein zweites Speichermittel zum vorübergehenden Speichern der eingegebenen und ausgegebenen kryptografischen Informationen, wobei das zweite Speichermittel mit dem Verarbeitungsmittel gekoppelt ist,
ein Erzeugungsmittel zum Erzeugen des eindeutigen Schlüsselpaars, auf das außerhalb des Agentenmittels nicht zugegriffen werden kann, wobei das Erzeugungsmittel mit den Verarbeitungsmittel gekoppelt ist und einen Quantenzufallsgenerator umfasst, und
ein Schnittstellenmittel zum Bereitstellen einer Kommunikationsverbindung zwischen dem System und dem entfernten System, wobei das Schnittstellenmittel mit dem Verarbeitungsmittel gekoppelt ist;
**dadurch gekennzeichnet, dass**
der Quantenzufallsgenerator eine Entropiequelle umfasst,
die Entropiequelle monolithisch in einem Halbleitersubstrat mit einer Oberfläche ausgeführt ist,
die Entropiequelle eine Photonenquelle umfasst, die dazu eingerichtet ist, bei Bestromung Photonen auszusenden,
die Entropiequelle einen Einzelphotonendetektor umfasst, der dazu eingerichtet ist, die Photonen der Photonenquelle zu detektieren und ein Entropiequellenausgangssignal zu erzeugen,
die Photonenquelle zwischen der Oberfläche des Halbleitersubstrats und dem Einzelphotonendetektor angeordnet ist oder der Einzelphotonendetektor zwischen der Oberfläche des Halbleitersubstrats und der Photonenquelle angeordnet ist,
die Photonenquelle und der Einzelphotonendetektor der monolithischen Entropiequelle vertikal übereinander angeordnet sind, und
der Quantenzufallsgenerator Mittel zur Erzeugung einer oder mehrerer Quantenzufallszahlen in Abhängigkeit von dem Entropiequellenausgangssignal aufweist.

11. System nach Anspruch 10, wobei das erste Speichermittel einen nicht flüchtigen Speicher beinhalten, um das eindeutige Schlüsselpaar auch dann zu behalten, wenn die Stromversorgung des nicht flüchtigen Speichers unterbrochen ist.

12. System nach Anspruch 10 oder 11, wobei das erste Speichermittel ferner einen kryptografischen Algorithmus speichern.

13. System, das ausgelegt ist, um ein Lizenztoken an ein entferntes System zu übermitteln und von diesem zu empfangen, wobei das System Folgendes umfasst:
ein Speicherelement;
einen Host-Prozessor;
einen Bus zum Koppeln des Host-Prozessors und des Speicherelements; und
einen Hardwareagenten, der mit dem Bus gekoppelt ist, zum internen Entschlüsseln von eingegebenen Informationen, die das von dem entfernten System verschlüsselte Lizenztoken beinhalten, und Verschlüsseln von ausgegebenen Informationen, die das Lizenztoken beinhalten, vor der Übertragung an das entfernte System, wobei der Hardwareagent Folgendes umfasst:
einen Prozessor zum Ausführen eines Verschlüsselungs- und Entschlüsselungsprogramms innerhalb des Hardwareagenten, um das Lizenztoken zu erhalten,
ein nicht flüchtiges Speicherelement zum Speichern eines eindeutig bezeichneten Schlüsselpaars, eines Authentifizierungsvorrichtungszertifikats und eines öffentlichen Schlüssels des Herstellers, die alle zum Entschlüsseln der eingegebenen Informationen und Verschlüsseln der ausgegebenen Informationen verwendet werden, wobei das nicht flüchtige Speicherelement mit dem Prozessor gekoppelt ist,
ein flüchtiges Speicherelement zum vorübergehenden Speichern der von dem Prozessor verarbeiteten eingegebenen und ausgegebenen Informationen,
einen Quantenzufallsgenerator zum Erzeugen des eindeutigen Schlüsselpaars, auf das außerhalb des Hardwareagenten nicht zugegriffen werden kann, und
eine Schnittstelle zum Ermöglichen einer Kommunikation zwischen dem System und dem entfernten System, wobei die Schnittstelle mit dem Prozessor gekoppelt ist;
**dadurch gekennzeichnet, dass**
der Quantenzufallsgenerator eine Entropiequelle umfasst,
die Entropiequelle monolithisch in einem Halbleitersubstrat mit einer Oberfläche ausgeführt ist,
die Entropiequelle eine Photonenquelle umfasst, die dazu eingerichtet ist, bei Bestromung Photonen auszusenden,
die Entropiequelle einen Einzelphotonendetektor umfasst, der dazu eingerichtet ist, die Photonen der Photonenquelle zu detektieren und ein Entropiequellenausgangssignal zu erzeugen,
die Photonenquelle zwischen der Oberfläche des Halbleitersubstrats und dem Einzelphotonendetektor angeordnet ist oder der Einzelphotonendetektor zwischen der Oberfläche des Halbleitersubstrats und der Photonenquelle angeordnet ist,
die Photonenquelle und der Einzelphotonendetektor der monolithischen Entropiequelle vertikal übereinander angeordnet sind, und
der Quantenzufallsgenerator Mittel zur Erzeugung einer oder mehrerer Quantenzufallszahlen in Abhängigkeit von dem Entropiequellenausgangssignal aufweist.

14. System nach Anspruch 13, wobei das nicht flüchtige Speicherelement ferner mindestens einen kryptografischen Algorithmus speichert.
